# EUROPEAN PATENT APPLICATION

(11) **EP 4 817 804 A1**
(43) Date of publication of application: **07.10.2026**
(21) Application number: 24903823.3
(22) Date of filing: 27.03.2024
(51) Int. Cl.: B25J 9/08, B25J 5/00, B25J 9/00, B25J 9/16, B25J 11/00, B25J 19/00, B62D 57/028, H02J 50/00, G05D 1/661

(54) **ROBOT SYSTEM AND CONTROL METHOD THEREOF**

(30) Priority: 12.12.2023 KR 20230179786
(71) Applicant: LG Electronics Inc., Yeongdeungpo-gu Seoul 07336 (KR)
(72) Inventor: PARK, Jeongseop, Seoul 08592 (KR); PARK, Sulki, Seoul 08592 (KR); HONG, Eulpyo, Seoul 08592 (KR); WOO, Jongjin, Seoul 08592 (KR); SUNG, Kijung, Seoul 08592 (KR); JEON, Hyungjin, Seoul 08592 (KR); JIN, Yeonsub, Seoul 08592 (KR); CHUNG, Jinho, Seoul 08592 (KR); CHOI, Dongkyu, Seoul 08592 (KR); KIM, Geonhee, Seoul 08592 (KR)
(74) Representative: Vossius & Partner Patentanwälte Rechtsanwälte mbB
(86) International application number: PCT/KR2024/003853
(87) International publication number: WO 2025/127250

(57) **Abstract**

The present invention relates to a robot system and a control method thereof, and may include a robot, a functional module detachably coupled to the robot and electrically connected to the robot when coupled to the robot, and a station with which the functional module is docked, and the station may include a station body and a station terminal disposed on the station body and electrically connected to a station-corresponding terminal of the functional module.

## Description

### [Technical Field]

The present invention relates to a robot system and a control method thereof.

### [Background Art]

Recently, with the development of robot technology, the use of robots has been increasing not only in industrial fields but also in homes.

Home robots include a robot that performs chores in a person's house, such as helping with housework such as cleaning or controlling home appliances, a robot that acts as a user's secretary or provides education to a user using artificial intelligence (AI), or a robot that replaces companion animals.

Meanwhile, robots include not only a robot that performs functions while being fixed at a specific location, but also a movable mobile robot. In particular, in the case of a robot used at home, a mobile robot that replaces a user or moves around the house following a user is mainly used.

Among mobile robots, a two-wheeled robot having two wheels has an advantage of being easy to store because it occupies a small ground area, and has an advantage of being easy to use in a relatively narrow home because a turning radius is small when a direction of the robot is changed.

Home robots, like conventional mobile robots dedicated to cleaning, are driven using a built-in battery, and thus, periodic charging of the battery is required. To this end, a charging station similar to a charging station of a conventional cleaning robot may be provided in a home robot.

Korean Patent Registration Publication No. 10-0575703, which is a prior art document, discloses a system and method for returning a robot cleaner to a charging stand.

The system for returning to a charging stand disclosed in the prior art document is configured such that a robot cleaner is guided to a charging stand detection area by a supporter sensor, and after the robot cleaner is guided to a specific location, the robot cleaner recognizes the charging stand three-dimensionally using the supporter sensor and a charging stand sensor to dock with the charging stand.

However, the system for returning to a charging stand disclosed in the prior art document only discloses guiding docking of a robot having a cleaning function and charging the robot by the charging stand, but does not disclose a function of emptying dust inside a dust bin of the robot together with charging the robot.

In addition, the system for returning to a charging stand disclosed in the prior art document has a problem in that since the robot needs to enter the charging stand by itself and then be docked, there are many operations that the robot needs to take, resulting in unnecessary battery consumption.

### [Summary of Invention]

### [Technical Problem]

Embodiments of the present invention provide a robot system and a control method thereof that are configured to not only charge a robot and/or a functional module but also empty a dust bin of the functional module having a cleaning function, in order to improve the conventional problems as described above.

Another object of the present invention is to provide a robot system and a control method thereof that may allow the robot to stably travel to a seating portion during a process in which the functional module is docked with a station, by rotating an inclined portion of the station to the same height as the seating portion.

Still another object of the present invention is to provide a robot system and a control method thereof that may eliminate a need for the robot to change a direction by itself during a process in which the functional module is docked with the station, by rotatably arranging a rotating portion on which the robot and/or the functional module is seated.

Still another object of the present invention is to provide a robot system and a control method thereof that may enable docking between the functional module and the station without the robot traveling by itself, by providing a sliding portion that is slidably moved while the robot and/or the functional module is seated thereon.

Still another object of the present invention is to provide a robot system and a control method thereof that may move the robot close to the station without consuming a battery of the robot, by providing a transfer portion that is slidably moved while an arm of the robot is mounted thereon.

### [Technical Solution]

To achieve the above objects, a robot system according to the present invention may include a robot; a functional module detachably coupled to the robot, and electrically connected to the robot when coupled to the robot; and a station with which the functional module is docked, and the station may include a station body; and a station terminal disposed on the station body and electrically connected to a station-corresponding terminal of the functional module.

The robot may be provided with a battery, and when the functional module is electrically connected to the station in a state of being coupled with the robot, the battery may receive power from the station through the functional module.

The robot may be provided with a battery, and when the robot is coupled to the functional module in a state where the functional module and the station are electrically connected, the battery may receive power from the station through the functional module.

The station may include a suction portion disposed on the station body and sucking dust from a dust bin of the functional module; a dust collection unit collecting the dust sucked through the suction portion; and a dust collection motor providing a suction force to the suction portion.

The station may include a seating portion connected to the station body, on which the robot is seated; and an inclined portion rotatably coupled to the seating portion so that an inclination angle with respect to the seating portion is adjusted.

A pair of the seating portions may be arranged to be spaced apart on the station body, and in a state where the functional module is docked with the station, at least a portion of the functional module may be disposed between the pair of seating portions.

The station may further include a rotating portion on which at least any one of the robot and the functional module is seated, and relatively rotatably coupled to the station body.

The station body may include an inclined member disposed to be inclined with respect to the rotating portion.

The station may further include a sliding portion on which at least any one of the robot and the functional module is seated, and slidably coupled to the station body.

The station body may include a sidewall, at least a portion of which is disposed on both sides of the sliding portion; and a guide rail disposed on the sidewall and guiding sliding movement of the sliding portion.

The sliding portion may include a seating member on which at least any one of the robot and the functional module is seated; and an inclined member disposed to be inclined with respect to the seating member.

The robot may include a robot body detachably coupled with the functional module; and an arm having both ends respectively connected to both side surfaces of the robot body, and the station may further include a transfer portion moving the arm in a direction moving away from the station body or a direction approaching the station body.

The transfer portion may include a support member slidably coupled to the station body and supporting at least a portion of the arm; and a protruding member protruding from the support member and preventing departure of the arm.

The robot may include a robot body provided with a motor and a battery; and a module coupling portion disposed on a lower portion of the robot body and latch-coupled with a coupling portion of the functional module.

The module coupling portion may include a drive motor disposed inside the robot body and generating rotational power; a coupling hook linearly moving and latch-coupled to a coupling hole of the coupling portion; a rotating gear transferring the rotational power generated by the drive motor to the coupling hook; and a guide member guiding the linear movement of the coupling hook.

In order to solve the above problems, a robot system according to the present invention may include a robot; a functional module detachably coupled to the robot; and a station with which the functional module is docked, and the station may include a seating module on which the robot is seated in a process in which the robot is docked with the station or leaves from the station; and a drive unit selectively driving the seating module depending on whether the robot is seated on the seating module.

In order to solve the above problems, a control method of a robot system according to the present invention may include an approach step in which a robot moves toward a station when a signal is received from the station; and a docking step in which the robot is docked with the station after a drive unit of the station is driven.

The robot may include a robot body provided with a motor and a battery; leg portions respectively disposed on left and right surfaces of the robot body; a wheel rotatably coupled to the leg portion; and a suspension motor accommodated in the robot body and respectively connected to the left and right leg portions to provide driving force to the leg portions, and the docking step may include a backward movement standby step in which the robot is disposed at an entrance of an inclined portion of the station so as to be able to climb the inclined portion while moving backward; a seating step in which the robot moves backward and is seated on the inclined portion; a first driving step in which the suspension motor is driven so that a distance between the wheel and the robot body decreases while rotating the inclined portion upward through driving of the drive unit; and a communication step in which a dust bin of the functional module and a suction portion of the station communicate with each other after the robot moves backward.

The control method may further include a dust collection step in which dust inside the dust bin is sucked through driving of a dust collection motor; a moving step in which the robot moves to the inclined portion in a state of being coupled with the functional module; and a second driving step in which the suspension motor is driven so that the distance between the wheel and the robot body increases while rotating the inclined portion downward through driving of the drive unit.

The docking step may include a forward moving step in which the robot moves to a rotating portion of the station; a coupling step in which the robot is coupled with the functional module seated on the rotating portion; a rotating step in which the rotating portion rotates through driving of the drive unit; and a departure step in which the robot moves forward in a state of being coupled with the functional module to leave from the station.

The docking step may include a forward moving step in which the robot moves to a rotating portion of the station in a state of being coupled with the functional module; a rotating step in which the rotating portion rotates through driving of the drive unit; a communication step in which a dust bin of the functional module and a suction portion of the station communicate with each other after the robot moves backward; and a dust collection step in which a dust collection motor is driven to suck dust inside the dust bin.

The docking step may include a seating step in which after a sliding portion of the station is slidably moved in a direction moving away from the station body through driving of the drive unit, the robot is seated on the sliding portion in a state of being coupled with the functional module; a communication step in which after the sliding portion is slidably moved in a direction approaching the station body through driving of the drive unit, a dust bin of the functional module communicates with a suction portion of the station; and a dust collection step in which dust inside the dust bin is sucked through driving of a dust collection motor.

The docking step may include a seating step in which after a sliding portion of the station is slidably moved in a direction moving away from the station body through driving of the drive unit, the robot is seated on the sliding portion in a state of being coupled with a functional module; a separation step in which the robot is separated from the functional module; and a functional module returning step in which the sliding portion on which the functional module is seated is slidably moved in a direction approaching the station body through driving of the drive unit.

The docking step may include a forward moving step in which a transfer portion of the station is slidably moved in a direction moving away from the station body through driving of the drive unit; and a mounting step in which a robot body of the robot is moved downward to mount an arm of the robot on the transfer portion; a backward moving step in which after a wheel of the robot is moved upward, the transfer portion of the station is slidably moved in a direction approaching the station body through driving of the drive unit; an unmounting step in which after the wheel is moved downward, the robot body is moved upward to release the mounting between the arm of the robot and the transfer portion; and a coupling step in which the robot is coupled with the functional module.

In order to solve the above problems, a robot system according to the present invention may include a robot; a functional module coupled to the robot and moved together; and a station with which the functional module is docked, and the station may include a station body; a base connected to the station body, on which the robot climbs and is seated; and a station terminal disposed on the station body and electrically connected to a station-corresponding terminal of the functional module.

In order to solve the above problems, a robot system according to the present invention may include a robot; a functional module coupled to the robot and moved together; and a station with which the functional module is docked, and the station may include a station body; a base connected to the station body, on which the robot climbs and is seated; a suction portion disposed on the station body and sucking dust from a dust bin of the functional module; a dust collection unit collecting the dust sucked through the suction portion; and a dust collection motor providing a suction force to the suction portion.

The base may include a pair of inclined portions disposed at an entrance where the robot climbs, and having an upward inclination toward a direction in which the robot enters.

The base may further include a pair of seating portions respectively connected to an upper end portion of the inclined portion, arranged horizontally, and on which the robot is seated.

The inclined portion may be rotatably coupled to the seating portion.

In a state where the functional module is docked with the station, at least a portion of the functional module may be disposed between the pair of seating portions.

The functional module may include a module body having the dust bin therein; and a suction nozzle connected to the module body and sucking air containing dust.

In a state where the functional module is coupled to the robot, the module body may be disposed between left and right wheels of the robot.

The base may include a pair of inclined portions disposed at an entrance where the robot climbs, and having an upward inclination toward a direction in which the robot enters; and a pair of seating portions respectively connected to an upper end portion of the inclined portion, arranged horizontally, and on which the robot is seated, and in a state where the functional module is coupled to the robot, at least a portion of the module body may be disposed between the pair of seating portions.

The robot may include a robot body provided with a motor and a battery; and a module coupling portion disposed on a lower portion of the robot body and latch-coupled with a coupling portion of the functional module.

The module coupling portion may include a drive motor disposed inside the robot body and generating rotational power; a coupling hook linearly moving and latch-coupled to a coupling hole of the coupling portion; a rotating gear transferring the rotational power generated by the drive motor to the coupling hook; and a guide member guiding the linear movement of the coupling hook.

The robot may include a robot body provided with a motor and a battery; and a robot terminal disposed on the robot body and electrically connected to a robot-corresponding terminal of the functional module.

In order to solve the above problems, a control method of a robot system according to the present invention is a control method of a robot system including a robot, a functional module detachably coupled to the robot, and a station with which the functional module is docked, the control method may include a separation step in which the robot is separated from the functional module; and a departure step in which the robot moves to leave the station.

The robot may include a robot body provided with a motor and a battery; leg portions respectively disposed on left and right surfaces of the robot body; a wheel rotatably coupled to the leg portion; and a suspension motor accommodated in the robot body and respectively connected to the left and right leg portions to provide driving force to the leg portions, and the separation step may include an uncoupling step in which a latch-coupling between a coupling hook disposed on a lower side of the robot body and a coupling portion disposed on an upper side of the functional module is released; and a robot body lifting step in which the leg portion moves the robot body upward through driving of the suspension motor.

The station may include an inclined portion disposed at an entrance where the robot climbs, and having an upward inclination toward a direction in which the robot enters; and a seating portion connected to an upper end portion of the inclined portion, arranged horizontally, and on which the robot is seated, and in the departure step, the robot disposed on the seating portion may move to descend along the inclined portion.

In order to solve the above problems, a control method of a robot system according to the present invention is a control method of a robot system including a robot, a functional module electrically couplable to the robot, and a station with which the functional module is docked, the control method may include a climbing step in which the robot climbs onto a seating portion of the station; and a coupling step in which a robot terminal of the robot and a robot-corresponding terminal of the functional module are electrically coupled to each other so that power is supplied to the robot.

The robot may include a robot body provided with the robot terminal; leg portions respectively disposed on left and right surfaces of the robot body; and a wheel rotatably coupled to the leg portion, and the climbing step may include an approach step in which the robot moves toward the station when a signal regarding charging of the robot is received from the station; a backward movement standby step in which the robot is disposed at an entrance of an inclined portion of the station so as to be able to climb the inclined portion while moving backward; and a seating step in which the robot moves backward, passes through the inclined portion, and is seated on the seating portion.

The robot may include a robot body provided with the robot terminal; leg portions respectively disposed on left and right surfaces of the robot body; a wheel rotatably coupled to the leg portion; and a suspension motor accommodated in the robot body and respectively connected to the left and right leg portions to provide driving force to the leg portions, and the coupling step may include a robot body lowering step in which the robot body is lowered through driving of the suspension motor so that the robot terminal and the robot-corresponding terminal are brought into contact and coupled with each other; and a robot body fixing step in which a coupling hook disposed on a lower side of the robot body and a coupling portion disposed on an upper side of the functional module are latch-coupled to each other.

In order to solve the above problems, a control method of a robot system according to the present invention is a control method of a robot system including a robot, a functional module coupled to the robot and moved together, and a station with which the functional module is docked, the control method may include an inclined portion raising step in which an inclined portion of the station is rotated upward; a moving step in which the robot disposed on a seating portion of the station moves to the inclined portion in a state of being coupled with the functional module; a driving step in which a suspension motor of the robot is driven so that a distance between a wheel of the robot and a robot body increases while rotating the inclined portion downward.

In the driving step, a height of the robot body may be maintained constant while the inclined portion rotates downward.

In order to solve the above problems, a control method of a robot system according to the present invention is a control method of a robot system including a robot, a functional module coupled to the robot and moved together, and a station capable of docking with the functional module, the control method may include a docking step in which the robot climbs the station in a state of being coupled with the functional module, so that the functional module is docked with the station; and a dust collection step in which the station sucks dust inside a dust bin of the functional module.

The robot may include a robot body provided with a motor and a battery; leg portions respectively disposed on left and right surfaces of the robot body; a wheel rotatably coupled to the leg portion; and a suspension motor accommodated in the robot body and respectively connected to the left and right leg portions to provide driving force to the leg portions, and the docking step may include an approach step in which the robot moves toward the station when a signal is received from the station; a backward movement standby step in which the robot is disposed at an entrance of an inclined portion of the station so as to be able to climb the inclined portion while moving backward; a seating step in which the robot moves backward and is seated on the inclined portion; a first driving step in which the suspension motor is driven so that a distance between the wheel and the robot body decreases while rotating the inclined portion upward; and a communication step in which the dust bin of the functional module and a suction portion of the station communicate with each other after the robot moves backward.

In the first driving step, a height of the robot body may be maintained constant while the inclined portion rotates upward.

The control method of the robot system according to the present invention may further include, after the dust collection step, a moving step in which the robot moves to the inclined portion in a state of being coupled with the functional module; and a second driving step in which the suspension motor is driven so that the distance between the wheel and the robot body increases while rotating the inclined portion downward.

In order to solve the above problems, a control method of a robot system according to the present invention is a control method of a robot system including a robot, a functional module coupled to the robot and moved together, and a station capable of docking with the functional module, the control method may include a docking step in which the robot climbs the station in a state of being coupled with the functional module, so that the functional module is docked with the station; and an inclined portion lowering step in which an inclined portion of the station is rotated downward.

The robot may include a robot body provided with a motor and a battery; leg portions respectively disposed on left and right surfaces of the robot body; a wheel rotatably coupled to the leg portion; and a suspension motor accommodated in the robot body and respectively connected to the left and right leg portions to provide driving force to the leg portions, and the docking step may include an approach step in which the robot moves toward the station when a signal is received from the station; a backward movement standby step in which the robot is disposed at an entrance of an inclined portion of the station so as to be able to climb the inclined portion while moving backward; a seating step in which the robot moves backward and is seated on the inclined portion; a driving step in which the suspension motor is driven so that a distance between the wheel and the robot body decreases while rotating the inclined portion upward; and a connection step in which the robot moves backward so that a station-corresponding terminal of the functional module and a station terminal of the station are electrically connected.

In the driving step, a height of the robot body may be maintained constant while the inclined portion rotates upward.

### [Advantageous Effects]

As described above, according to a robot system and a control method thereof according to the present invention, there is an effect that it is possible to not only charge a robot and/or a functional module but also empty a dust bin of the functional module having a cleaning function.

In addition, according to the present invention, since an inclined portion of a station is rotated to the same height as a seating portion, there is an effect that the robot may stably travel to the seating portion during a process in which the functional module is docked with the station.

In addition, according to the present invention, since a rotating portion on which the robot and/or the functional module is seated is rotatably arranged, there is an effect that it is not necessary for the robot to change a direction by itself during a process in which the functional module is docked with the station.

In addition, according to the present invention, since a sliding portion that is slidably moved while the robot and/or the functional module is seated thereon is provided, there is an effect that docking between the functional module and the station may be performed without the robot traveling by itself.

In addition, according to the present invention, since a transfer portion that is slidably moved while an arm of the robot is mounted thereon is provided, there is an effect that the robot may be moved close to the station without consuming a battery of the robot.

### [Brief Description of the Drawings]

FIG. 1 is a perspective view for explaining a robot according to an embodiment of the present invention.
FIG. 2 is a front view of the robot according to the embodiment of the present invention.
FIG. 3 is a side view of the robot according to the embodiment of the present invention.
FIG. 4 is a rear view of the robot according to the embodiment of the present invention.
FIG. 5 is a plan view of the robot according to the embodiment of the present invention.
FIG. 6 is a bottom view of the robot according to the embodiment of the present invention.
FIG. 7 is a view for explaining a coupling relationship between a robot mask and a robot body in the robot according to the embodiment of the present invention.
FIG. 8 is a perspective view for explaining a functional module in the robot system according to the embodiment of the present invention.
FIG. 9 is an exploded view for explaining a coupling structure between a module coupling portion of the robot and a coupling portion of the functional module according to the embodiment of the present invention.
FIGS. 10A and 10B are views for explaining an operating principle of the module coupling portion of the robot according to the embodiment of the present invention.
FIG. 11 is a view for explaining a state in which the robot and the functional module are coupled in the robot system according to the embodiment of the present invention.
FIG. 12 is a perspective view of a station according to a first embodiment of the present invention.
FIGS. 13A and 13B are exploded views in which some components of the station according to the first embodiment of the present invention are exploded.
FIG. 14 is a perspective view of a station according to a second embodiment of the present invention.
FIG. 15 is an exploded view in which some components of the station according to the second embodiment of the present invention are exploded.
FIG. 16 is a perspective view of a station according to a third embodiment of the present invention.
FIG. 17 is an exploded view in which some components of the station according to the third embodiment of the present invention are exploded.
FIG. 18 is a perspective view of a station according to a fourth embodiment of the present invention.
FIG. 19 is an exploded view in which some components of the station according to the fourth embodiment of the present invention are exploded.
FIG. 20 is a block diagram for explaining a control configuration of the robot system according to the embodiment of the present invention.
FIG. 21 is a flowchart illustrating a control method for the robot system according to the embodiment of the present invention.
FIG. 22 is a flowchart illustrating a control method for the robot system according to Embodiment 1-1 of the present invention.
FIG. 23A is a view illustrating an operation corresponding to step S1111 of FIG. 22.
FIG. 23B is a view illustrating an operation corresponding to step S1112 of FIG. 22.
FIG. 23C is a view illustrating an operation corresponding to step S1120 of FIG. 22.
FIG. 24 is a flowchart illustrating a control method for the robot system according to Embodiment 1-2 of the present invention.
FIG. 25A is a view illustrating an operation corresponding to step S10 of FIG. 24.
FIG. 25B is a view illustrating an operation in which the robot moves backward after step S1211 of FIG. 24.
FIG. 25C is a view illustrating an operation corresponding to step S1212 of FIG. 24.
FIG. 25D is a view illustrating an operation corresponding to step S1220 of FIG. 24.
FIG. 26 is a flowchart illustrating a control method for the robot system according to Embodiment 1-3 of the present invention.
FIGS. 27A and 27B are views illustrating an operation corresponding to step S1310 of FIG. 26.
FIG. 27C is a view illustrating an operation corresponding to step S1320 of FIG. 26.
FIG. 27D is a view illustrating an operation corresponding to step S1330 of FIG. 26.
FIG. 28 is a flowchart illustrating a control method for the robot system according to Embodiment 1-4 of the present invention.
FIG. 29A is a view illustrating an operation corresponding to step S10 of FIG. 28.
FIG. 29B is a view illustrating an operation corresponding to steps S1411 and S1412 of FIG. 28.
FIG. 29C is a view illustrating an operation corresponding to step S1413 of FIG. 28.
FIG. 29D is a view illustrating an operation corresponding to steps S1414 and S1420 of FIG. 28.
FIG. 29E is a view illustrating an operation corresponding to step S1430 of FIG. 28.
FIG. 29F is a view illustrating an operation corresponding to step S1440 of FIG. 28.
FIG. 30 is a flowchart illustrating a control method for the robot system according to Embodiment 1-5 of the present invention.
FIG. 31A is a view illustrating an operation corresponding to step S10 of FIG. 30.
FIG. 31B is a view illustrating an operation corresponding to steps S1511 and S1512 of FIG. 30.
FIG. 31C is a view illustrating an operation corresponding to step S1513 of FIG. 30.
FIG. 31D is a view illustrating an operation corresponding to step S1514 of FIG. 30.
FIG. 31E is a view illustrating an operation corresponding to step S1520 of FIG. 30.
FIG. 32 is a flowchart illustrating a control method for the robot system according to Embodiment 2-1 of the present invention.
FIG. 33A is a view illustrating an operation corresponding to step S10 of FIG. 32.
FIG. 33B is a view illustrating an operation corresponding to steps S2110 and S2120 of FIG. 32.
FIG. 33C is a view illustrating an operation corresponding to step S2130 of FIG. 32.
FIG. 33D is a view illustrating an operation corresponding to step S2140 of FIG. 32.
FIG. 34 is a flowchart illustrating a control method for the robot system according to Embodiment 2-2 of the present invention.
FIG. 35A is a view illustrating an operation corresponding to step S10 of FIG. 34.
FIG. 35B is a view illustrating an operation corresponding to step S2210 of FIG. 34.
FIG. 35C is a view illustrating an operation corresponding to step S2220 of FIG. 34.
FIG. 35D is a view illustrating an operation corresponding to steps S2230 and S2240 of FIG. 34.
FIG. 35E is a view illustrating an operation corresponding to step S2250 of FIG. 34.
FIG. 36 is a flowchart illustrating a control method for the robot system according to Embodiment 3-1 of the present invention.

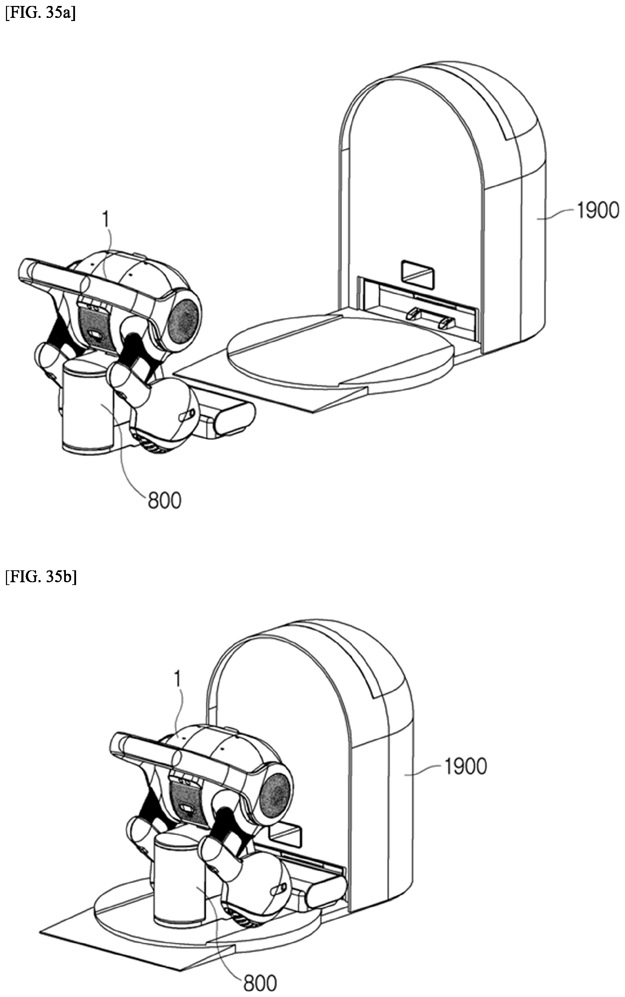

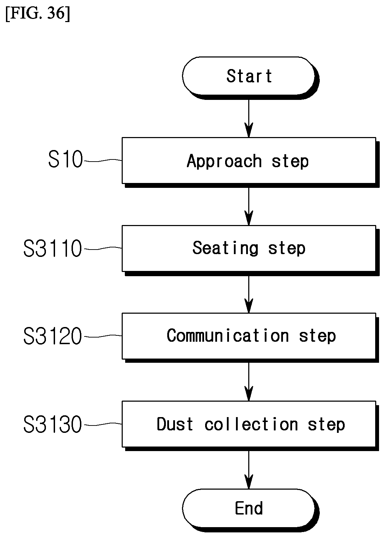

FIG. 35A is a view illustrating an operation corresponding to step S10 of FIG. 36. (Corrected from 37a based on typographical error in original text)
FIG. 35B is a view illustrating an operation corresponding to step S3110 of FIG. 36. (Corrected from 37b based on typographical error in original text)

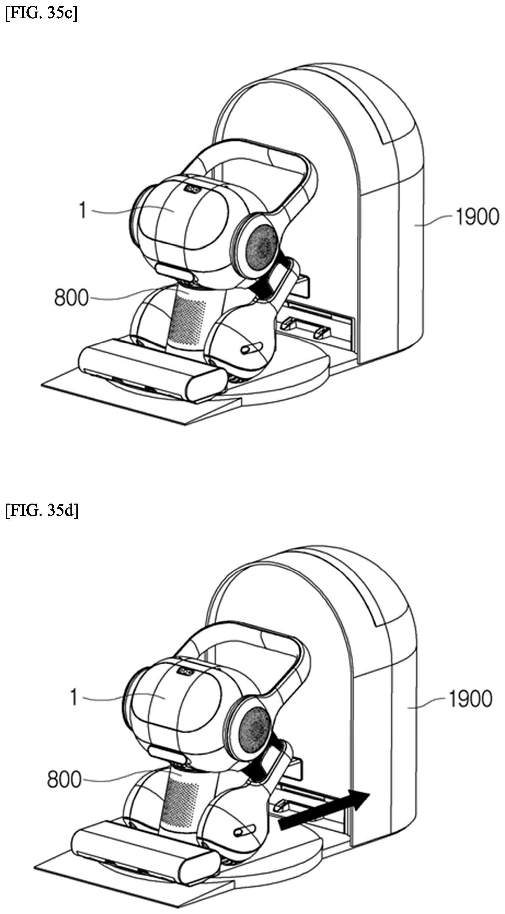

FIG. 35C is a view illustrating an operation corresponding to step S3130 of FIG. 36. (Corrected from 37c based on typographical error in original text)

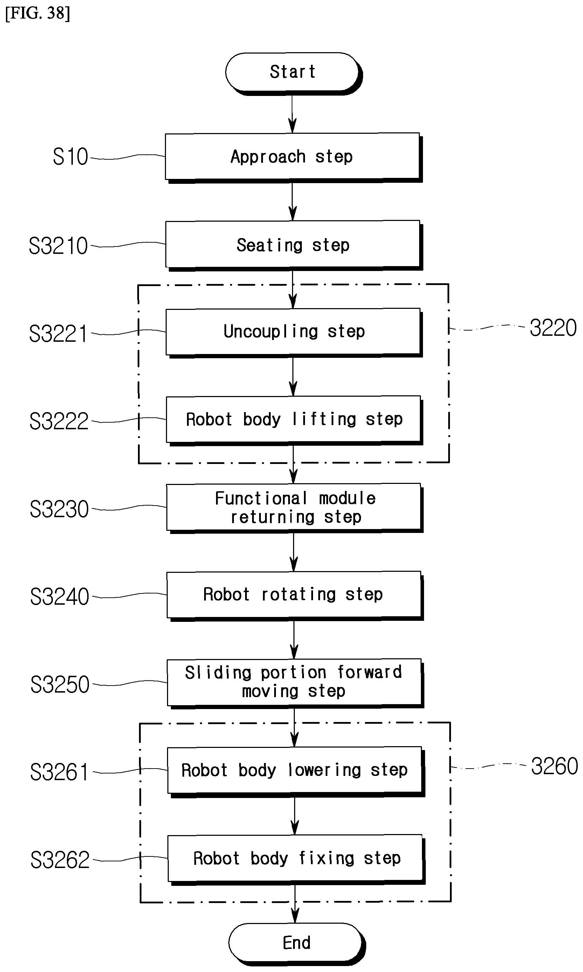

FIG. 38 is a flowchart illustrating a control method for the robot system according to Embodiment 3-2 of the present invention.

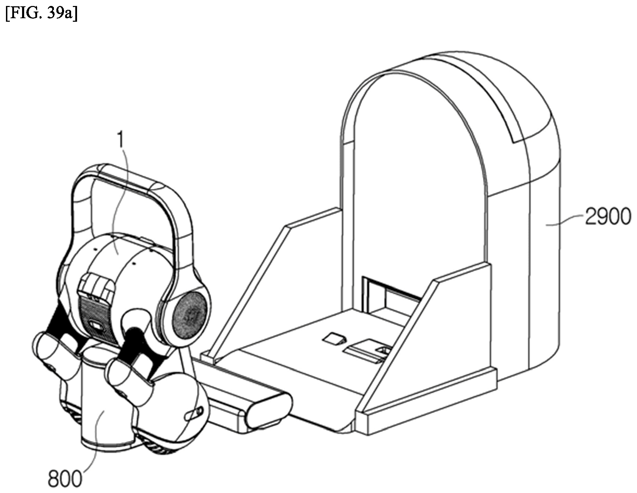

FIG. 39A is a view illustrating an operation corresponding to step S10 of FIG. 38.

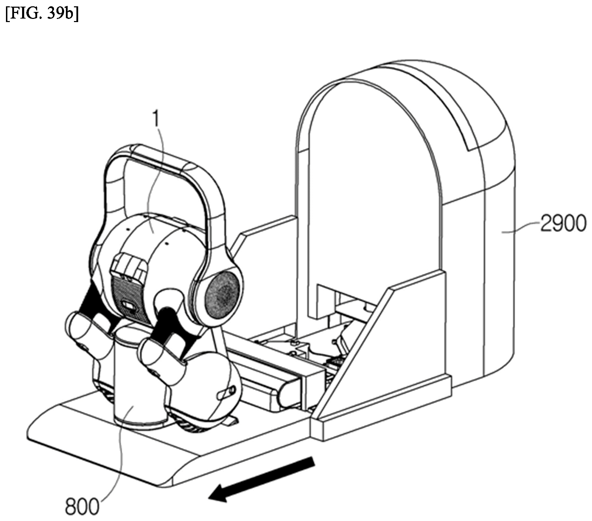

FIG. 39B is a view illustrating an operation corresponding to step S3210 of FIG. 38.

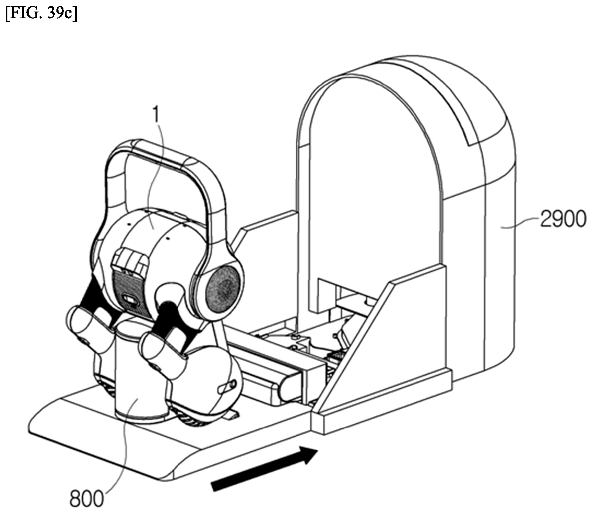

FIG. 39C is a view illustrating an operation corresponding to step S3220 of FIG. 38.

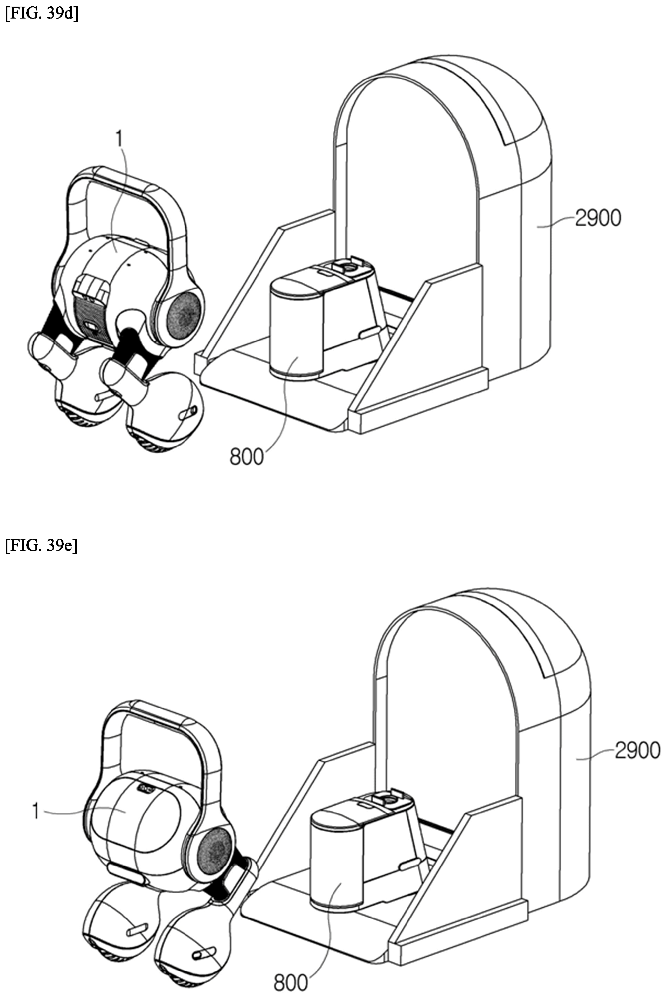

FIG. 39D is a view illustrating an operation corresponding to step S3230 of FIG. 38.
FIG. 39E is a view illustrating an operation corresponding to step S3240 of FIG. 38.

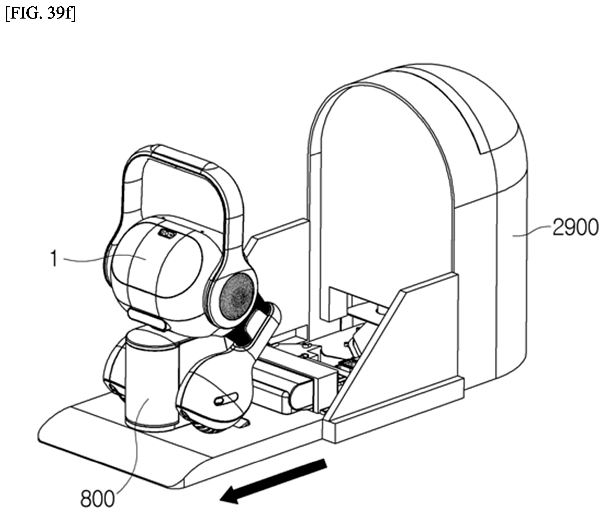

FIG. 39F is a view illustrating an operation corresponding to steps S3250 and S3260 of FIG. 38.

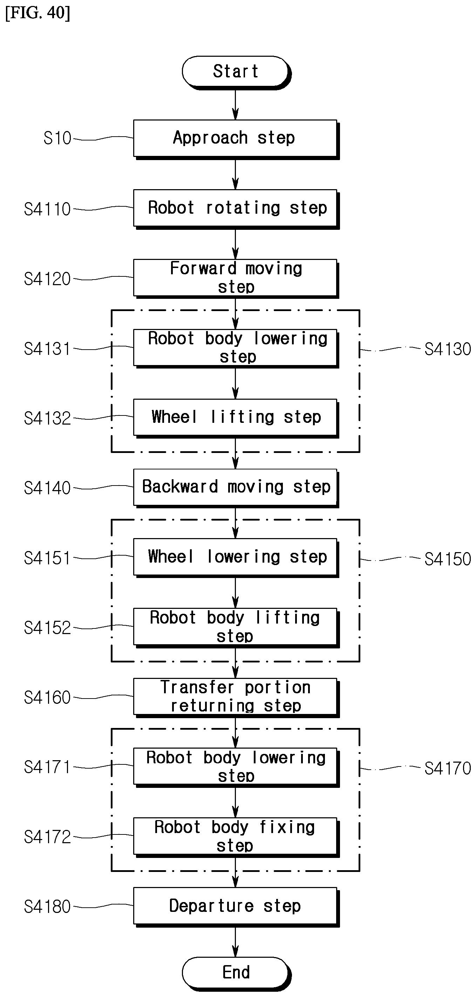

FIG. 40 is a flowchart illustrating a control method for the robot system according to a fourth embodiment of the present invention.

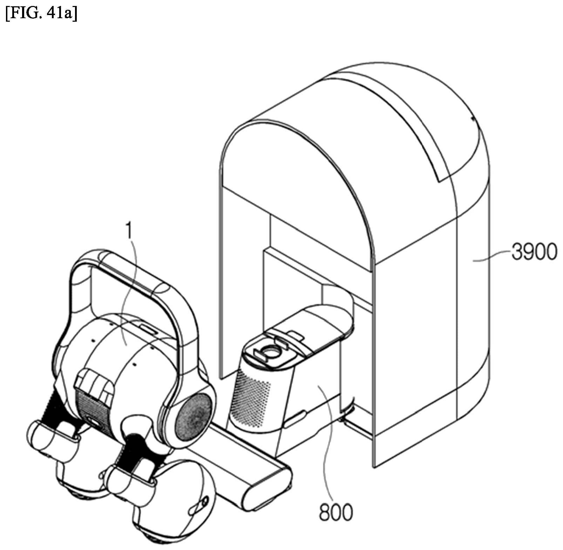

FIG. 41A is a view illustrating an operation corresponding to step S10 of FIG. 40.

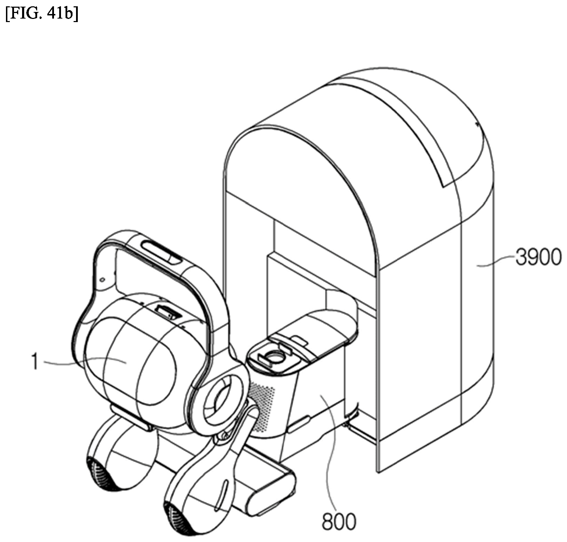

FIG. 41B is a view illustrating an operation corresponding to step S4110 of FIG. 40.

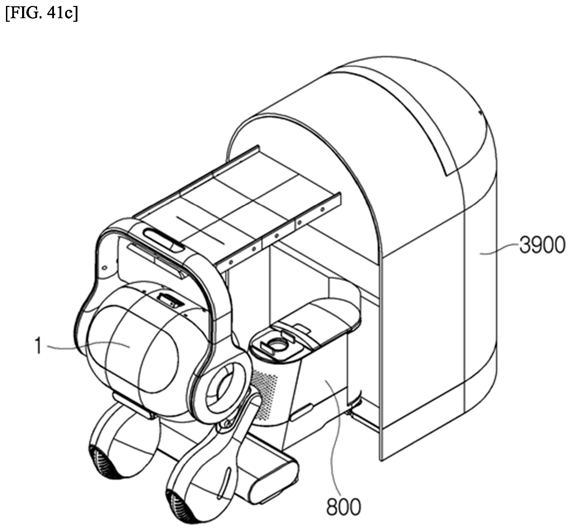

FIG. 41C is a view illustrating an operation corresponding to steps S4120 and S4131 of FIG. 40.

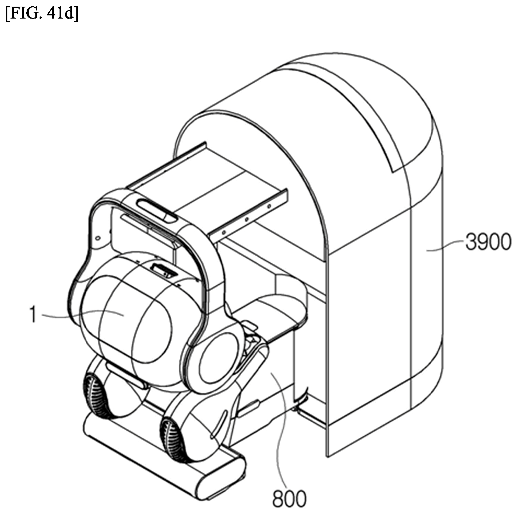

FIG. 41D is a view illustrating an operation corresponding to steps S4132 and S4140 of FIG. 40.

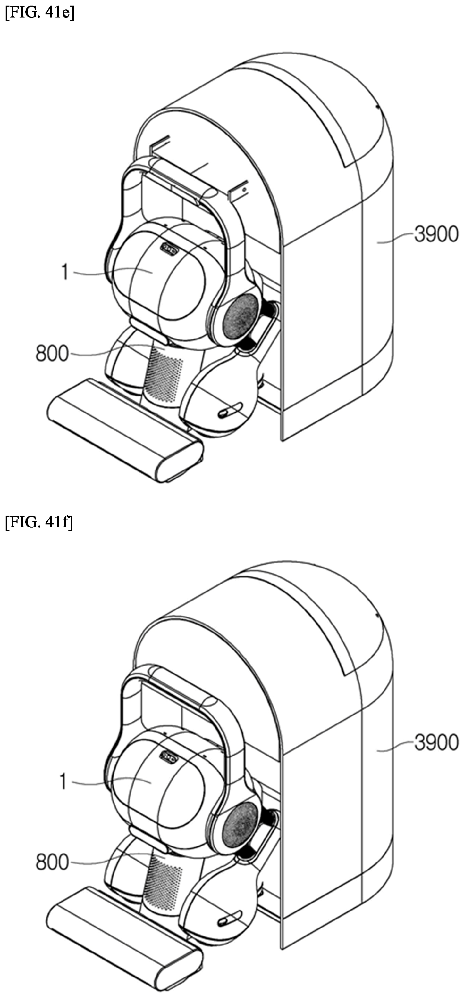

FIG. 41E is a view illustrating an operation corresponding to step S4151 of FIG. 40.
FIG. 41F is a view illustrating an operation corresponding to steps S4152, S4160, and S4170 of FIG. 40.

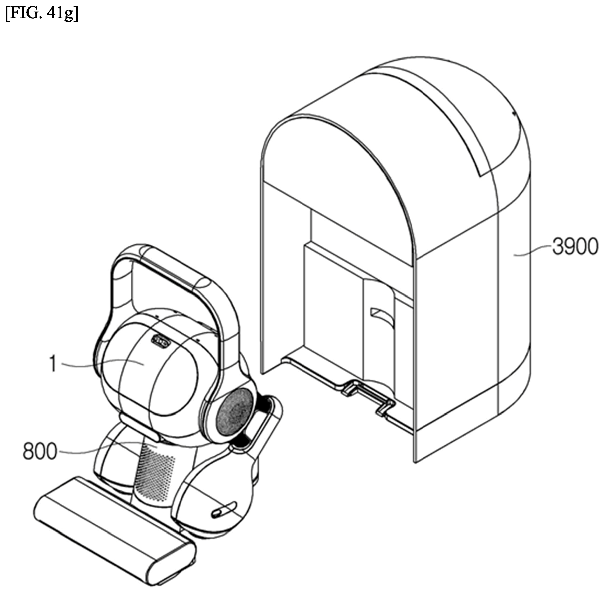

FIG. 41G is a view illustrating an operation corresponding to step S4180 of FIG. 40.

### [Description of Embodiments]

Hereinafter, preferred embodiments of the present invention will be described in detail with reference to the accompanying drawings.

Since the present invention may be subject to various modifications and may have various embodiments, specific embodiments will be illustrated in the drawings and described in detail in the detailed description. This is not intended to limit the present invention to specific embodiments, and should be construed to include all modifications, equivalents, and substitutes included in the scope and technical concept of the present invention.

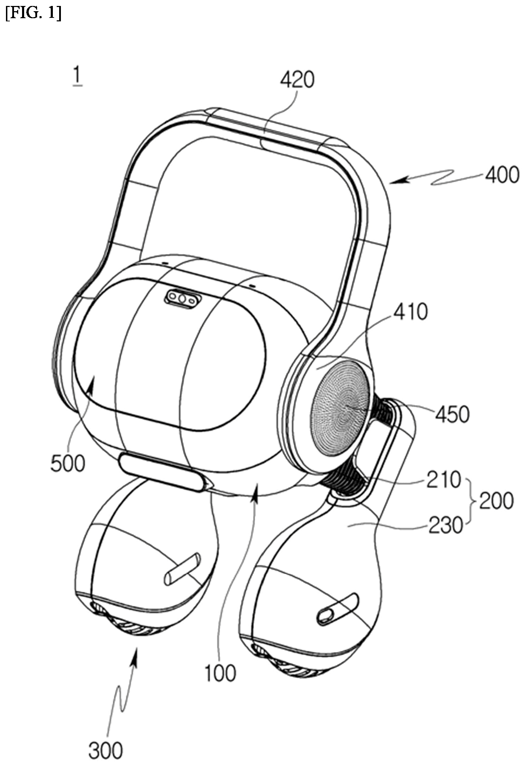

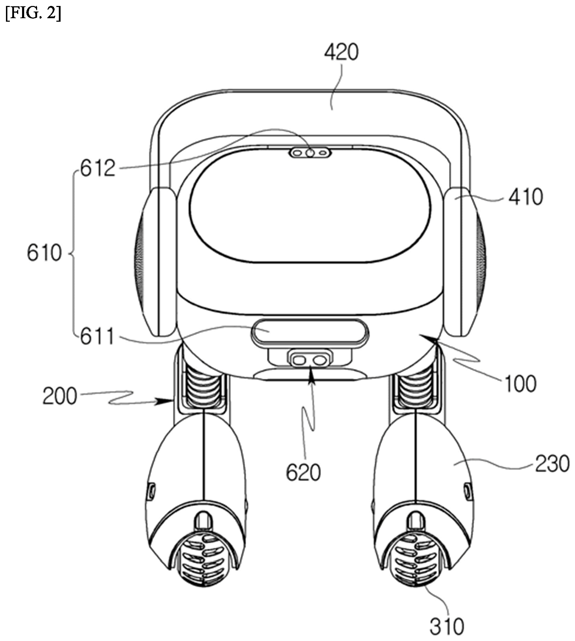

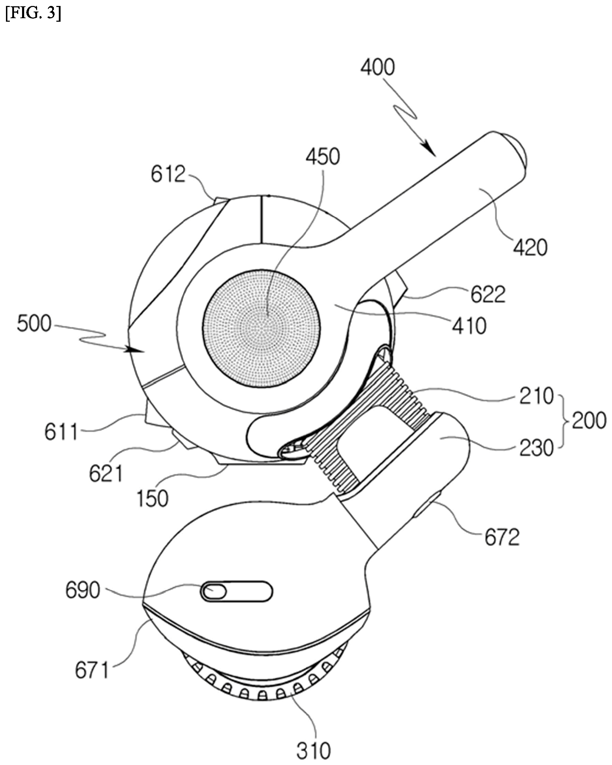

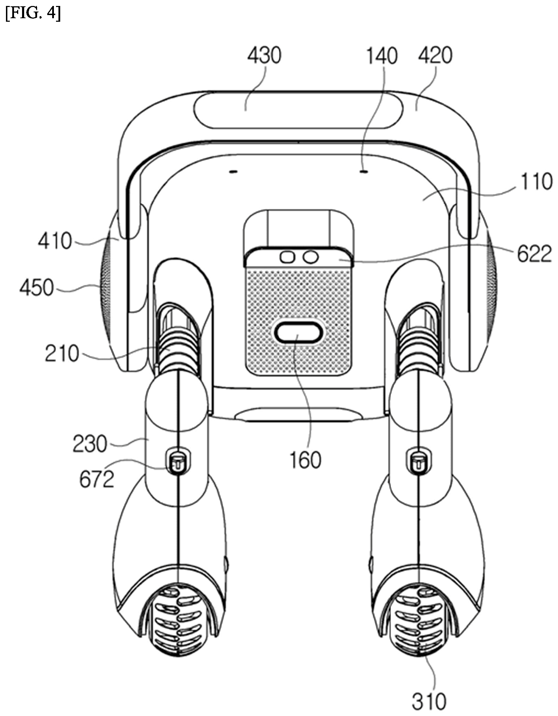

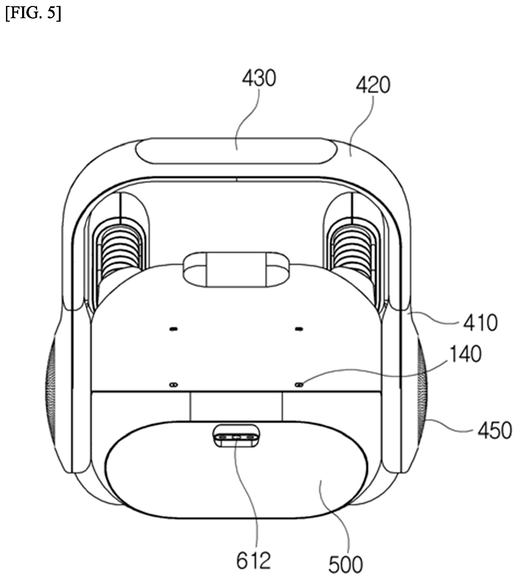

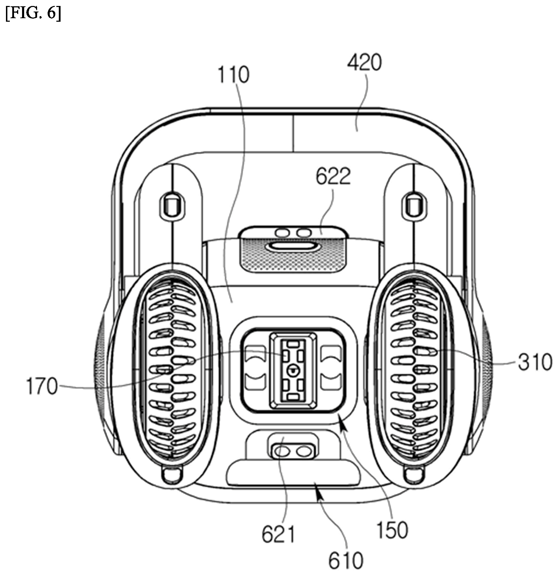

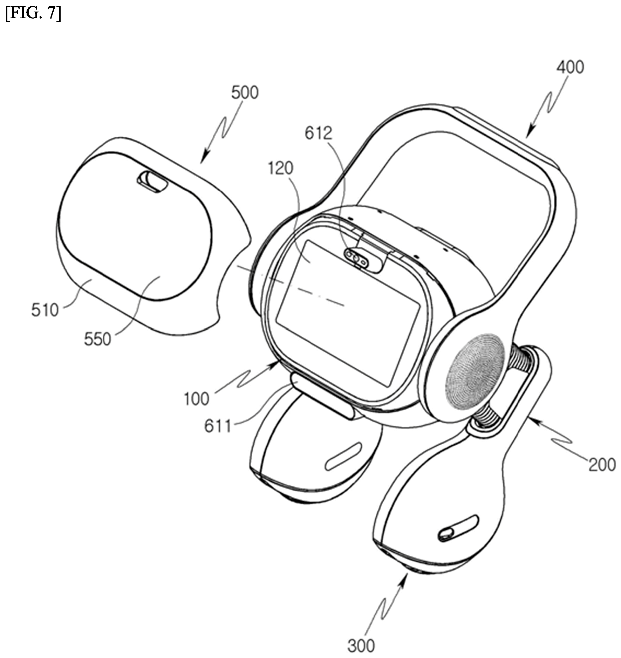

FIGS. 1 to 6 show a perspective view, a front view, a side view, a rear view, a plan view, and a bottom view, respectively, for explaining a robot according to an embodiment of the present invention, and FIG. 7 shows a view for explaining a coupling relationship between a robot mask and a robot body in the robot according to the embodiment of the present invention.

Referring to FIGS. 1 to 6, a robot 1 according to an embodiment of the present invention will be described as follows.

The robot 1 according to the embodiment of the present invention is configured to be placed on a floor and move along the ground. Accordingly, hereinafter, the vertical direction will be determined and described based on a state in which the robot 1 is placed on the floor.

In addition, a side where an obstacle detection camera 610, which will be described later, is disposed is determined and described as a front of the robot 1. In addition, a direction opposite to the front is determined and described as a rear of the robot 1.

The "lowest portion" of each component described in the embodiment of the present invention may be a portion located lowest in each component, or may be a portion closest to the floor when the robot 1 according to the embodiment of the present invention is placed on the floor and used.

The robot 1 according to the embodiment of the present invention includes a robot body 100, a leg portion 200, a wheel portion 300, an arm 400, and a robot mask 500. At this time, the leg portion 200 is coupled to the robot body 100, and the wheel portion 300 is coupled to the leg portion 200. In addition, arms 400 are pivotally coupled to both side surfaces of the robot body 100, respectively. In addition, the robot mask 500 is detachably coupled to the robot body 100.

### Robot Body:

Referring to FIGS. 1 to 7, a robot body 100 in a robot 1 according to an embodiment of the present invention will be described as follows.

Components constituting the robot 1 may be coupled to the robot body 100. For example, a robot mask 500 may be detachably coupled to the robot body 100. In addition, arms 400 are pivotally coupled to the robot body 100. The arms 400 are pivotally coupled to both end portions of the robot body 100, respectively. The robot body 100 may implement a standby posture for power saving or a standing posture when falling down through the arms 400. A lower portion of the robot body 100 may be detachably coupled to a functional module 800. The robot body 100 may perform an additional function by being coupled with the functional module 800.

Some components constituting the robot 1 may be accommodated inside the robot body 100.

A body housing 110 may form an outer appearance of the robot body 100. An inner space of the body housing 110 may accommodate one or more motors including a suspension motor MS, one or more sensors, and a battery B.

In addition, although not shown, at least one bumper may be provided inside the body housing 110.

The bumper may be provided to be relatively movable with respect to the body housing 110. For example, the bumper may be coupled to the body housing 110 so as to be reciprocally movable along a front-rear direction of the body housing 110.

The bumper may be coupled along a portion or the entirety of a front rim of the body housing 110. In addition, the bumper may be disposed at an inner rear side of the body housing 110.

With this configuration, when the robot 1 collides with another object or person, the bumper may absorb an impact applied to the robot body 100, thereby protecting the robot body 100 and components accommodated inside the robot body 100.

A pair of leg portions 200 are coupled inside the body housing 110. The pair of leg portions 200 may penetrate the body housing 110 and be exposed to the outside.

Specifically, an upper leg 210 may be rotatably coupled inside the body housing 110. For example, a link frame (not shown) to which the upper leg 210 is link-coupled may be provided inside the body housing 110.

In addition, the suspension motor MS may be accommodated inside the body housing 110. For example, the suspension motor MS may be disposed on the link frame (not shown). The suspension motor MS may be connected to the upper leg 210.

A pair of leg guide holes may be formed in the body housing 110. For example, the pair of leg guide holes may be formed side by side along the front-rear direction of the body housing 110.

With this configuration, the leg portion 200 may rotatably move along the leg guide holes, and a rotational movement range of the leg portion 200 may be guided.

The body housing 110 may have a shape in which a width (or diameter) in a horizontal direction is greater than a height in a vertical direction. For example, the body housing 110 may be formed in a shape similar to an ellipsoid.

Such a robot body 100 may help the robot 1 to form a stable structure and may provide a structure advantageous for balancing when the robot 1 moves (travels).

The robot body 100 may be disposed vertically above a wheel 310, which will be described later. A load of the robot body 100 may be transferred to the wheel 310 through the leg portion 200, and the wheel 310 may support the leg portion 200 and the robot body 100. With this configuration, the wheel 310 can stably support the load of the robot body 100.

The robot body 100 may include a display 120. The display 120 may be coupled with the body housing 110. The display 120 may be formed in a flat plate shape. The display 120 may be disposed at a predetermined angle with respect to the ground. For example, the display 120 may be disposed at a position facing a front upper side. With this configuration, when the robot 1 approaches close to a user, the display 120 can be made visible when the user looks at the robot 1.

Meanwhile, the display 120 may visually transfer information regarding an operating state of the robot 1 to the user.

The display 120 may be formed of any one element among a Light Emitting Diode (LED), a Liquid Crystal Display (LCD), a Plasma Display Panel, and an Organic Light Emitting Diode (OLED).

The display 120 may display information such as operating time information of the robot 1 and power information of the battery B.

According to an embodiment, the display 120 may be an input unit 125. That is, a control command may be input to the display 120 from the user. For example, the display 120 may be a touch screen that visually shows an operating state and receives a control command input from the user.

A facial expression of the robot 1 may be displayed on the display 120. Alternatively, eyes of the robot 1 may be displayed on the display 120. Through the shape of the face or the shape of the eyes displayed on the display 120, a current state of the robot 1 may be anthropomorphized and expressed as an emotion. For example, when the user goes out and then returns home, a smiling facial expression or a smiling eye shape may be displayed on the display 120. Accordingly, there is an effect that the user feels a sense of interacting with the robot 1.

A robot terminal 170 may be disposed on the body housing 110. For example, the robot terminal 170 may be disposed toward the ground. As an example, the robot terminal 170 may be disposed to face the ground. As another example, the robot terminal 170 may be disposed to form a predetermined angle with the ground. With this configuration, when the robot 1 is coupled with the functional module 800, the robot terminal 170 may contact a robot-corresponding terminal 840 provided on the functional module 800.

The robot terminal 170 may be electrically connected to the functional module 800. With this configuration, the robot 1 may receive power through the robot terminal 170. Power supplied to the robot terminal 170 may be supplied to the battery B. In addition, the robot 1 may receive an electrical signal through the robot terminal 170. An electrical signal transferred through the robot terminal 170 may be received by a control unit 700.

A microphone 140 may be disposed on the body housing 110. A plurality of microphones 140 may be disposed on the body housing 110. For example, four microphones 140 may be disposed on an upper side of the body housing 110. With this configuration, the microphones 140 can detect sounds coming from various directions and can detect a location of a sound source.

A module coupling portion 150 may be disposed on a lower portion of the body housing 110. The module coupling portion 150 is detachably coupled to the functional module 800. Specifically, the module coupling portion 150 may be selectively coupled to or separated from the functional module 800.

As an example, the module coupling portion 150 is configured in an electromagnet form, and may selectively apply a magnetic force (attractive force) to the functional module 800 according to supply of power. As another example, the module coupling portion 150 may be configured to be hook-coupled with a coupling portion 830 of the functional module 800. In this case, a coupling force between the robot body 100 and the functional module 800 can be strengthened.

With this configuration, the module coupling portion 150 may couple with the coupling portion 830 made of a metal material (or an electromagnet) provided on the functional module 800 at an accurate position.

The robot terminal 170 may be disposed on the module coupling portion 150. The robot terminal 170 may be disposed at a position contacting the robot-corresponding terminal 840 when the module coupling portion 150 of the robot 1 and the coupling portion 830 of the functional module 800 are coupled to each other. Specifically, when the module coupling portion 150 of the robot 1 and the coupling portion 830 of the functional module 800 are physically coupled, the robot terminal 170 of the robot 1 and the robot-corresponding terminal 840 of the functional module 800 can contact each other to be electrically connected. Therefore, the module coupling portion 150 has an effect of guiding the robot terminal 170 and the robot-corresponding terminal 840 provided on the functional module 800 to contact each other at accurate positions.

The robot terminal 170 may be electrically connected to the functional module 800. The robot terminal may contact the robot-corresponding terminal 840 provided on the functional module 800 to be electrically connected.

With this configuration, power of the robot body 100 may be supplied to the functional module 800 through the robot terminal 170. Conversely, power of the functional module 800 may be supplied to the robot 1 through the robot terminal 170. In addition, the robot body 100 may transmit and receive electrical signals to and from the functional module 800 through the robot terminal 170.

Meanwhile, a detailed description of the functional module 800 will be described later.

A manipulation portion 160 may be disposed on the body housing 110. For example, the manipulation portion 160 may be disposed at a rear of the body housing 110.

The manipulation portion 160 can be manipulated by a user, and power of the robot 1 can be turned on/off by manipulation of the manipulation portion 160.

The manipulation portion 160 may be provided to be pushable on the body housing 110, or may be provided to be pivoted in a left-right direction according to an embodiment.

For example, the manipulation portion 160 may be a button. Therefore, in a state where the power of the robot 1 is turned off, when the user pushes the manipulation portion 160 so that the manipulation portion 160 is pressed, the power of the robot 1 can be turned on. Further, in a state where the power of the robot 1 is turned on, when the user pushes the manipulation portion 160 so that the manipulation portion 160 is pressed, the power of the robot 1 can be turned off.

Meanwhile, an obstacle detection camera 610 may be disposed at a front of the body housing 110. A plurality of obstacle detection cameras 610 may be disposed according to an embodiment. For example, a first detection camera 611 may be disposed at a front lower portion of the body housing 110, and a second detection camera 612 may be disposed at a front upper portion of the body housing 110. At this time, the obstacle detection camera 610 may be disposed on a center line passing through a center in a left-right direction of the body housing 110. With this configuration, the obstacle detection camera 610 can detect an object or a person disposed in front of the robot 1.

In addition, an IR sensor 620 may be disposed on the body housing 110. A plurality of IR sensors 620 may be disposed according to an embodiment. For example, a first IR sensor 621 may be disposed at a front lower portion of the body housing 110, and a second IR sensor 622 may be disposed at a rear of the body housing 110. With this configuration, the IR sensor 620 can detect a location of a light source generating infrared rays.

The IR sensor 620 may be disposed close to the obstacle detection camera 610. For example, the first IR sensor 621 may be disposed directly below the first obstacle detection camera 611.

With this arrangement, the IR sensor 620 can detect light irradiated by a lamp of the functional module 800 or an IR transmitter 970 of a station 900, and when the robot body 100 approaches toward the lamp of the functional module 800 and/or the IR transmitter 970 of the station 900, the obstacle detection camera 610 can detect a shape of the functional module 800 and/or the station 900.

### Leg Portion:

Referring to FIGS. 1 to 7, a leg portion 200 in a robot 1 according to an embodiment of the present invention will be described as follows.

The leg portion 200 is coupled to a robot body 100 and may support the robot body 100. For example, a pair of leg portions 200 are provided, and each is coupled inside a body housing 110. The pair of leg portions 200 may be arranged symmetrically (line-symmetrically) to each other. At this time, at least a portion of the leg portion 200 is disposed closer to the ground than the robot body 100. Accordingly, the robot body 100 may travel in a form standing on the ground by the pair of leg portions 200. That is, gravity applied to the robot body 100 may be supported by the leg portion 200, and a height of the robot body 100 may be maintained.

The leg portion 200 includes an upper leg 210 and a lower leg 230. At this time, the upper leg 210 is rotatably coupled to the robot body 100 and the lower leg 230.

Meanwhile, although not shown, the upper leg 210 includes a first link and a second link. At this time, the first link and the second link are rotatably coupled to the robot body 100 and the lower leg 230, respectively. That is, the first link and the second link are link-coupled to the robot body 100 and the lower leg 230, respectively.

The first link and the second link are disposed inside an upper link cover and are not exposed to the outside. The upper link cover is formed in a kind of corrugated pipe shape to accommodate the first link and the second link therein, and may be provided such that a length thereof is expandable and contractible according to rotation of the upper leg 210.

The first link is link-coupled to inner left and right sides of the robot body 100.

The first link is connected to a suspension motor MS. For example, the first link may be connected directly or through a gear to a shaft of the suspension motor MS. With this configuration, the first link receives driving force from the suspension motor MS.

The first link is formed in a frame shape, the suspension motor MS is connected to one side in a longitudinal direction thereof, and the lower leg 230 is coupled to another side in the longitudinal direction thereof. At this time, the one side of the first link connected to the suspension motor MS may be disposed farther from the ground than the other side coupled to the lower leg 230.

The one side of the first link is coupled to a leg support portion (not shown) provided inside the body housing 110. The first link may be rotatably coupled to the leg support portion. For example, the one side of the first link may be formed in a disk shape or a circular plate shape. Accordingly, the one side of the first link may penetrate the leg support portion and be connected to the suspension motor MS.

The one side of the first link is connected to the suspension motor MS. For example, the one side of the first link may be fixedly coupled to the shaft of the suspension motor MS. With this configuration, when the suspension motor MS is driven, the one side of the first link may be rotated in interlock with rotation of the shaft of the suspension motor MS.

The other side of the first link is rotatably coupled to the lower leg 230. For example, a through-hole may be formed on the other side of the first link. A shaft may be rotatably penetratively coupled to the through-hole. Both end portions in a longitudinal direction of the shaft may be coupled to the lower leg 230.

With this configuration, the shaft may be an axis about which the first link and/or the lower leg 230 is rotated. Accordingly, the first link and the lower leg 230 may be connected to be relatively rotatable.

Although not shown, the leg portion 200 may further include a gravity compensation portion. The gravity compensation portion compensates for the robot body 100 moving vertically downward by gravity. That is, the gravity compensation portion provides force to prop up the robot body 100.

For example, the gravity compensation portion may be a torsion spring. The gravity compensation portion may be wound to surround an outside of an outer peripheral surface of the first link. In addition, one end portion of the gravity compensation portion may be inserted into and fixedly coupled to the first link, and another end portion of the gravity compensation portion may be inserted into and fixedly coupled to the lower leg 230.

The gravity compensation portion applies force (rotational force) in a direction in which an angle between the first link and the lower leg 230 increases. For example, both end portions of the gravity compensation portion are narrowed in advance so as to apply a restoring force in a direction in which an angle between the first link and the lower leg 230 increases. Accordingly, even if gravity is applied to the robot body 100 in a state where the robot 1 is placed on the ground, the angle between the first link and the lower leg 230 can be maintained within a predetermined angle range.

With this configuration, even if the suspension motor MS is not driven, the robot body 100 can be prevented from descending toward the ground. Therefore, there is an effect of maintaining the height of the robot body 100 at a predetermined distance or more from the ground by the gravity compensation portion while preventing energy loss due to driving of the suspension motor MS.

The second link is link-coupled to the inner left and right sides of the robot body 100. For example, the second link may be link-coupled to a leg support portion (not shown) provided inside the body housing 110. That is, the second link may be coupled together with the leg support portion (not shown) to which the first link is coupled.

The second link is formed in a frame shape, one side in a longitudinal direction thereof is coupled to the leg support portion (not shown), and another side in the longitudinal direction thereof is coupled to the lower leg 230.

An electric wire may be accommodated in the second link. For example, a space in which an electric wire can be accommodated may be formed inside the second link. Accordingly, power of a battery B may be supplied to a wheel portion 300 through the electric wire. Along with this, the electric wire can be prevented from being exposed to the outside.

The one side of the second link is rotatably coupled to the leg support portion. For example, although not shown, a shaft coupled to the leg support portion may be penetratively coupled to the one side of the second link. A hollow may be formed in the shaft. An electric wire can pass through the hollow. With this configuration, an electric wire supplying power from the battery B to a wheel motor MW can be prevented from being exposed to the outside.

The other side of the second link is rotatably coupled to the lower leg 230. Specifically, another end portion of the second link is rotatably coupled to the lower leg 230 through a shaft. For example, the other side of the second link may be formed in a disk shape, and the shaft may be penetratively coupled thereto. Further, both end portions in a longitudinal direction of the shaft may be coupled to the lower leg 230. With this configuration, the shaft may be an axis about which the second link and/or the lower leg 230 is rotated. Accordingly, the second link and the lower leg 230 are connected to be relatively rotatable.

The lower leg 230 is link-coupled to the first link and the second link, and is coupled to the wheel portion 300.

The lower leg 230 is formed in a frame shape, the first link and the second link are coupled to one side in a longitudinal direction thereof, and the wheel portion 300 is coupled to another side in the longitudinal direction thereof.

One side in a longitudinal direction of the lower leg 230 is link-coupled to the first link and the second link. For example, a space may be formed on one side of the lower leg 230 so as to accommodate the first link and the second link. That is, the one side of the lower leg 230 may be formed in a pair of frame shapes side by side, and the first link and the second link may be accommodated in a space between the pair of frames.

Here, two shafts may be arranged side by side between the pair of frames. That is, both end portions of each of the two shafts may be coupled to the pair of frames. Further, each of the shafts may penetrate the first link and the second link. At this time, the first link may be disposed at a front lower side than the second link. That is, the shaft penetrating the first link may be disposed closer to a wheel 310 than the shaft penetrating the second link.

Accordingly, the first link and the second link may be coupled to be relatively rotatable with respect to the lower leg 230, respectively.

Another side in the longitudinal direction of the lower leg 230 is coupled to the wheel portion 300. The other side in the longitudinal direction of the lower leg 230 may be formed to cover at least a portion of the wheel 310. For example, the other side in the longitudinal direction of the lower leg 230 may be formed to cover a rotation center of the wheel 310, and a space capable of rotatably accommodating the wheel 310 therein may be formed.

In addition, the wheel motor MW may be accommodated inside the other side in the longitudinal direction of the lower leg 230.

With this configuration, the wheel 310 and the wheel motor MW may be accommodated in the other side in the longitudinal direction of the lower leg 230, and the wheel 310 may be rotatably coupled thereto.

Meanwhile, a sensor capable of measuring a distance from the ground may be provided on the other side in the longitudinal direction of the lower leg 230. Specifically, a cliff sensor 670 may be disposed on the lower leg 230. For example, a first cliff sensor 671 may be disposed at a front lower end of the lower leg 230, and a second cliff sensor 672 may be disposed at a rear upper side of the lower leg 230. With this configuration, a distance between the lower leg 230 and the wheel 310 and the ground can be measured. In addition, it is also possible to calculate an angle between the lower leg 230 and the ground through a difference in distance between the first cliff sensor 671 and the second cliff sensor 672.

Meanwhile, although not shown, a stopper may be provided on the leg portion 200. The stopper may be disposed inside the body housing 110. The stopper may be disposed adjacent to a rotational coupling portion 410 of an arm 400. For example, the stopper may be disposed inside an inner peripheral surface of the rotational coupling portion 410 formed in a cylindrical shape.

As an example, the stopper may be disposed on a leg support portion (not shown). As another example, the stopper may be disposed on the first link.

The stopper may be formed in a shape protruding toward the rotational coupling portion 410. The stopper may be contact-supported by a rotation protrusion (not shown) of the arm 400, which will be described later. For example, the rotation protrusion protruding on the inner peripheral surface of the rotational coupling portion 410 is rotated together according to rotation of the arm 400, and may contact the stopper when the arm 400 is rotated to a predetermined position.

With this configuration, the stopper may limit a rotation angle of the arm 400 when the arm 400 rotates.

Looking at the overall balance by the leg portion 200, the first link and the second link are rotatably coupled to a link frame (not shown) provided inside the robot body 100, and the first link and the second link are link-coupled to the ground leg 230. That is, the robot 1 has a structure supporting the robot body 100 through a four-bar linkage consisting of the link frame (not shown), the first link, the second link, and the lower leg 230.

Further, the leg portion 200 generates a restoring force in a direction in which the gravity compensation portion lifts the robot body 100. Accordingly, even in a state where the suspension motor MS is not driven, the pair of leg portions 200 can maintain a state in which the robot body 100 is lifted by a predetermined height from the ground.

Meanwhile, the robot 1 according to the embodiment of the present invention may maintain balance by driving the suspension motor MS when lifting at least any one of the pair of wheels 310 to clear an obstacle or when lowering the height of the robot body 100 for charging or the like.

When the suspension motor MS is driven, the first link rotates about a module coupling portion as an axis, and a link coupling portion moves upward. Further, the lower leg 230 is moved according to rotation of the first link. Further, the second link is pushed by the lower leg 230 to undergo rotational movement. As a result, one end portion of the lower leg 230 may move backward, and another end portion of the lower leg 230 may move upward.

With this configuration, even when the wheel 310 is moved in a vertical direction, a movement range of the wheel 310 in a front-rear direction can be limited. Accordingly, the robot 1 can stably maintain balance.

Therefore, according to the robot 1 according to the present invention, there is an effect that it is possible to cross obstacles of various heights using the four-bar linkage structure.

### Wheel Portion:

Referring to FIGS. 1 to 7, a wheel portion 300 in a robot 1 according to an embodiment of the present invention will be described as follows.

The wheel portion 300 is rotatably coupled to a leg portion 200 and may roll on the ground to move a robot body 100 and the leg portion 200.

The wheel portion 300 includes a wheel 310 that contacts the ground and rolls on the ground.

The wheel 310 is provided to have a predetermined radius and is provided to have a predetermined width along an axial direction. When the robot 1 is viewed from the front, at least a portion of the robot body 100 and the leg portion 200 may be disposed vertically above the wheel 310.

Although not shown, the wheel 310 may include a wheel frame formed in a circular shape. The wheel frame may be formed in a cylindrical shape in which one side facing a shaft of a wheel motor MW is opened. Through this, a weight of the wheel frame can be reduced.

However, when the wheel frame is formed in a cylindrical shape, the overall rigidity of the wheel frame may be lowered. In consideration of this point, ribs (not shown) for reinforcing rigidity may be formed on an inner surface and an outer surface of the wheel frame, respectively.

A tire is coupled to an outer peripheral surface of the wheel frame. The tire may be formed in an annular shape having a diameter capable of being fitted into the outer peripheral surface of the wheel frame.

Grooves having a predetermined pattern may be recessed on an outer peripheral surface of the tire to improve traction of the tire.

In an embodiment, the tire may be formed of a rubber material having elasticity.

The wheel motor MW may provide driving force to the wheel 310. The wheel motor MW may receive power from a battery B to generate rotational force.

The wheel motor MW may be accommodated inside another side of a lower leg 230. Further, the shaft of the wheel motor MW may be coupled to the wheel 310. That is, the wheel motor MW may be an in-wheel motor.

With this configuration, when the wheel motor MW is driven, the wheel 310 rotates to roll along the ground, and the robot 1 can move along the ground.

### Arm:

Referring to FIGS. 1 to 7, an arm 400 in a robot 1 according to an embodiment of the present invention will be described as follows.

The arm 400 may be pivotally coupled to both side surfaces of a robot body 100. For example, the arm 400 may mean a rotating body that is coupled to both side end portions in an axial direction (longitudinal direction) of the robot body 100 having an ellipsoidal shape, and rotates by using both side end portions in the axial direction of the robot body 100 as one rotation axis.

Specifically, the arm 400 includes a rotational coupling portion 410 and a connection portion 420.

The rotational coupling portion 410 may be rotatably coupled to both side surfaces of the robot body 100. A pair of rotational coupling portions 410 may be provided to be relatively rotatably coupled to both sides in a left-right direction of the robot body 100. At this time, the pair of rotational coupling portions 410 may be rotated in interlock with each other. That is, the pair of rotational coupling portions 410 are simultaneously rotated with each other, and an angular magnitude of rotation may also be the same. However, when viewed based on the robot body 100, rotational directions of the pair of rotational coupling portions 410 may be opposite to each other. That is, when viewed based on the robot body 100, when the rotational coupling portion 410 on one side rotates in a clockwise direction, the rotational coupling portion 410 on the other side may rotate in a counterclockwise direction.

The rotational coupling portion 410 may be formed in a shape capable of covering both side end portions in the left-right direction of the robot body 100. For example, the rotational coupling portion 410 may be formed in a cylindrical shape having a predetermined thickness. At this time, both side end portions in the left-right direction of the robot body 100 may be arranged to face a rotation center of the rotational coupling portion 410.

That is, describing a state in which the rotational coupling portion 410 is coupled to the robot body 100, assuming that the robot body 100 is a human face, the rotational coupling portion 410 may have a shape similar to a pair of earmuffs or earpieces of headphones.

An arm motor MA may be disposed inside a body housing 110. Alternatively, according to an embodiment, the arm motor MA may be disposed inside the rotational coupling portion.

The arm motor MA may be connected to the arm 400 to provide driving force to the arm 400. More specifically, a shaft of the arm motor MA or a final output end of a gear is connected to the rotational coupling portion 410. For example, the shaft of the arm motor MA may be connected to a reducer, and the reducer may be connected to a driven gear.

The reducer includes at least one or more gears and transfers rotational force applied from the arm motor MA to the driven gear, and may reduce a rotational speed of the driven gear through a gear ratio. Through this, precise rotation of the arm 400 can be controlled, and the arm 400 can provide a relatively large force.

The driven gear may be coupled to the rotational coupling portion 410 to be integrally rotated. The driven gear may be meshed with the output end of the reducer to receive rotational power of the arm motor MA.

With this configuration, when the arm motor MA is operated, the rotational coupling portion 410 may be rotated.

Two arm motors MA may be provided to be respectively connected to the pair of rotational coupling portions 410. As another example, one arm motor MA may be provided to be connected to any one of the rotational coupling portions 410.

With this configuration, when the arm motor MA is operated, the pair of rotational coupling portions 410 are rotated together in interlock, and the connection portion 420 is rotated together according to rotation of the rotational coupling portion 410. That is, according to the present invention, the arm 400 may be configured such that the rotational coupling portion 410 and the connection portion 420 are integrally rotated by using an arm shaft of the rotational coupling portion 410 as a rotation axis.

Meanwhile, a speaker 450 may be disposed outside a rotational coupling portion 410. That is, the speaker 450 may be disposed in each of directions opposite to a direction in which a robot body 100 is disposed in a pair of rotational coupling portions 410. Accordingly, the speakers 450 may be respectively disposed at positions covering both sides in a left-right direction of a body housing 110.

The speaker 450 may transmit information of a robot 1 as sound. A source of the sound transmitted by the speaker 450 may be sound data pre-stored in the robot 1. For example, the pre-stored sound data may be voice data of the robot 1. For example, the pre-stored sound data may be a notification sound guiding a state of the robot 1. Meanwhile, the source of the sound transmitted by the speaker 450 may be sound data received through a communication unit 710.

Meanwhile, in the case of a conventional robot, similar to a human arm, a pair of arms are provided on both sides of a body to move objects or perform a specific task.

However, when a pair of arms are provided as described above, each arm can move separately, and accordingly, a load applied to both sides of the robot may vary. Therefore, a problem may occur in which the robot tilts to one side and falls over.

In addition, in a state where the robot falls over, an operation of getting up by bracing the arms against the ground may be attempted, but since the arms on both sides separately rotate to brace against the ground, a balance is broken during a process in which the robot gets up, so there is a limitation that the robot may fall over again.

On the other hand, in the case of a robot that transports an object or performs a specific task through one arm, a load of the transported object or an impact that may occur during the performance of the task is concentrated only on one arm, so there is a limitation that damage to the arm may occur.

To solve this problem, the robot 1 according to the embodiment of the present invention is configured in a form in which a single arm 400 is rotatably coupled to both sides of the robot body 100.

A connection portion 420 may connect the pair of rotational coupling portions 410 to each other. The connection portion 420 connects the pair of rotational coupling portions 410 covering both sides in the left-right direction of the robot body 100 to allow them to rotate together.

The connection portion 420 connects the pair of rotational coupling portions 410 to each other and may be formed in a shape rotatable around the robot body 100. Specifically, the connection portion 420 may be formed in a frame shape in which both side end portions in a longitudinal direction thereof are bent and extended. At this time, both side end portions of the bent and extended connection portion 420 are arranged in parallel with each other and may be connected to the pair of rotational coupling portions 410. As an example, the connection portion 420 may be formed in an inverted U-shape. As another example, the connection portion 420 may also be formed in an arch shape.

Describing a state in which the arm 400 is coupled to the robot body 100, assuming that the robot body 100 is a human face, the connection portion 420 may have a shape similar to a hairband of headphones. That is, assuming that the robot body 100 is a human face, the arm 400 may look similar to headphones.

With this configuration, the pair of rotational coupling portions 410 are integrally connected to the connection portion 420, so that the entire arm 400 can rotate together by using the rotational coupling portion 410 as a rotation center.

Meanwhile, a rotation radius of the arm 400 may be longer than a maximum length of a first link and shorter than a maximum length of a leg portion 200. Specifically, a shortest distance from the rotation center of the rotational coupling portion 410 to an outer end portion of the connection portion 420 may be longer than the maximum length of the first link and shorter than the maximum length of the leg portion 200.

With this configuration, when the arm 400 is rotated, at least a portion of the arm 400 can be disposed closer to the ground than the first link.

When a user's special command or a preset situation does not occur, the outer end portion of the arm 400 may be disposed farther from the ground than the robot body 100. With this configuration, a user can easily transport the robot 1 by grasping the arm 400. That is, the arm 400 may perform a function of a handle capable of being gripped by a user.

Further, when a user's special command or a preset situation does not occur, the arm 400 may be disposed rearward of a robot mask 500. This is to prevent the robot mask 500 from being blocked by the arm 400 when a user looks at the robot 1.

Meanwhile, when a user's special command or a preset situation occurs, the arm 400 can implement various functions while rotating.

As an example, the robot 1 may implement a scooch-down posture. To this end, the robot 1 may rotate the arm 400 from an upper side of the robot body 100, past a rear side, to a rear lower side of the robot body 100. Along with this or prior to the rotation of the arm 400, the leg portion 200 may be moved to lower a posture of the robot 1. Therefore, even if operation of a wheel motor MW is stopped so that a wheel 310 does not rotate, the robot 1 tilts rearward, so that a pair of wheels 310 and a lower end portion of the arm 400 can contact the ground. As a result, through the operation of the robot 1 as described above, the single arm 400 and the pair of wheels 310 can contact the ground, and can support the robot body 100 at three points. Through this, a standby posture for reducing power consumption can be taken.

As another example, the robot 1 can get up by bracing against the ground through the arm 400 in a fallen state. To this end, the robot 1 may rotate the arm 400 toward a front of the robot body 100, and along with this, the wheel 310 may be rotated in a direction in which the robot 1 moves forward. That is, the pair of wheels 310 may be rotated in a direction in which a distance from the arm 400 becomes closer. As a result, according to the robot 1 of the present invention, since a single arm can get up by bracing against the ground, it is possible to prevent the robot 1 from shaking or falling over again during a process of getting up, and power consumed during a process of implementing the getting-up operation can be minimized.

Meanwhile, according to an embodiment, the arm 400 of the robot 1 may further include a detachment portion 430 to be coupled with a functional module 800.

The detachment portion 430 may be disposed on the connection portion 420. Specifically, the detachment portion 430 may be disposed on an outer surface of the connection portion 420. Here, the outer surface of the connection portion 420 may mean a surface disposed in a direction opposite to a direction facing the robot body 100 in the connection portion 420.

With this configuration, the detachment portion 430 may be exposed to an outer periphery around the robot body 100 so as to facilitate contact with an object approached from the outside of the robot 1.

The detachment portion 430 may be detachably coupled to the functional module 800. Specifically, the detachment portion 430 may be selectively coupled to or separated from the functional module 800.

The detachment portion 430 is configured in an electromagnet form, and may selectively apply a magnetic force (attractive force) to the functional module 800 according to supply of power.

For example, the detachment portion 430 may be configured in an electromagnet form. With this configuration, the detachment portion 430 can form a uniform magnetic field over a wide area, and can be stably coupled with the functional module 800.

### Robot Mask:

As shown in FIG. 7, a robot 1 according to an embodiment of the present invention may further include a robot mask 500.

The robot mask 500 is detachably coupled to a robot body 100 and may cover a display 120. The robot mask 500 may be coupled with the robot body 100 to constitute an outer appearance of the robot 1.

The robot mask 500 includes a mask body 510 and a window 550.

The mask body 510 constitutes an outer appearance of the robot mask 500. For example, based on a state in which the robot mask 500 and the robot body 100 are coupled, an outer surface of the mask body 510 exposed to the outside may be formed in a curved surface shape having a predetermined curvature.

Further, an inner surface of the mask body 510 facing the robot body 100 may be formed in a shape corresponding to a shape of the robot body 100. For example, the inner surface of the mask body 510 is formed in a flat plate shape corresponding to a shape of the display 120, and a sidewall may be formed to protrude on an outer periphery thereof so as to accommodate a portion of a body housing 110. Accordingly, the inner surface of the mask body 510 may be formed of an elliptical flat surface and a sidewall surrounding the same.

Although not shown, a magnet for coupling may be disposed on the mask body 510.

For example, at least one magnet may be disposed on the sidewall protruding from the inner surface of the mask body 510.

In addition, the magnet generates magnetic force (attractive force) to be detachably coupled to the robot body 100. With this configuration, the magnet may couple the body housing 110 and the mask body 510 through the magnetic force, and when a user applies an external force of a predetermined magnitude or more, the body housing 110 and the mask body 510 may be separated from each other.

Although not shown, a mask communication portion may be disposed on the mask body 510 to communicate with a communication unit 710 provided in the robot body 100.

The communication portion of the robot mask 500 may support wireless communication with the robot body 100. As a wireless communication module for supporting wireless communication, a short-range communication module may be provided.

The short-range communication may be, for example, Near Field Communication (NFC) communication or the like.

Information regarding a shape of the robot mask 500 and a function provided in the robot mask 500 may be transmitted to the robot body 100 through the communication portion of the robot mask 500. In addition, the communication portion of the robot mask 500 may receive a control command of a control unit 700 provided in the robot body 100.

Meanwhile, the robot mask 500 may receive power from the robot body 100. Although not shown, the robot mask 500 may be provided with a terminal capable of being electrically connected to the robot body 100.

Meanwhile, the robot mask 500 according to the embodiment of the present invention, when coupled with the robot body 100, may include a window 550 exposing an image displayed on the display 120 to the outside.

The window 550 may be disposed on the mask body 510. Specifically, the window 550 is disposed to penetrate the mask body 510, and may be disposed at a position facing the display 120 when the robot mask 500 is coupled to the robot body 100.

The window 550 may be formed of a material through which light can pass. For example, the window 550 may be formed of a transparent material.

Meanwhile, when the robot mask 500 is coupled to the robot body 100, a face and a facial expression may be displayed on the display 120.

The robot 1 displays facial shapes such as eyes, a nose, and a mouth on the display 120 to allow a user to feel that the robot expresses emotions.

The robot 1 displays a preset image on the display 120 to depict a facial expression, thereby allowing a user to recognize that the robot expresses emotions.

For example, when a user returns home, the robot 1 may display a smiling face on the display 120 to express joy.

As another example, when the robot 1 detects a cliff to escape a danger of falling, the robot 1 may display a surprised face and a surprised eye expression on the display 120.

As another example, when a user calls the robot 1, the robot 1 may display a wondering facial expression on the display 120 while gazing at the user. The robot 1 may be set to detect the call and react when a user calls with a specific pronunciation.

As another example, when the robot 1 cannot understand a user's command, the robot 1 may display a wondering facial expression along with a symbol such as "?" on the display 120.

As another example, when a user continuously commands services to the robot 1, a tired facial expression may be displayed along with a picture representing sweat.

As another example, when a user does not command the robot 1 for a preset time or longer, a sleeping facial expression may be displayed.

In addition to the above examples, the robot 1 can express various emotions on the display 120, and expressions that can be displayed may be improved or added through a software update or the like.

In this manner, the robot 1 can provide a pet robot service that displays emotions to a user and interacts with the user, which has an effect of providing emotional stability to the user.

The robot 1, as described above, may display emotions visually by showing facial expressions on the display 120, and additionally, may display emotions through voice output of a speaker 450.

For example, a laughing sound, a surprised sound, or the like may be output in response to the expression displayed on the display 120.

In addition, the robot 1, as described above, may display emotions visually by showing facial expressions on the display 120, and additionally, may display emotions through rotation of an arm 400.

For example, along with displaying a smiling expression on the display 120, emotions may be displayed by waving the arm 400.

Meanwhile, a shape displayed on the display 120 in a state where the robot mask 500 is coupled may be changed according to a shape of the robot mask 500.

Specifically, the control unit 700 of the robot 1 may receive information regarding the shape of the mask 500 through a mask communication portion 530. For example, information regarding the shape is recorded in each robot mask 500, and the control unit 700 may receive the information regarding the shape of the robot mask 500 from the mask communication portion 530 of the robot mask 500. At this time, graphic user interface (GUI) information according to the shape of each mask 500 is stored in a memory 720. Further, the control unit 700 may control a GUI corresponding to the shape of the robot mask 500 to be displayed on the display 120. Therefore, in a state where the robot mask 500 and the robot body 100 are coupled, the display 120 can display the GUI, and the GUI displayed on the display 120 passes through the window 550 and can be seen from the outside of the robot mask 500.

Meanwhile, a user can directly select a GUI through an input unit 125. Further, the control unit 700 may control the GUI input from the user to be displayed on the display 120.

With this configuration, a user can customize an outer appearance of the robot 1 by purchasing a robot mask 500 that fits their taste or selecting their preferred GUI.

### Functional Module:

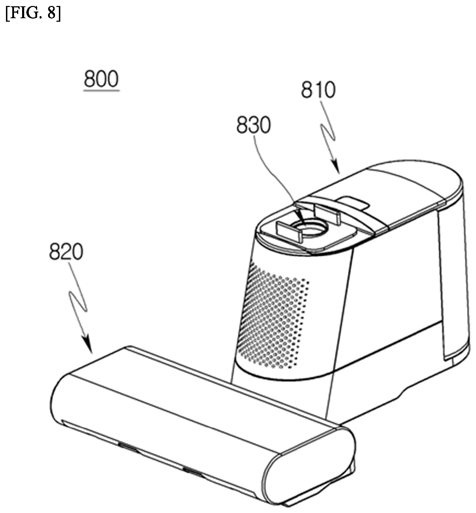

FIG. 8 is a perspective view for explaining a functional module in a robot system according to an embodiment of the present invention.

As shown in FIG. 8, a robot 1 of the present invention includes a functional module 800. The functional module 800 is a component that imparts various functions to the robot 1 by being coupled to a lower side of a robot body 100.

The functional module 800 is detachably coupled to the robot body 100. For example, the functional module 800 may be detachably coupled to a lower portion of the robot body 100. Specifically, the functional module 800 may be coupled with a module coupling portion 150 disposed on the lower portion of the robot body 100.

In particular, since the robot 1 of the present invention is a two-wheeled robot, a space in which the functional module 800 is to be coupled is formed between a pair of wheels 310 and a leg portion 200, which has an advantage that the overall volume does not significantly increase even in a state where the robot body 100 and the functional module 800 are coupled.

In addition, through this arrangement, when the functional module 800 is coupled to the robot body 100, not only the pair of wheels 310 but also the functional module 800 may contact the ground, thereby increasing the number of points and a supported area where the ground and the robot 1 contact each other to be supported. Therefore, according to the functional module 800 of the present invention, there is an effect that it is coupled with the robot body 100 to easily maintain balance of the robot 1.

The functional module 800 may be provided with a structure corresponding to the module coupling portion 150 of the robot body 100. For example, the functional module 800 may be provided with a coupling portion 830 detachably coupled with the module coupling portion 150 of the robot body 100. In addition, the functional module 800 may be provided with a robot-corresponding terminal 840 corresponding to a robot terminal 170 of the robot body 100. The robot-corresponding terminal 840 may contact the robot terminal 170 of the robot body 100 to receive power from the robot body 100, and may transmit and receive electrical signals to and from the robot body 100.

Although not shown, the functional module 800 may be provided with a lamp. The lamp may inform a location of the functional module 800 through light emission. For example, the lamp may be an infrared (IR) light emitting diode (LED). With this configuration, an IR sensor 620 disposed on the robot body 100 can detect the location of the functional module 800, and the robot body 100 can travel toward the functional module 800.

The functional module 800 may include various configurations depending on functions.

If different functional modules 800 are provided respectively, a user can add or change services provided by the robot 1 according to the present invention by replacing the functional module 800 as needed.

As shown in FIG. 8, a functional module 800 may be a cleaning module.

The functional module 800 includes a module body 810, a suction nozzle 820, and a coupling portion 830. With this configuration, when the functional module 800 is coupled to a robot body 100, a robot 1 can perform dry cleaning.

The functional module 800 may be detachably coupled to the robot 1. That is, the module body 810 may be detachably coupled to the robot body 100 through the coupling portion 830. Although not shown, a suction flow path capable of sucking dust may be formed inside the module body 810.

The suction nozzle 820 capable of sucking external dust may be provided at a front of the module body 810.

Further, a dust bin (not shown) capable of storing sucked dust may be disposed inside the module body 810.

The dust bin may provide a space capable of storing dust sucked through the suction nozzle 820, and the dust bin may be formed in a shape similar to a cylindrical shape. At least a portion of one side surface of the dust bin may be in a form that is selectively opened. Accordingly, when the one side surface of the dust bin is opened, dust inside the dust bin may be discharged through the opened surface of the dust bin.

As an example, the dust bin may be in a form in which at least a portion of a lower side surface thereof is opened. Here, the lower side surface of the dust bin may mean a surface facing a suction portion 940 of a station 900 when the functional module 800 is docked with the station 900. The lower side surface of the dust bin may mean a rear surface of the functional module 800. Accordingly, when the functional module 800 is docked with the station 900, the lower side surface of the dust bin may communicate with the suction portion 940 of the station 900.

As another example, a discharge cover (not shown) may be disposed on the lower side surface of the dust bin. The discharge cover may be provided to open and close one end portion in a longitudinal direction of a dust bin body. Specifically, the discharge cover may selectively open and close a lower portion of the dust bin that opens downward. In addition, the discharge cover may include a cover body (not shown) and a hinge portion (not shown). The cover body may be formed to block a portion of the lower side surface of the dust bin body. The cover body may rotate downward with respect to the hinge portion. A torsion spring (not shown) may be provided on the hinge portion. Accordingly, when the discharge cover is separated from the dust bin body, the cover body can be supported in a state rotated by a predetermined angle or more about the hinge portion as an axis from the dust bin body by elastic force of the torsion spring. The discharge cover may be coupled with the dust bin through hook-coupling. Meanwhile, the discharge cover may be separated from the dust bin through a coupling lever (not shown). The coupling lever may be disposed at a front of the dust bin. Specifically, the coupling lever may be disposed on a front-side outer surface of the dust bin. When an external force is applied, the coupling lever may elastically deform a hook extending from the cover body so as to release the hook-coupling between the cover body and the dust bin body. When the discharge cover is closed, the lower side surface of the dust bin may be blocked (sealed) by the discharge cover.

As still another example, a check valve (not shown) may be disposed on the lower side surface of the dust bin. The check valve may open the dust bin when a suction force acts from the outside of the dust bin, and may close the dust bin when the suction force does not act.

A motor (not shown) providing suction force of air may be provided inside the module body 810. At this time, a wheel may be provided on a bottom surface of the module body 810.

In addition, the suction nozzle 820 may suck air and dust while moving along the ground (floor surface). A suction port may be formed on a bottom surface of the suction nozzle 820. Further, an agitator may be provided around the suction port. Further, a wheel may be provided on the bottom surface of the suction nozzle 820. Further, a motor providing driving force to the agitator and/or the wheel may be further provided inside the module body 810.

The coupling portion 830 is disposed on an upper portion of the module body 810 and is coupled to the robot body 100. Specifically, the coupling portion 830 may be disposed at a front upper side of the module body 810. The coupling portion 830 may be detachably coupled with the module coupling portion 150 of the module body 810. For example, the coupling portion 830 may include at least a portion made of a metal material or an electromagnet. As another example, the coupling portion 830 including a hook or the like may be hook-coupled to the module body 810. In this case, a coupling force between the module body 810 and the robot body 100 can be strengthened.

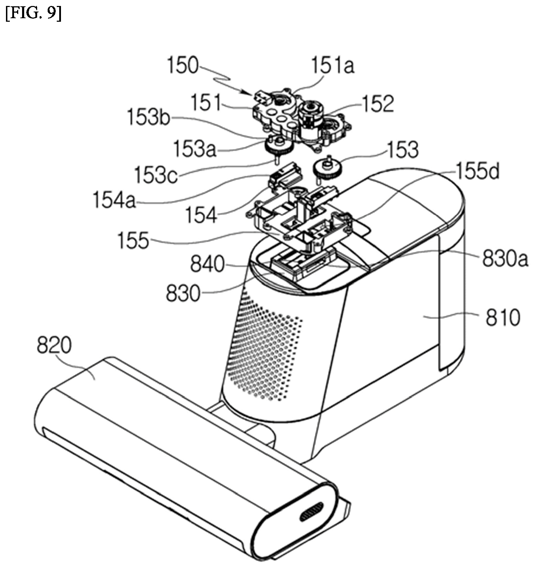

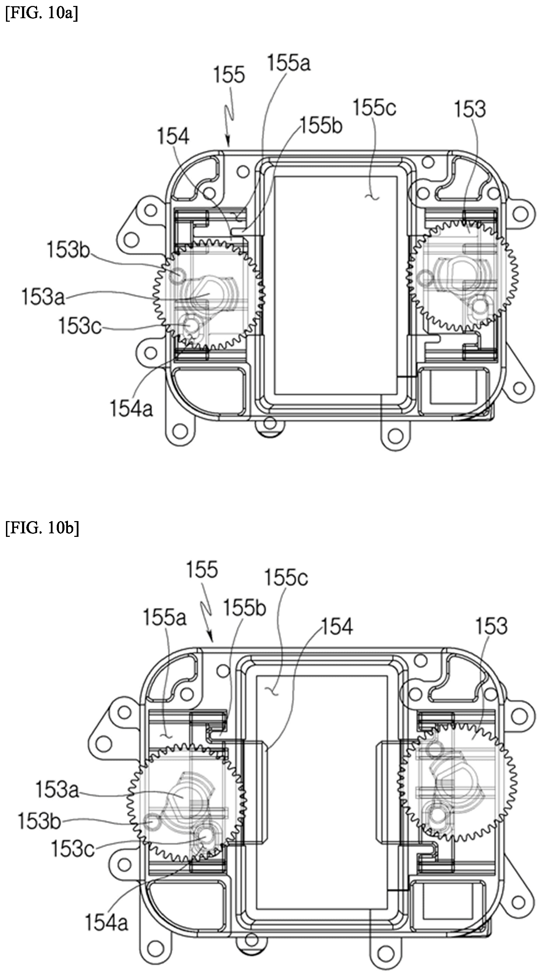

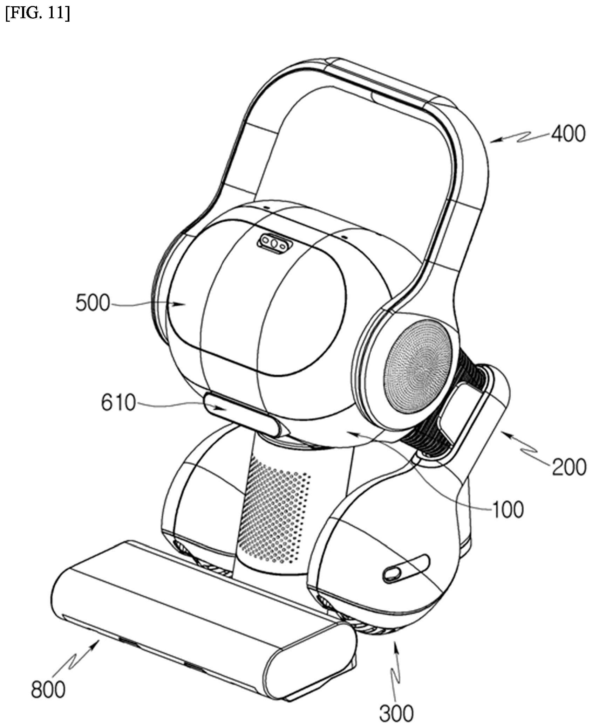

Meanwhile, FIG. 9 shows an exploded view for explaining a coupling structure between a module coupling portion of a robot and a coupling portion of a functional module according to an embodiment of the present invention, FIGS. 10A and 10B show views for explaining an operating principle of the module coupling portion of the robot according to the embodiment of the present invention, and FIG. 11 shows a view for explaining a state in which the robot and the functional module are coupled in a robot system according to an embodiment of the present invention.

Hereinafter, the coupling structure between a coupling portion 830 and a module coupling portion 150 will be described in detail with reference to FIG. 9, FIGS. 10A and 10B, and FIG. 11.

In the robot system according to the embodiment of the present invention, the module coupling portion 150 and the coupling portion 830 may have a structure in which they are latch-coupled to each other, whereby a robot 1 and a functional module 800 may be detachably coupled.

Specifically, the module coupling portion 150 of the robot 1 according to the embodiment of the present invention may include a power transfer portion 151, a drive motor 152, a rotating gear 153, a coupling hook 154, and a hook support portion 155.

At least a portion of the power transfer portion 151 may be accommodated in an inner space of a robot body 100. More specifically, the power transfer portion 151 may be accommodated in the inner space of the robot body 100 together with the drive motor 152 that generates rotational power of the rotating gear 153.

The power transfer portion 151 may be composed of a plurality of power transfer members so as to transfer power generated by rotation of the drive motor 152 to the rotating gear 153. As an example, the power transfer portion 151 may be composed of a combination of gear components that directly mesh with each other. As another example, the power transfer portion 151 may be composed of a belt and a pulley.

The rotating gear 153 may receive the rotational power of the drive motor 152 to rotate. The rotating gear 153 may be indirectly connected to the drive motor 152 through other gear components connected to the drive motor 152, or may be coaxially connected to a rotation shaft of the drive motor 152 according to an arrangement of the drive motor 152.

The rotating gear 153 may include a rotation shaft 153a, a first shaft 153b, and a second shaft 153c. The rotating gear 153 may rotate around the rotation shaft 153a. The first shaft 153b may be disposed on an upper side of the rotating gear 153, and the second shaft 153c may be disposed on a lower side of the rotating gear 153.

The rotating gear 153 may be accommodated in an inner space of the power transfer portion 151. The first shaft 153b may penetrate a first shaft guide hole 151a formed on an upper side of the power transfer portion 151. The second shaft 153c may penetrate a second shaft guide hole formed on a lower side of the power transfer portion 151.

The first shaft guide hole 151a and the second shaft guide hole may be formed in a curved shape. For example, the first shaft guide hole 151a and the second shaft guide hole may be formed in an arc shape or a semi-circular shape. Accordingly, when the drive motor 152 is driven, the first shaft 153b may move along the first shaft guide hole 151a, and the second shaft 153c may move along the second shaft guide hole.

The coupling hook 154 is configured to move linearly so as to be latch-coupled with the coupling portion 830 of the functional module 800, and serves to fix the functional module 800 to the robot body 100. The coupling hook 154 may receive the rotational power of the drive motor 152 through the rotating gear 153 to be inserted into or removed from a coupling hole 830a of the functional module 800.

In order to allow the robot 1 and the functional module 800 to be stably coupled, a pair of coupling hooks 154 may be provided, and a pair of coupling holes 830a may be formed on both sides of the coupling portion 830 so as to correspond to the coupling hooks 154.

The second shaft 153c that has penetrated the second shaft guide hole may be inserted into a second shaft insertion hole 154a of the coupling hook 154. A size or a cross-sectional area of the second shaft insertion hole 154a may be formed larger than a size or a cross-sectional area of the second shaft 153c.

Referring to FIGS. 10A and 10B, when the robot 1 and the functional module 800 are to be coupled, the drive motor 152 is driven so that the rotating gear 153 rotates in a counterclockwise direction around the rotation shaft 153a, and accordingly, the second shaft 153c may push the coupling hook 154 to pass through a through-hole 155d. At this time, since a size of the through-hole 155d may be formed to correspond to the coupling hole 830a, if the hook support portion 155 is seated on the coupling portion 830, the coupling hook 154 that has passed through the through-hole 155d may be inserted into the coupling hole 830a.

Conversely, when the coupling between the robot 1 and the functional module 800 is to be released, the drive motor 152 is driven so that the rotating gear 153 rotates in a clockwise direction around the rotation shaft 153a, and accordingly, the second shaft 153c may pull the coupling hook 154 to separate it from the coupling hole 830a.

Meanwhile, the coupling hook 154 may be disposed in a hook accommodation space 155a inside the hook support portion 155. The hook support portion 155 is for converting a rotational movement of the rotating gear 153 into a linear movement of the coupling hook 154, and may be disposed below the power transfer portion 151.

The hook support portion 155 may include a guide member 155b. The guide member 155b is configured to guide the linear movement of the coupling hook 154, and the guide member 155b may support an outside of the coupling hook 154. For example, the coupling hook 154 may be formed in a hexahedral shape, and a pair of guide members 155b may be provided to support both sides of the coupling hook 154.

The guide member 155b may be configured to surround at least a portion of the coupling hook 154 or may be configured to support at least a portion of the coupling hook 154. Accordingly, even when the drive motor 152 is driven to rotate the rotating gear 153, the coupling hook 154 does not rotate together with the rotating gear 153 but may move linearly along the guide member 155b.

The hook support portion 155 may include a module accommodation space 155c. The coupling portion 830 of the functional module 800 may be disposed in the module accommodation space 155c. At this time, when the coupling hook 154 moves linearly to penetrate the through-hole 155d of the hook support portion 155, at least a portion of the coupling hook 154 may be disposed in the module accommodation space 155c. That is, as the coupling hook 154 is inserted into or latched with the coupling hole 830a of the coupling portion 830 disposed in the module accommodation space 155c, the robot 1 and the functional module 800 may be physically coupled.

Meanwhile, in the present embodiment, the functional module 800 may be coupled below the robot body 100. The robot body 100 is disposed above the functional module 800 and may move together with the functional module 800. The functional module 800 may change a traveling direction according to movement of the robot body 100. This may look as if the robot body 100 is riding on top of the functional module 800 to perform cleaning when viewed by a user.

Meanwhile, the functional module 800 may be configured such that a rear thereof is heavier than a front thereof where a suction nozzle 820 is disposed, based on a coupling portion 830. Although not shown, a motor having a relatively heavier weight compared to other components may be disposed inside a rear portion of a module body 810. In addition, although not shown, in the present embodiment, a weight for increasing a weight of the functional module 800 may be further disposed inside the rear portion of the module body 810.

Accordingly, the functional module 800 is coupled with the robot body 100 and may be lifted together when the robot body 100 is moved upward.

When the functional module 800 is lifted by the robot body 100, a front end of the functional module 800 may be lifted higher than a rear end thereof.

In addition, although not shown, the functional module 800 may be a transport module including a support plate capable of supporting an object and transport wheels coupled below the support plate to roll on the ground. Alternatively, the functional module 800 may be a wet mop module including a pair of mops rotating around a rotation axis and a water tank storing water supplied to the mops. Alternatively, the functional module 800 may include an arm and a gripper.

### Station:

Stations 900, 1900, 2900, and 3900 according to first to fourth embodiments of the present invention may include a seating module 922, 1920, 2920, and 3920 and a drive unit 923, 1980, 2980, and 3980.

The seating module 922, 1920, 2920, and 3920 may be an inclined portion 922, a rotating portion 1920, a sliding portion 2920, or a transfer portion 3920. A robot 1 may be seated on the seating module 922, 1920, 2920, and 3920 in a process in which the robot 1 is docked with the station 900, 1900, 2900, and 3900 or in a process in which the robot 1 leaves from the station 900, 1900, 2900, and 3900.

The drive unit 923, 1980, 2980, and 3980 may selectively drive the seating module 922, 1920, 2920, and 3920 depending on whether the robot 1 is seated on the seating module 922, 1920, 2920, and 3920.

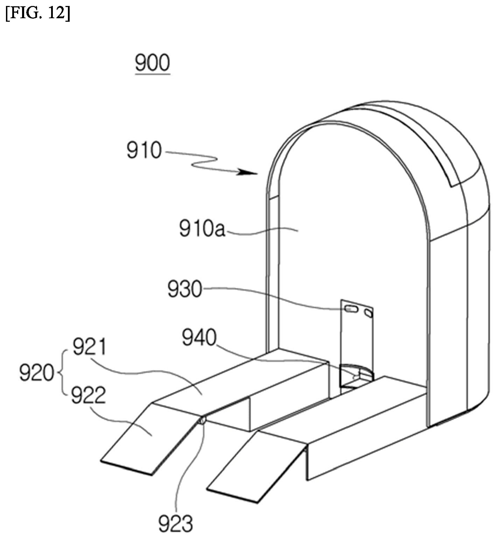

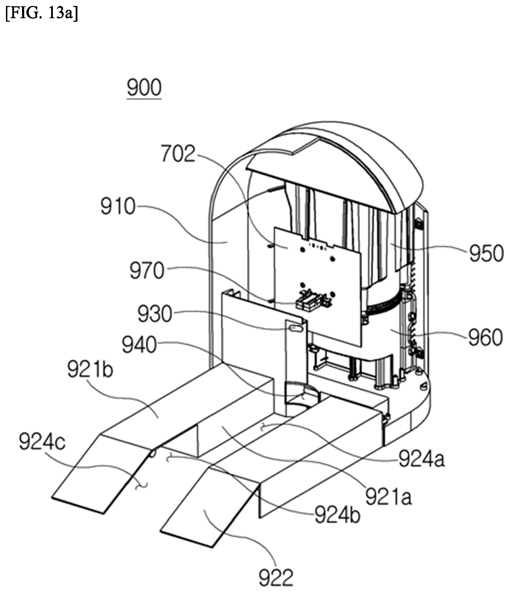

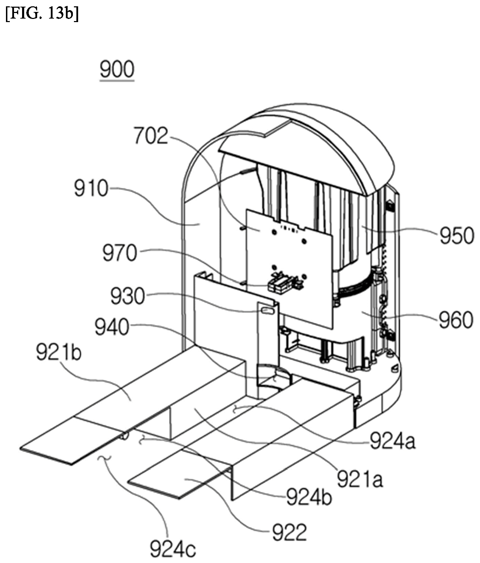

FIG. 12 is a perspective view of a station according to a first embodiment of the present invention, and FIGS. 13A and 13B are exploded views in which some components of the station according to the first embodiment of the present invention are exploded.

Referring to FIG. 12, FIGS. 13A and 13B, a station according to the first embodiment of the present invention will be described as follows.

A robot system according to the first embodiment of the present invention may include a station 900. The station 900 may charge at least one of the robot 1 and a functional module 800. As an example, in a state where the functional module 800 is docked with the station 900, the station 900 may supply power to the functional module 800 to charge the same. As another example, in a state where the functional module 800 electrically coupled with the robot 1 is docked with the station 900, the station 900 may supply power to the functional module 800 and the robot 1 to charge the same.

Meanwhile, in the present specification, a state in which the functional module 800 is docked with the station 900 may mean a state in which a station-corresponding terminal of the functional module 800 and a station terminal 930 of the station 900 are electrically coupled to each other and/or a state in which a dust bin of the functional module 800 and a suction portion 940 of the station 900 communicate with each other.

The station 900 may include a station body 910, a base 920, a station terminal 930, a suction portion 940, a dust collection unit 950, and a dust collection motor 960.

Components constituting the station 900 may be coupled to the station body 910. For example, the base 920 may be coupled to the station body 910. In addition, some components constituting the station 900 may be accommodated inside the station body 910.

The base 920 is a configuration on which the robot 1 can climb and be seated, and the seating module of the station 900 according to the first embodiment of the present invention may be the inclined portion 922. The robot 1 may be seated on the base 920 in a process in which the robot 1 is docked with the station 900 or in a process in which the robot 1 leaves from the station 900.

The base 920 may be connected to the station body 910. In addition, the base 920 and the station body 910 may be disposed on the ground.

The base 920 may include a pair of inclined portions 922 and a pair of seating portions 921.

The seating portion 921 is a configuration on which the robot 1 having climbed the inclined portion 922 is seated, and may be disposed on the station body 910. Specifically, the seating portion 921 may extend in a horizontal direction from a front portion 910a of the station body. Here, the front portion 910a of the station body may mean a surface which a rear surface of the robot 1 faces in a state where the robot 1 is seated on the seating portion 921. The seating portion 921 may be arranged in parallel with the ground in a state where the station 900 is disposed on the ground.

In a state where the functional module 800 is docked with the station 900, the seating portions 921 may be provided as a pair protruding while being spaced apart from the front portion 910a of the station. In addition, in a state where the functional module 800 is docked with the station 900, at least a portion of a module body 810 may be disposed between the pair of seating portions 921. Further, the pair of seating portions 921 may be connected to upper end portions of the inclined portions 922, respectively.

The seating portion 921 may include a support member 921a and a seating plate 921b.

The support member 921a is a configuration in contact with the ground and can support the entire base 920. The support member 921a may be formed in a hexahedral shape and may be provided as a pair protruding from the front portion 910a of the station body.

Between the support members 921a, a first space 924a in which the module body 810 is disposed when the functional module 800 is docked with the station 900 may be formed.

The seating plate 921b may be formed in a plate shape on which the robot 1 having climbed the inclined portion 922 can be seated. One side of the seating plate 921b may be connected to an upper end portion of the inclined portion 922, and another side thereof may be connected to an upper end portion of the support member 921a.

Below the seating plate 921b, a second space 924b in which a suction nozzle 820 is disposed when the functional module 800 is docked with the station 900 may be formed.

The inclined portion 922 may be rotatably coupled to the seating portion 921. As the inclined portion 922 is rotatably coupled to the seating portion 921, an inclination angle of the inclined portion 922 with respect to the seating portion 921 can be adjusted.

The inclined portion 922 may be disposed at an entrance where the robot 1 climbs. The inclined portion 922 may have an upward inclination toward a direction in which the robot 1 enters.

The inclined portion 922 may be rotatably coupled to the seating portion 921. The inclined portion 922 may rotate in a vertical direction around an end portion of the seating portion 921.

In a state where the robot 1 climbs the inclined portion 922, the inclined portion 922 may be arranged to contact the ground. In a state where the inclined portion 922 is in contact with the ground, the inclined portion 922 may extend in a direction intersecting the horizontal direction.

Below the inclined portion 922, a third space 924c through which the suction nozzle 820 can move when the inclined portion 922 is driven to rotate upward in the horizontal direction may be formed.

The base 920 may include a drive unit 923 for adjusting the inclination angle of the inclined portion 922. The drive unit 923 may selectively rotate the inclined portion 922 depending on whether the robot 1 is seated on the inclined portion 922.

For example, the drive unit 923 may be a motor that provides power for rotating the inclined portion 922. The drive unit 923 may adjust the inclination angle of the inclined portion 922 by rotating the inclined portion 922 with respect to the seating portion 921.

By driving of the drive unit 923, the inclined portion 922 may contact the ground to form an inclination (see FIG. 13A), or may extend horizontally from the seating portion 921 (see FIG. 13B).

In a state where the functional module 800 is docked with the station 900, at least a portion of the functional module 800 may be disposed between the pair of seating portions 921. Specifically, in a state where the functional module 800 is docked with the station 900, at least a portion of the module body 810 of the functional module 800 may be disposed between the pair of seating portions 921.

When the functional module 800 is the cleaning module, in a state where the functional module 800 is coupled to the robot 1, the module body 810 may be disposed between left and right wheels 310 of the robot 1.

When the functional module 800 is the cleaning module, in a state where the functional module 800 is coupled to the robot 1, the module body 810 may be disposed between the pair of seating portions 921.

That is, the inclined portion 922 and the seating portion 921 may form a moving path of the robot 1.

In a state where the inclined portion 922 is rotated to contact the ground, a longitudinal direction of the inclined portion 922 may intersect a longitudinal direction (horizontal direction) of the seating portion 921.

The station 900 may include a station terminal 930. The station terminal 930 may charge at least one of the robot 1 and the functional module 800. The station terminal 930 may be disposed on the front portion 910a of the station body.

The station terminal 930 may be electrically connected to the station-corresponding terminal of the functional module 800. The functional module 800 may receive power from the station 900 through the station-corresponding terminal. Further, the power supplied to the station-corresponding terminal may be supplied to a battery inside the functional module 800.

When the functional module 800 and the robot 1 are electrically connected, and the functional module 800 and the station 900 are electrically connected, a battery B of the robot 1 may receive power from the station 900 through the functional module 800 to be charged.

As an example, in a state where the robot-corresponding terminal 840 of the functional module 800 is in contact with the robot terminal 170 of the robot 1, when the station-corresponding terminal of the functional module 800 comes into contact with the station terminal 930 of the station 900, the battery B of the robot 1 may receive power from the station 900 through the functional module 800 to be charged. That is, when the functional module 800 is electrically connected to the station 900 in a state of being coupled to the robot 1, the battery B of the robot 1 may receive power from the station 900 through the functional module 800 to be charged.

As another example, in a state where the station-corresponding terminal of the functional module 800 is in contact with the station terminal 930 of the station 900, when the robot-corresponding terminal 840 of the functional module 800 comes into contact with the robot terminal 170 of the robot 1, the battery B of the robot 1 may receive power from the station 900 through the functional module 800 to be charged.

In addition, the station 900 may transmit and receive electrical signals to and from the functional module 800 through the station terminal 930.

Here, the station-corresponding terminal of the functional module 800 may be disposed on a rear side of the module body 810. That is, a position of the station-corresponding terminal of the functional module 800 may be arranged at a position facing the station terminal 930 of the station 900.

A robot terminal 170 of a robot 1 may be electrically connected to a robot-corresponding terminal 840 of a functional module 800.

The robot 1 may receive power from the functional module 800 through the robot terminal 170.

When a station-corresponding terminal of the functional module 800 and a station terminal 930 of a station 900 are electrically connected, and the robot-corresponding terminal 840 of the functional module 800 and the robot terminal 170 of the robot 1 are electrically connected, a battery B of the robot 1 may receive power from the station 900 through the functional module 800.

Power is supplied from the station 900 to the functional module 800, and the power supplied to the functional module 800 is transferred to the robot 1, so that the battery B of the robot 1 may be charged.

The robot 1 may transmit and receive electrical signals to and from the functional module 800 through the robot terminal 170.

The robot-corresponding terminal 840 of the functional module 800 may be disposed on an upper side of a module body 810. That is, a position of the robot-corresponding terminal 840 of the functional module 800 may be arranged at a position facing the robot terminal 170 of the robot 1.

The station 900 may include a suction portion 940.

The suction portion 940 may be formed on a front portion 910a of a station body to allow external air to flow inward. As shown in FIGS. 13A and 13B, the suction portion 940 may be disposed below the station terminal 930, but alternatively, the suction portion 940 may be disposed above the station terminal 930.

The suction portion 940 may suck dust from a dust bin of the functional module 800. The dust in the dust bin of the functional module 800 may pass through the suction portion 940 to flow into a dust collection unit 950. The suction portion 940 may be formed in a hole shape corresponding to a shape of the dust bin so that the dust in the dust bin of the functional module 800 flows into the dust collection unit 950.

The station 900 may include a suction flow path (not shown).

The suction flow path may connect the suction portion 940 and the dust collection unit 950. One end of the suction flow path may communicate with the suction portion 940, and another end of the suction flow path may communicate with the dust collection unit 950. The dust in the dust bin of the functional module 800 may move to the dust collection unit 950 through the suction flow path. The suction flow path may be disposed at a rear side of the suction portion 940. The suction flow path may mean a space between the suction portion 940 and the dust collection unit 950. The suction flow path may be a space formed toward the rear side from the suction portion 940, and may be a flow path formed to be bent upward from the suction portion 940 so that dust and air can flow.

The station 900 may include the dust collection unit 950.

The dust collection unit 950 may collect the dust sucked through the suction portion 940. The dust collection unit 950 may be disposed inside a station body 910.

As an example, the dust collection unit 950 may mean a dust bag that collects dust sucked from the inside of the dust bin of the functional module 800 by a dust collection motor 960.

The dust collection unit 950 may be detachably coupled to the station body 910.

Accordingly, the dust collection unit 950 may be separated from the station body 910 to be discarded, and a new dust collection unit 950 may be coupled to the station body 910. That is, the dust collection unit 950 may be defined as a consumable part.

The dust bag may be provided such that its volume increases and dust is accommodated therein when a suction force is generated by the dust collection motor 960.

To this end, the dust bag may be made of a material that allows air to pass through but does not allow foreign substances such as dust to pass through. As an example, the dust bag may be made of a non-woven fabric material, and may have a hexahedral shape based on when its volume is increased.

Alternatively, the dust bag may be formed of a permeable material. For example, the dust bag may include a roll vinyl (not shown). With this configuration, when the dust bag is sealed or joined, the dust or odor collected inside the dust bag can be prevented from leaking out of the dust bag. At this time, the dust bag may be mounted to the station body 910 through a dust bag cartridge (not shown). If necessary, the dust bag may be replaced through the dust bag cartridge.

Therefore, since there is no need for a user to separately tie a bag or the like in which dust is collected, user convenience can be improved.

The station 900 may include the dust collection motor 960.

The dust collection motor 960 may be disposed inside the station body 910. The dust collection motor 960 may be disposed below the dust collection unit 950.

The dust collection motor 960 may provide a suction force to the suction portion 940. The dust collection motor 960 may generate a suction force in the suction flow path. Through this, the dust collection motor 960 may provide a suction force capable of sucking dust in the dust bin of the functional module 800.

The dust collection motor 960 may generate a suction force by rotation. As an example, the dust collection motor 960 may be formed in a shape similar to a cylinder.

Meanwhile, in the present embodiment, an imaginary dust collection motor axis extending a rotation shaft of the dust collection motor 960 may be formed. For example, the dust collection motor 960 axis may be arranged perpendicular to the ground.

A first filter (not shown) may be disposed between the dust collection unit 950 and the dust collection motor. The first filter (not shown) may be a pre-filter.

A second filter (not shown) may be disposed between the dust collection motor 960 and the station body 910. The second filter (not shown) may be a HEPA filter.

The station 900 may include an exhaust port (not shown).

The exhaust port may be formed in the station body 910. For example, the exhaust port may be formed at a lower rear side of the station body 910 and may be fluidly connected to the dust collection motor 960. Therefore, air sucked from the suction portion 940, passed through the dust collection unit 950, and passed through the dust collection motor 960 may be discharged to the outside of the station body 910 through the exhaust port.

The station 900 may include an IR transmitter 970.

The IR transmitter 970 may be disposed on the front portion 910a of the station body. Although the optical signal emitted from the IR transmitter has been described by taking an IR signal as an example, it is not limited thereto, and may be replaced with any one of a laser optical signal, an ultrasonic signal, a carrier frequency, and an impulse signal depending on the type of a light source. Hereinafter, these will be collectively referred to as an optical signal, an IR optical signal, or an IR signal.

The IR transmitter 970 may be disposed on the station body 910. The IR transmitter 970 may be a device that transmits an infrared ray having a specific infrared wavelength band, for example, a specific wavelength having 25 micrometers or more, or a wavelength of a specific wavelength band.

The IR transmitter 970 may inform a location of the station 900 through light emission. The optical signal emitted from the IR transmitter 970 may be irradiated to an IR sensor 620 of a robot body 100.

With this configuration, the IR sensor 620 disposed on the robot body 100 can detect the location of the station 900, and the robot body 100 can travel toward the station 900.

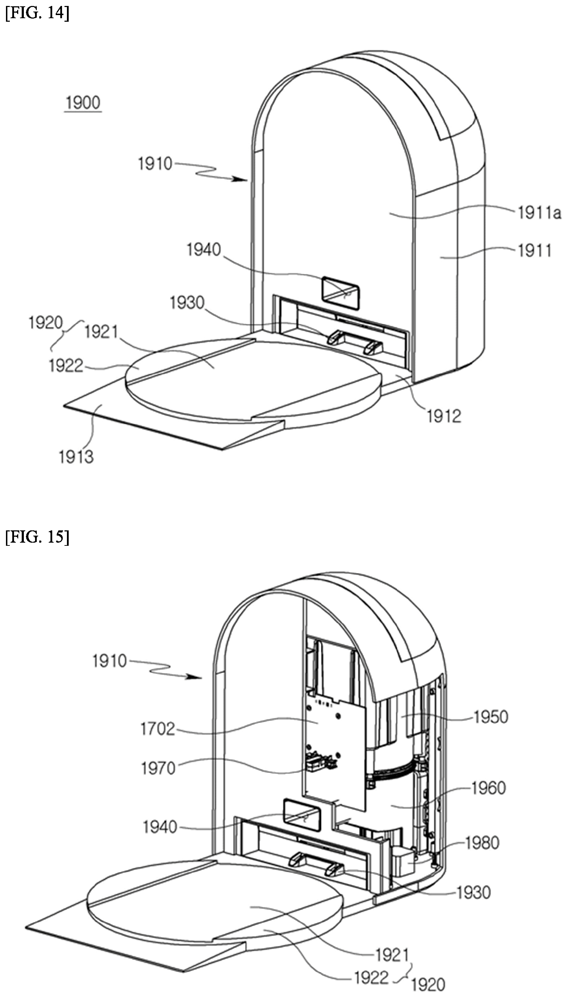

FIG. 14 is a perspective view of a station according to a second embodiment of the present invention, and FIG. 15 is an exploded view in which some components of the station according to the second embodiment of the present invention are exploded.

Referring to FIGS. 14 and 15, a station of a robot system according to the second embodiment of the present invention will be described as follows.

A station 1900 of the robot system according to the second embodiment of the present invention may include a station body 1910, a rotating portion 1920, a station terminal 1930, a suction portion 1940, a suction flow path (not shown), a dust collection unit 1950, a dust collection motor 1960, and an IR transmitter 1970.

Meanwhile, in order to avoid duplicate description, other configurations except for those specifically mentioned in the second embodiment of the present invention may refer to the contents of the station 900 according to the first embodiment of the present invention.

Specifically, the station body 1910, the station terminal 1930, the suction portion 1940, the suction flow path (not shown), the dust collection unit 1950, the dust collection motor 1960, and the IR transmitter 1970 of the station 1900 according to the second embodiment of the present invention may respectively refer to the contents of the station body 910, the station terminal 930, the suction portion 940, the suction flow path (not shown), the dust collection unit 950, the dust collection motor 960, and the IR transmitter 970 of the station 900 according to the first embodiment of the present invention.

The station body 1910 of the station 1900 according to the second embodiment of the present invention may include a housing 1911, a base 1912, and an inclined member 1913.

The housing 1911 has a space therein, and each component constituting the station 1900 may be accommodated therein. For example, some components constituting the station 1900, such as the suction flow path (not shown), the dust collection unit 1950, the dust collection motor 1960, and the IR transmitter 1970, may be accommodated inside the housing 1911.

The base 1912 may be coupled to the housing 1911. The base 1912 is connected to the housing 1911 and may be horizontally arranged in parallel with the ground. The base 1912 may extend in a horizontal direction from a front portion 1911a of the housing.

The station body 1910 may include the inclined member 1913 disposed at an entrance where the robot 1 climbs. The inclined member 1913 may be disposed to be inclined with respect to the rotating portion 1920. The inclined member 1913 may extend from a front end portion of the base 1912.

The inclined member 1913 may have an upward inclination toward a direction in which the robot 1 enters. More specifically, a front end portion of the inclined member 1913 on an entrance side where the robot 1 climbs is connected to the ground without a height difference, but may have an inclination that ascends toward the direction in which the robot enters. Accordingly, the robot 1 can easily climb onto the station 1900 from the ground.

The seating module of the station 1900 according to the second embodiment of the present invention may be the rotating portion 1920. The robot 1 may be seated on the rotating portion 1920 in a process in which the robot 1 is docked with the station 1900 or in a process in which the robot 1 leaves from the station 1900. The rotating portion 1920 may be relatively rotatably coupled to the station body 1910. Specifically, the rotating portion 1920 may be rotatably coupled to the base 1912. As an example, the rotating portion 1920 may be formed in a circular flat plate shape.

The rotating portion 1920 may be disposed on an upper portion of the base 1912. The rotating portion 1920 may be rotatably coupled to the base.

The rotating portion 1920 may rotate in a clockwise direction or a counterclockwise direction around a rotation shaft disposed in a vertical direction at a center of the rotating portion 1920. As an example, in a state where the robot 1 is seated on the rotating portion 1920, the rotating portion 1920 may rotate 180 degrees together with the robot 1. As another example, in a state where the robot 1 is coupled with the functional module 800 and seated on the rotating portion 1920, the rotating portion 1920 may rotate 180 degrees together with the robot 1 and the functional module 800. As a result, the robot 1 can easily climb by moving forward even when climbing the station 1900 for charging and/or emptying a dust bin of the functional module 800, and can easily leave by moving forward even when leaving from the station 1900 after the charging and/or emptying the dust bin of the functional module 800 is completed. That is, the robot system according to the second embodiment of the present invention has an advantage that both entry to and departure from the station 1900 by the robot 1 are easy.

The rotating portion 1920 may include a seating plate 1921 on which a wheel 310 of the robot 1 is seated and a wheel guide portion 1922 guiding movement of the wheel 310 of the robot 1.

The seating plate 1921 may be configured such that at least any one of the robot 1 and the functional module 800 is seated thereon. The seating plate 1921 may be arranged in parallel with the ground in a state where the station 1900 is disposed on the ground.

The wheel guide portion 1922 may guide the movement of the wheel 310 of the robot 1. The wheel guide portion 1922 may be formed to protrude from both sides of the seating plate 1921. More specifically, an interval between the wheel guide portions 1922 is formed to be larger than an interval between outer surfaces of a pair of wheels 310, so that departure of the wheel 310 can be prevented. As a result, the wheel 310 of the robot 1 enters the station 1900, but left-right movement is limited by the wheel guide portion 1922, so that the wheel 310 can be guided to an exact position.

Meanwhile, the rotating portion 1920 may be rotated by power provided by a drive unit 1980. The drive unit 1980 may selectively rotate the rotating portion 1920 depending on whether the robot 1 is seated on the rotating portion 1920.

The drive unit 1980 may be disposed inside the station body 1910. As an example, the drive unit 1980 may be a rotation motor.

The station 1900 may further include a power transfer portion (not shown) that transfers power for rotating the rotating portion 1920.

The power transfer portion may be disposed inside the station body 1910. The power transfer portion may be accommodated in an inner space of the station body 1910 together with the drive unit 1980 that generates rotational power of the rotating portion 1920. Some components of the power transfer portion may be disposed inside the base 1912 and a body housing 1911, and other remaining components thereof may be disposed inside the rotating portion 1920.

The power transfer portion may be composed of a plurality of power transfer members so as to transfer power generated by rotation of the drive unit 1980 to the rotating portion 1920. For example, the power transfer portion may be composed of a belt and a pulley. However, the present invention is not limited thereto, and the power transfer portion may be composed of a combination of gear components that directly mesh with each other.

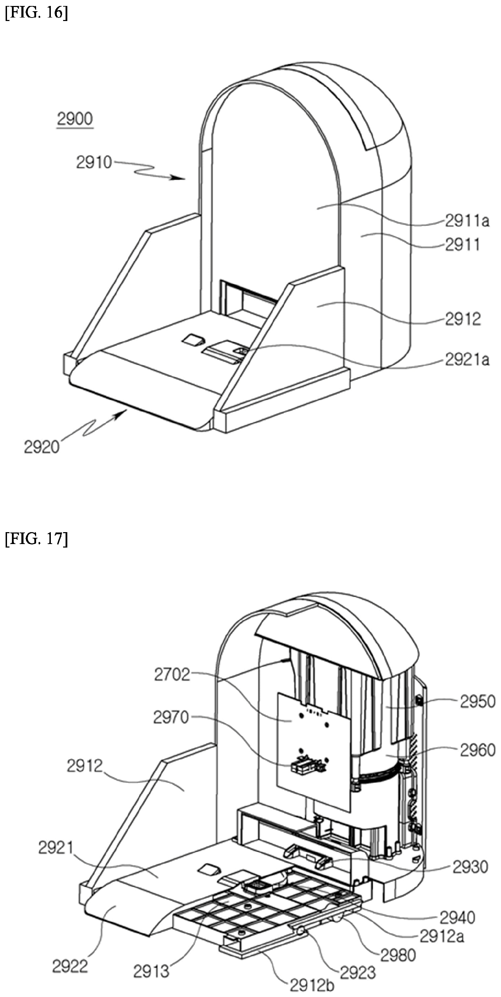

FIG. 16 is a perspective view of a station according to a third embodiment of the present invention, and FIG. 17 is an exploded view in which some components of the station according to the third embodiment of the present invention are exploded.

Referring to FIGS. 16 and 17, a station of a robot system according to the third embodiment of the present invention will be described as follows.

A station 2900 of the robot system according to the third embodiment of the present invention may include a station body 2910, a sliding portion 2920, a station terminal 2930, a suction portion 2940, a suction flow path (not shown), a dust collection unit 2950, a dust collection motor 2960, and an IR transmitter 2970.

Meanwhile, in order to avoid duplicate description, other configurations except for those specifically mentioned in the third embodiment of the present invention may refer to the contents of the station 1900 according to the first embodiment of the present invention.

Specifically, the station body 2910, the station terminal 2930, the suction portion 2940, the suction flow path (not shown), the dust collection unit 2950, the dust collection motor 2960, and the IR transmitter 2970 of the station 1900 according to the third embodiment of the present invention may respectively refer to the contents of the station body 910, the station terminal 930, the suction portion 940, the suction flow path (not shown), the dust collection unit 950, the dust collection motor 960, and the IR transmitter 970 of the station 900 according to the first embodiment of the present invention.

The station body 2910 of the station 2900 according to the third embodiment of the present invention may include a housing 2911 and a sidewall 2912.

The housing 2911 has a space therein, and each component constituting the station 21900 may be accommodated therein. For example, some components constituting the station 2900, such as the suction flow path (not shown), the dust collection unit 2950, the dust collection motor 2960, and the IR transmitter 2970, may be accommodated inside the housing 2911.

The sidewall 2912 may be coupled to the housing 2911. The sidewall 2912 may be disposed on both sides of a front portion 2911a of the housing 2911. When the housing 2911 is in contact with the ground, the sidewall 2912 may also be arranged to be in contact with the ground. At least a portion of the sidewall 2912 may be disposed on both sides of the sliding portion 2920.

The seating module of the station 2920 according to the third embodiment of the present invention may be the sliding portion 2920. The robot 1 may be seated on the sliding portion 2920 in a process in which the robot 1 is docked with the station 2900 or in a process in which the robot 1 leaves from the station 2900. The sliding portion 2920 may be slidably coupled to the station body 2910.

The sliding portion 2920 may include a seating member 2921 and an inclined member 2922.

The seating member 2921 may be disposed between the sidewalls 2912. The seating member 2921 may be slidably coupled to the sidewall 2912. The seating member 2921 may be horizontally arranged in parallel with the ground between the sidewalls 2912.

Meanwhile, a dust discharge port 2921a may be formed in the seating member 2921 of the station 2900 according to the third embodiment of the present invention. The dust discharge port 2921a may communicate with the suction portion 2940 disposed on the station body 2910.

The suction portion 2940 may be formed on a bottom plate 2913. The bottom plate 2913 may be formed to protrude forward from a lower end of the housing 2911. The bottom plate 2913 has a space therein, and at least a portion of the suction flow path (not shown) may be disposed therein. The suction flow path (not shown) may fluidly connect the suction portion 2940 and the dust collection unit 2950. A portion of the suction flow path (not shown) may be disposed inside the bottom plate 2913, and another remaining portion thereof may be disposed inside the housing 2911.

The dust bin of the functional module 800 may be opened toward a bottom surface, and when the functional module 800 is seated on the seating member 2921, the dust bin of the functional module 800 and the suction portion 2940 may communicate with each other. Therefore, when the dust collection motor 2960 is driven, dust inside the dust bin of the functional module 800 may sequentially flow through the dust discharge port 2921a, the suction portion 2940, and the suction flow path (not shown) to flow into the dust collection unit 2950.

The inclined member 2922 may be disposed to be inclined with respect to the seating member 2921. The inclined member 2922 may be formed to be inclined downward toward the ground from an end portion of the seating member 2921.

More specifically, a front end portion of the inclined member 2922 on an entrance side is connected without a height difference from the ground, but may have an inclination that ascends toward the seating member 2921. Accordingly, the robot 1 can easily climb onto the station 2900 from the ground.

Meanwhile, the station body 2910 may further include a guide rail 2912a, 2912b.

The guide rail 2912a, 2912b may guide the sliding movement of the sliding portion 2920. The guide rail 2912a, 2912b may be disposed inside the sidewall 2912. The guide rail 2912a, 2912b may extend in a front-rear direction of the sidewall 2912.

The guide rail 2912a, 2912b may include an upper guide rail 2912a and a lower guide rail 2912b. The upper guide rail 2912a and the lower guide rail 2912b may be arranged to be spaced apart by a predetermined distance.

A guide protrusion 2923 may be formed on both sides of the sliding portion 2920. Specifically, the guide protrusion 2923 may be formed on both sides of the seating member 2921.

A space in which the guide protrusion 2923 can slidably move may be formed between a lower end of the upper guide rail 2912a and an upper end of the lower guide rail 2912b. Therefore, the guide protrusion 2923 can guide the movement of the sliding portion 2920 while moving in the front-rear direction between the upper guide rail 2912a and the lower guide rail 2912b.

Meanwhile, the sliding portion 2920 may be moved by power provided by a drive unit 2980. The drive unit 2980 may selectively move the sliding portion 2980 depending on whether the robot 1 is seated on the sliding portion 2920.

The drive unit 2980 may be disposed inside the station body 2910. The drive unit 2980 may be disposed inside the bottom plate 2913. As an example, the drive unit 2980 may be a rotation motor.

The station 2900 may further include a power transfer portion (not shown) that transfers power for sliding the sliding portion 2920 in the front-rear direction.

The power transfer portion may be disposed below the sliding portion 2920. Specifically, the power transfer portion may be disposed inside the bottom plate 2913. The power transfer portion may be disposed in an inner space of the bottom plate 2913 together with the drive unit 2980 that generates movement power of the sliding portion 2920.

The power transfer portion may be composed of a plurality of power transfer members so as to transfer power generated by rotation of the drive unit 2980 to the sliding portion 2920. For example, the power transfer portion may be composed of a belt and a pulley.

However, the present invention is not limited thereto, and the power transfer portion may be composed of a combination of gear components that directly mesh with each other. For example, the power provided by the drive unit 2980 may be transferred to the sliding portion 2920 by a combination of gear components that mesh with each other. Therefore, the sliding portion 2920 receiving the movement power from the drive unit 2980 can be slidably moved in the front-rear direction along the guide rails 2912a and 2912b.

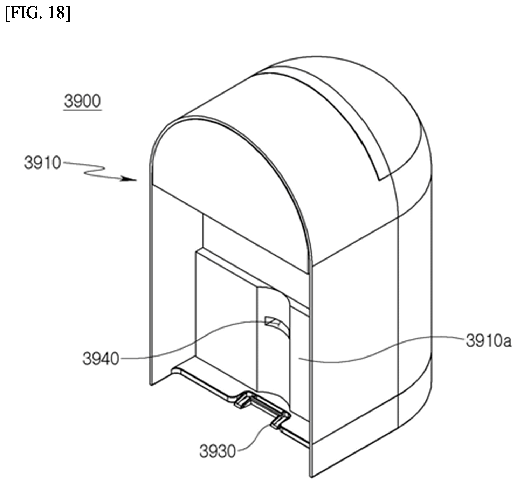

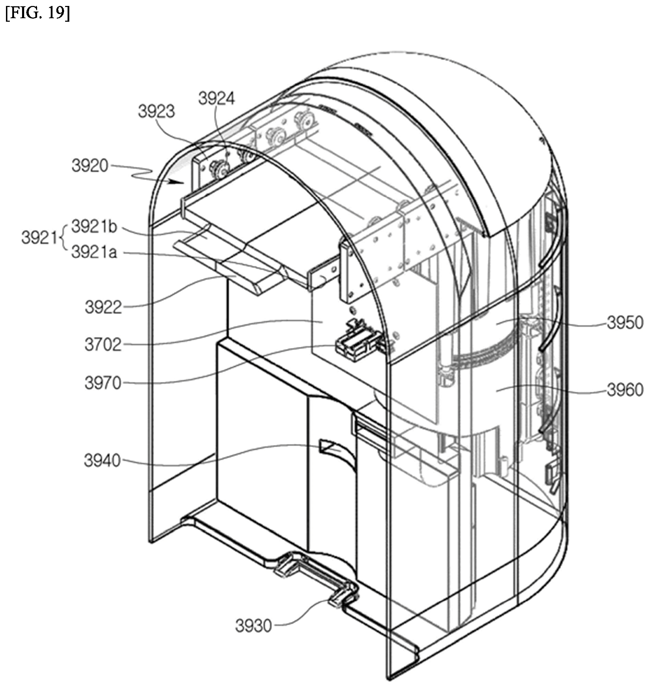

FIG. 18 is a perspective view of a station according to a fourth embodiment of the present invention, and FIG. 19 is an exploded view in which some components of the station according to the fourth embodiment of the present invention are exploded.

Referring to FIGS. 18 and 19, a station of a robot system according to the fourth embodiment of the present invention will be described as follows.

A station 3900 of the robot system according to the fourth embodiment of the present invention may include a station body 3910, a transfer portion 3920, a station terminal 3930, a suction portion 3940, a suction flow path (not shown), a dust collection unit 3950, a dust collection motor 3960, and an IR transmitter 3970.

Meanwhile, in order to avoid duplicate description, other configurations except for those specifically mentioned in the fourth embodiment of the present invention may refer to the contents of the station 900 according to the first embodiment of the present invention.

Specifically, the station body 3910, the station terminal 3930, the suction portion 3940, the suction flow path (not shown), the dust collection unit 3950, the dust collection motor 3960, and the IR transmitter 3970 of the station 3900 according to the fourth embodiment of the present invention may respectively refer to the contents of the station body 910, the station terminal 930, the suction portion 940, the suction flow path (not shown), the dust collection unit 950, the dust collection motor 960, and the IR transmitter 970 of the station 900 according to the first embodiment of the present invention.

The seating module of the station 3900 according to the fourth embodiment of the present invention may be the transfer portion 3920. The robot 1 may be seated on the transfer portion 3920 in a process in which the robot 1 is docked with the station 3900 or in a process in which the robot 1 leaves from the station 3900. The transfer portion 3920 may move an arm 400 of the robot 1 in a direction moving away from the station body 3910 or a direction approaching the station body 3910.

The transfer portion 3920 may include a support member 3921 and a protruding member 3922.

The support member 3921 is slidably coupled to the station body 3910 and may support at least a portion of the arm 400 of the robot 1.

The support member 3921 may be composed of a moving member 3921a and a seating member 3921b.

The moving member 3921a may move in and out of a hole (not shown) formed in a front portion 3910a of the station body 3910, and may be slidably coupled to the station body 3910.

At least a portion of the moving member 3921a may be disposed between wheel support portions 3923. The wheel support portion 3923 is configured to be disposed inside the station body 3910, and a guide wheel 3924 may be rotatably coupled to an inside of the wheel support portion 3923.

Specifically, a pair of guide wheels 3924 may be arranged to be spaced apart in a vertical direction. At this time, the vertical direction means a direction moving away from the ground or approaching the ground based on a state in which the station 3900 is disposed on the ground. In addition, a plurality of pairs of guide wheels 3924 arranged to be spaced apart in the vertical direction may be arranged along a front-rear direction. That is, the plurality of guide wheels 3924 form a path through which the moving member 3921a can slidably move in the front-rear direction, and the moving member 3921a may be disposed to be slidably movable between the plurality of guide wheels 3924.

The seating member 3921b may support at least a portion of the arm 400 of the robot 1. Specifically, the arm 400 of the robot 1 may be seated on the seating member 3921b.

The arm 400 of the robot 1 may be hooked and supported in a form hanging on the seating member 3921b. A surface of the seating member 3921b in contact with the arm 400 may be formed to correspond to at least a portion of the arm 400.

A front-rear direction interval of the seating member 3921b may be formed larger than a front-rear direction interval of the arm 400. At this time, the front-rear direction means a direction in which the moving member 3921a slidably moves.

The protruding member 3922 protrudes from the support member 3921 and can prevent departure of the arm 400. Specifically, the protruding member 3922 may be formed to protrude as a pair from the seating member 3921b. The pair of protruding members 3922 may be arranged to be spaced apart in the front-rear direction. A height of the protruding member 3922 may be formed higher than a height of the arm 400. As a result, the protruding member 3922 can prevent the arm 400 from departing in the front-rear direction.

Meanwhile, the transfer portion 3920 may be moved by power provided by a drive unit 3980. The drive unit 3980 may selectively rotate the transfer portion 3920 depending on whether the robot 1 is seated on the transfer portion 3920.

The drive unit 3980 may be disposed inside the station body 3910. As an example, the drive unit 3980 may be a rotation motor.

The station 3900 may further include a power transfer portion (not shown) that transfers power for sliding the transfer portion 3920 in the front-rear direction.

The power transfer portion may be disposed inside the station body 3910. The power transfer portion may be accommodated in an inner space of the station body 3910 together with the drive unit 3980 that generates movement power of the transfer portion 3920.

The power transfer portion may be composed of a plurality of power transfer members so as to transfer power generated by rotation of the drive unit 3980 to the transfer portion 3920. For example, the power transfer portion may be composed of a belt and a pulley.

However, the present invention is not limited thereto, and the power transfer portion may be composed of a combination of gear components that directly mesh with each other. For example, the power provided by the drive unit 3980 may be transferred to the moving member 3921a by a combination of gear components that mesh with each other. Therefore, the moving member 3921a receiving the movement power from the drive unit 3980 can be slidably moved along the front-rear direction path formed by the plurality of guide wheels 3924.

### Control Configuration:

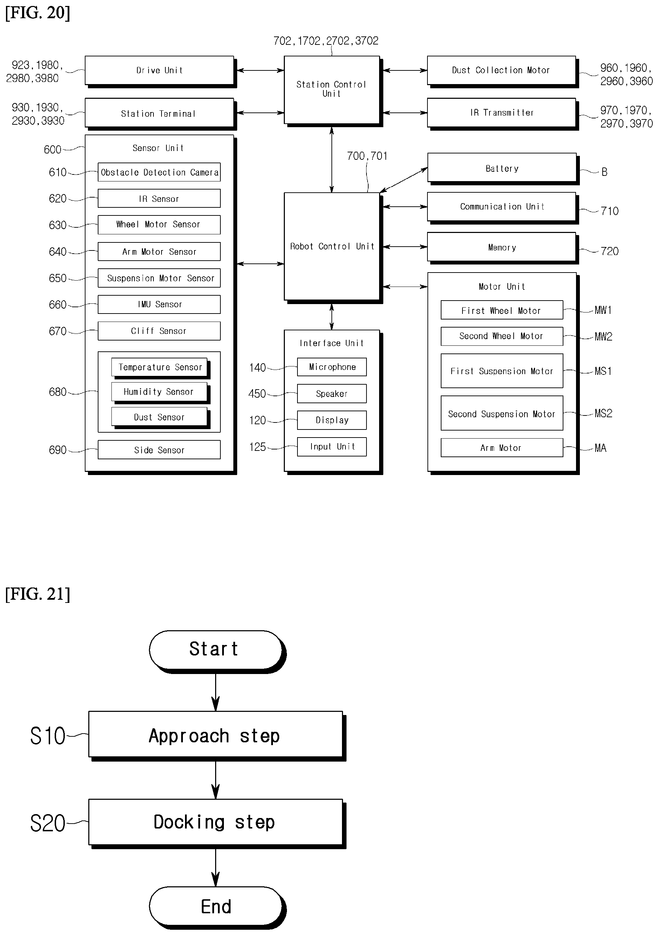

FIG. 20 is a block diagram for explaining a control configuration of a robot system according to an embodiment of the present invention.

Referring to FIGS. 1 to 20, a robot 1 according to an embodiment of the present invention may include a sensor unit 600, a control unit 700, a communication unit 710, a memory 720, a battery B, a motor unit, and an interface unit.

The components shown in the block diagram of FIG. 20 are not essential for implementing the robot 1, so the robot 1 described in the present specification may have more or fewer components than the components listed above.

The control unit 700 may be divided into a robot control unit 701 controlling the robot 1 and a station control unit 702, 1702, 2702, and 3702 controlling a station 900. The robot control unit 701 and the station control unit 702, 1702, 2702, and 3702 may communicate with each other to exchange information or process data. For example, when the station control unit 702, 1702, 2702, and 3702 transmits a call signal according to a user's call, the robot control unit 701 may receive the call signal and drive a wheel motor MW to allow the robot 1 to approach the station 900.

Hereinafter, except for matters specifically described, the robot control unit 701 and the station control unit 702, 1702, 2702, and 3702 are collectively referred to as the control unit 700.

First, the control unit 700 may control overall operations of the robot 1 or the station 900, 1900, 2900, and 3900. The control unit 700 may control the robot 1 and/or the station 900, 1900, 2900, and 3900 to perform various functions according to setting information stored in the memory 720, which will be described later.

The control unit 700 may be disposed on a robot body 100 or a station body 910, 1910, 2910, and 3910. More specifically, the control unit 700 may be mounted and provided on a PCB disposed inside a body housing 110 and/or the station body 910, 1910, 2910, and 3910.

The control unit 700 may include all types of devices capable of processing data, such as a processor. Here, the 'processor' may mean a data processing device embedded in hardware having a physically structured circuit to perform a function expressed by a code or an instruction included in a program, for example. As an example of such a data processing device embedded in hardware, processing devices such as a microprocessor, a central processing unit (CPU), a processor core, a multiprocessor, an application-specific integrated circuit (ASIC), and a field programmable gate array (FPGA) may be included, but the scope of the present invention is not limited thereto.

Meanwhile, the robot control unit 701 may receive information regarding an external environment of the robot 1 from at least one component among components of the sensor unit 600, which will be described later. At this time, the information regarding the external environment may be, for example, information such as temperature, humidity, and the amount of dust in a room where the robot 1 travels. Alternatively, for example, it may be cliff information. Alternatively, for example, it may be indoor map information. Of course, the information regarding the external environment is not limited to the above-described examples.

The robot control unit 701 may receive information regarding a current state of the robot 1 from at least one component among components of the sensor unit 600, which will be described later. At this time, the current state may be, for example, inclination information of the robot body 100. Alternatively, for example, it may be information regarding a separation state between a wheel 310 and the ground. Alternatively, for example, it may be location information of the wheel motor MW. Alternatively, for example, it may be location information of a suspension motor MS. Of course, the information regarding the current state of the robot 1 is not limited to the above-described examples.

The robot control unit 701 may transfer a driving control command to at least one component among components of the motor unit, which will be described later. For example, rotation of the wheel motor MW may be controlled for traveling of the robot 1. Alternatively, for example, rotation of the wheel motor MW may be controlled for maintaining a horizontal posture of the robot 1. Alternatively, for example, rotation of the suspension motor MS may be controlled for maintaining a horizontal posture of the robot 1.

The robot control unit 701 may receive a user's command input through at least one component among components of the interface unit, which will be described later. For example, the command may be a command for turning on/off the robot 1. Alternatively, for example, the command may be a command for manually controlling various functions of the robot 1.

The robot control unit 701 may output information related to the robot 1 through at least one component among components of the interface unit, which will be described later. For example, the output information may be visual information. Alternatively, for example, the output information may be auditory information.

The motor unit includes at least one motor, and may provide driving force to a configuration connected to each motor.

The motor unit may include the wheel motor MW providing driving force to left and right wheels 310. More specifically, the motor unit may include a first wheel motor MW1 transferring driving force to the wheel 310 disposed on one side in a left-right direction and a second wheel motor MW2 transferring driving force to the wheel 310 disposed on the other side in the left-right direction.

The wheel motors MW may be respectively disposed in a wheel portion 300. More specifically, the wheel motor MW may be accommodated inside a lower leg 230. Alternatively, the wheel motor MW may be accommodated inside the wheel 310.

The wheel motor MW is connected to the wheel 310. More specifically, a shaft or a final output end of a gear of the first wheel motor MW1 is connected to the wheel 310 disposed on the one side in the left-right direction. A shaft or a final output end of a gear of the second wheel motor MW2 is connected to the wheel 310 disposed on the other side in the left-right direction. Each of the left and right wheel motors MW is driven and rotated according to a control command of the robot control unit 701, and the robot 1 travels along the ground by rotation of the wheel 310 according to the rotation of the wheel motor MW.

The motor unit may include the suspension motor MS providing driving force to left and right leg portions 200. The suspension motor MS may rotate an upper leg 210 with respect to the robot body 100. The suspension motor MS may adjust an angle between the upper leg 210 and the lower leg 230. More specifically, the motor unit may include a first suspension motor MS1 transferring driving force to the leg portion 200 disposed on one side in a left-right direction and a second suspension motor MS2 transferring driving force to the leg portion 200 disposed on the other side in the left-right direction.

The suspension motor MS may be disposed on the robot body 100. More specifically, the suspension motors MS may be respectively accommodated inside the body housing 110.

The suspension motor MS is connected to a first link. More specifically, a shaft or a final output end of a gear of the first suspension motor MS1 is connected to the first link disposed on one side in a left-right direction. A shaft or a final output end of a gear of the second suspension motor MS2 is connected to the first link disposed on the other side in the left-right direction. Each of the left and right suspension motors MS is driven and rotated according to a control command of the robot control unit 701, and as the first link rotates and the lower leg 230 connected to the first link rotates according to rotation of the suspension motor MS, an angle between the first link and the lower leg 230 can be changed as a result.

Through this, the robot 1 is able to perform an operation of lifting or lowering the wheel 310, and can maintain a horizontal posture when climbing an obstacle or traveling on a curved ground. Alternatively, an operation in which the robot body 100 moves downward or upward becomes possible.

The motor unit may include an arm motor MA providing rotational force to an arm 400.

The arm motor MA may be disposed on the robot body 100. More specifically, at least one arm motor MA may be accommodated inside the body housing 110.

The arm motor MA is driven and rotated according to a control command of the robot control unit 701, and as a rotational coupling portion 410 rotates and a connection portion 420 formed integrally with the rotational coupling portion 410 rotates according to rotation of the arm motor MA, the arm 400 can be pivotally moved with respect to the robot body 100 as a result.

Through this, the robot 1 is able to perform an operation of rotating the arm 400, and can rotate the arm 400 to be coupled with a functional module 800. Alternatively, through rotation of the arm 400, the arm 400 can be made to brace against the ground.

The sensor unit 600 includes at least one sensor, and each sensor may measure or detect information regarding an external environment of a robot 1 and/or information regarding a current state of the robot 1.

The sensor unit 600 may include an obstacle detection camera 610.

The obstacle detection camera 610 is provided to detect an obstacle T present in a room where the robot 1 travels and to map a structure of the room.

To this end, the obstacle detection camera 610 may be disposed at a front of a robot body 100. More specifically, the obstacle detection camera 610 may be disposed at a front of a body housing 110.

Meanwhile, in the present embodiment, a plurality of obstacle detection cameras 610 may be disposed. For example, a first detection camera 611 may be disposed at a front lower portion of the body housing 110, and a second detection camera 612 may be disposed at a front upper portion of the body housing 110. With this configuration, the obstacle detection camera 610 can detect an object or a person located at the front of the robot 1.

The obstacle detection camera 610 detects the obstacle T, and may detect a distance to the obstacle T. For example, the first detection camera 611 may be a depth camera.

The obstacle detection camera 610 may photograph the room during traveling for execution of Simultaneous Localization and Mapping (SLAM). For example, the second detection camera 612 may be an RGB camera.

The depth camera and the RGB camera may calculate the distance by calculating a time for which an irradiated light is reflected and returned after irradiating the light.

A robot control unit 701 may detect the obstacle T and implement SLAM based on information regarding a surrounding environment photographed by the obstacle detection camera 610 and information regarding a current location of the robot 1.

Meanwhile, a method in which the robot 1 according to an embodiment of the present invention implements SLAM may be a method implemented only by the obstacle detection camera 610, but is not limited thereto. For example, the robot 1 may implement SLAM by further utilizing an additionally provided sensor. The additional sensor may be, for example, a Laser Distance Sensor (LDS).

The sensor unit 600 may include an IR sensor 620 for detecting infrared rays.

The IR sensor 620 may be an IR camera that detects infrared light.

The IR sensor 620 may be disposed on the robot body 100. In an embodiment of the present invention, a plurality of IR sensors 620 may be disposed. For example, a first IR sensor 621 may be disposed at the front lower portion of the body housing 110, and a second IR sensor 622 may be disposed at a rear of the body housing 110. With this configuration, locations of light sources disposed in various directions can be detected.

The IR sensor 620 may be disposed close to the obstacle detection camera 610. For example, the first IR sensor 621 may be disposed immediately below the first obstacle detection camera 611.

With this arrangement, the IR sensor 620 can detect light irradiated from a lamp of a functional module 800 or an IR transmitter 970 of a station 900, and when the robot body 100 approaches the lamp of the functional module 800 or the IR transmitter 970 of the station 900, the obstacle detection camera 610 can detect a shape of the functional module 800 or the station 900.

The IR sensor 620 detects infrared light emitted by an IR LED provided in a specific module to approach the module. For example, the module may be a charging base for charging the robot 1. For example, the module may be the functional module 800 detachably provided to the robot body 100.

The robot control unit 701 may control the IR sensor 620 to start detecting the IR LED when a charging state of the robot 1 is equal to or less than a preset level. The robot control unit 701 may control the IR sensor 620 to start detecting the IR LED when a command to find a specific module is received from a user.

The sensor unit 600 may include a wheel motor sensor 630.

The wheel motor sensor 630 may measure a location of a wheel motor MW. For example, the wheel motor sensor 630 may be an encoder. As is well known, the encoder can detect a location of a motor and can also detect a rotational speed of the motor.

The wheel motor sensors 630 may be respectively disposed on left and right wheel motors MW. More specifically, the wheel motor sensor 630 may be connected to a shaft or a final output end of a gear of the wheel motor MW and accommodated inside a lower leg 230 together with the wheel motor MW.

The sensor unit 600 may include an arm motor sensor 640.

The arm motor sensor 640 may measure a location of an arm 400. For example, the arm motor sensor 640 may be a photo sensor. As is well known, the photo sensor can measure a degree of rotation of an arm motor MA or a degree of rotation of the arm 400.

The arm motor sensor 640 may be disposed close to the arm motor MA. More specifically, the arm motor sensor 640 may be accommodated inside the body housing 110 or a rotational coupling portion 410 together with the arm motor MA.

A suspension motor sensor 650 may measure a location of a leg portion 200. For example, the suspension motor sensor 650 may be a photo sensor. As is well known, the photo sensor can measure a degree of rotation of a suspension motor MS or a degree of rotation of an upper leg 210.

The suspension motor sensor 650 may be disposed close to the suspension motor MS. More specifically, the suspension motor sensor 650 may be accommodated inside the body housing 110 together with the suspension motor MS.

The sensor unit 600 may include an IMU sensor 660.

The IMU sensor 660 may measure a tilt angle of the robot body 100.

As is well known, the Inertial Measurement Unit (IMU) sensor 660 is a sensor in which a 3-axis acceleration sensor, a 3-axis gyro sensor, and a geomagnetic sensor are built together, and is also referred to as an inertial measurement sensor.

The 3-axis acceleration sensor is a sensor that detects gravitational acceleration of an object in a stationary state. Since gravitational acceleration varies depending on an angle at which the object is tilted, a tilt angle is obtained by measuring the gravitational acceleration. However, there is a disadvantage in that a correct value cannot be obtained in a moving acceleration state rather than a stationary state.

The 3-axis gyro sensor is a sensor that measures an angular velocity. When the angular velocity is integrated over the entire time, a tilt angle is obtained. However, the angular velocity measured by the gyro sensor continuously has an error due to noise or the like, and due to such an error, an error for an integrated value is accumulated and occurs over time.

As a result, when a long time elapses in a stationary standby state, the robot 1 can accurately measure a tilt by the acceleration sensor, but an error occurs by the gyro sensor. In a case of traveling, the robot 1 can measure an accurate tilt value by the gyro sensor, but cannot obtain a correct value by the acceleration sensor.

When the IMU sensor 660 is used, the above-described disadvantages of the acceleration sensor and the gyro sensor can be compensated.

Hereinafter, the present specification describes an embodiment in which the IMU sensor 660 is provided.

The IMU sensor 660 may be disposed on the robot body 100. More specifically, the IMU sensor 660 may be disposed adjacent to the robot control unit 701. The IMU sensor 660 may be mounted and provided on a PCB inside the robot body 100. In order to improve measurement accuracy of a tilt angle and direction, it is preferable that the IMU sensor 660 is disposed close to a center region of the robot body 100.

The IMU sensor 660 may measure at least one of 3-axis acceleration, 3-axis angular velocity, and 3-axis geomagnetic data of the robot body 100 and transfer it to the robot control unit 701.

The robot control unit 701 may calculate a direction in which the robot body 100 is tilted and a tilted angle by using at least one of the acceleration, angular velocity, and geomagnetic data received from the IMU sensor 660. Based on this, the robot control unit 701 may perform a horizontal posture maintenance control of the robot body 100, which will be described later.

A sensor unit 600 may include a cliff sensor 670 for detecting a cliff.

The cliff sensor 670 may be configured to detect a distance to a front ground where a robot 1 travels. The cliff sensor 670 may be configured in various ways within a range for detecting a relative distance between a point where the cliff sensor 670 is formed and the ground.

For example, the cliff sensor 670 may include a light emitting portion configured to irradiate light and a light receiving portion into which reflected light is incident. The cliff sensor 670 may be configured as an infrared sensor.

The cliff sensor 670 may be disposed on a lower leg 230. For example, a first cliff sensor 671 may be disposed at a front lower end of the lower leg 230, and a second cliff sensor 672 may be disposed at a rear upper side of the lower leg 230. With this configuration, a distance between the lower leg 230 and a wheel 310 and the ground can be measured. In addition, it is also possible to calculate an angle between the lower leg 230 and the ground through a distance difference between the first cliff sensor 671 and the second cliff sensor 672.

The cliff sensor 670 may irradiate light toward the front ground (floor surface) of the robot 1. The cliff sensor 670 makes it possible to detect in advance whether a cliff exists in front in a traveling direction of the robot 1.

The light emitting portion of the cliff sensor 670 may obliquely irradiate light toward the front ground (floor surface). The light receiving portion of the cliff sensor 670 may receive light incident by being reflected from the ground (floor surface). A distance between the front ground and the cliff sensor 670 may be measured based on a difference between an irradiation time point and a reception time point of the light.

When the distance measured by the cliff sensor 670 exceeds a preset predetermined value, or exceeds a predetermined range, it may be a case where the front ground suddenly lowers. A cliff may be detected by this principle.

When a cliff is detected in front, a robot control unit 701 may control a wheel motor MW so that the robot 1 travels while avoiding the detected cliff. At this time, the control of the wheel motor MW may be a stop control. Alternatively, the control of the wheel motor MW may be a switching control of a rotation direction.

The sensor unit 600 may include an environmental sensor 680.

The environmental sensor 680 may be configured to measure various environmental states outside the robot 1, that is, inside a house where the robot 1 travels. The environmental sensor 680 may include at least one of a temperature sensor, a humidity sensor, and a dust sensor.

For example, the environmental sensor 680 may be disposed on an arm 400. More specifically, the environmental sensor 680 may be disposed on a connection portion 420. As a possible embodiment, information measured by the environmental sensor 680 may be visually displayed on a display 120.

The sensor unit 600 may include a side sensor 690.

The side sensor 690 may measure a distance to an obstacle including a wall surface and the like.

The side sensor 690 may be configured to detect a distance to a side wall surface along which the robot 1 travels. The side sensor 690 may be configured in various ways within a range for detecting a relative distance between a point where the side sensor 690 is disposed and the obstacle.

For example, the side sensor 690 may include a light emitting portion configured to irradiate light and a light receiving portion into which reflected light is incident. The side sensor 690 may be configured as an infrared sensor.

The side sensor 690 may be disposed on both side surfaces of the robot 1. For example, the side sensor 690 may be disposed on an outer surface of the lower leg 230 of a leg portion 200.

An interface unit includes at least one configuration for interaction between a user and a robot 1, and each configuration may be provided to input a command from the user and/or output information to the user.

The interface unit may include a microphone 140.

The microphone 140 is a configuration that recognizes a user's voice, and a plurality of microphones 140 may be provided. A plurality of microphones 140 may be disposed on a body housing 110. For example, four microphones 140 may be disposed on an upper side of the body housing 110.

A voice signal received by the microphone 140 may be used for tracking a user's location. At this time, a known sound source tracking algorithm may be applied. For example, the sound source tracking algorithm may be a three-point measurement method (triangulation method) using a time difference in which a plurality of microphones 140 receive a voice signal. This is a principle in which a location of a voice source is calculated by using a location of each microphone 140 and a speed of sound waves.

Meanwhile, when the microphone 140 and the above-described obstacle detection camera 610 cooperate with each other, it may be implemented such that the robot 1 comes to find a user's location even when the user calls the robot 1 from a far away place.

The interface unit may include a speaker 450.

The speaker 450 may be disposed on an arm 400. For example, the speaker 450 may be disposed on a rotational coupling portion 410 of the arm 400. The speakers 450 may be respectively disposed at positions covering both sides in a left-right direction of the body housing 110.

The speaker 450 may transmit information of the robot 1 as sound. A source of the sound transmitted by the speaker 450 may be sound data pre-stored in the robot 1. For example, the pre-stored sound data may be voice data of the robot 1. For example, the pre-stored sound data may be a notification sound guiding a state of the robot 1. Meanwhile, the source of the sound transmitted by the speaker 450 may be sound data received through a communication unit 710.

The interface unit may include a display 120 and an input unit 125.

The display 120 may include a display disposed in one or more modules. The display 120 may be disposed at a front upper side of a robot body 100.

The display 120 may be formed of any one element among a Light Emitting Diode (LED), a Liquid Crystal Display (LCD), a Plasma Display Panel, and an Organic Light Emitting Diode (OLED).

Information such as operating time information of the robot 1 and power information of a battery B may be displayed on the display 120.

A facial expression of the robot 1 may be displayed on the display 120. Alternatively, pupils of the robot 1 may be displayed on the display 120. A current state of the robot 1 may be anthropomorphized and expressed as an emotion through a shape of a face or a shape of pupils displayed on the display 120. For example, when a user goes out and returns home, a smiling facial expression or a smiling eye shape may be displayed on the display 120. As a result, there is an effect that the user feels as if interacting with the robot 1.

The input unit 125 may be configured to receive a control command for controlling the robot 1 from a user. For example, the control command may be a command for changing various settings of the robot 1. For example, the settings may be a voice volume, display brightness, a power saving mode setting, and the like.

The input unit 125 may be disposed on the display 120.

The input unit 125 generates key input data that a user inputs to control an operation of the robot 1. To this end, the input unit 125 may be composed of a key pad, a dome switch, a touch pad (static pressure/electrostatic), and the like. In particular, when the touch pad and a first display form an interactive layer structure, this may be referred to as a touch screen.

The communication unit 710 may be provided for signal transfer between respective components inside the robot 1. The communication unit 710 may support, for example, Controller Area Network (CAN) communication. The signal may be, for example, a control command transferred from a control unit 700 to other components.

The communication unit 710 may support wireless communication with other devices existing outside the robot 1. A short-range communication module or a long-range communication module may be provided as a wireless communication module for supporting wireless communication.

The short-range communication may be, for example, Bluetooth communication, Near Field Communication (NFC) communication, or the like.

The long-range communication may be, for example, Wireless LAN (WLAN), Digital Living Network Alliance (DLNA), Wireless Broadband (Wibro), World Interoperability for Microwave Access (Wimax), Global System for Mobile communication (GSM), Code Division Multi Access (CDMA), Code Division Multi Access 2000 (CDMA2000), Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), IEEE 802.16, Long Term Evolution (LTE), Long Term Evolution-Advanced (LTEA), Wireless Mobile Broadband Service (WMBS), Bluetooth Low Energy (BLE), Zigbee, Radio Frequency (RF), Long Range (LoRa), or the like.

A memory 720 is a configuration in which various data for driving and operating the robot 1 are stored.

An application program for autonomous traveling of the robot 1 and various related data may be stored in the memory 720. Respective data sensed by a sensor unit 600 may also be stored in the memory 720, and setting information regarding various settings selected or input by a user may be stored.

The memory 720 may include magnetic storage media or flash storage media, but the scope of the present invention is not limited thereto. Such a memory 720 may include an internal memory and/or an external memory, and may include a volatile memory such as DRAM, SRAM, or SDRAM, a non-volatile memory such as one time programmable ROM (OTPROM), PROM, EPROM, EEPROM, mask ROM, flash ROM, NAND flash memory, or NOR flash memory, a flash drive such as SSD, compact flash (CF) card, SD card, Micro-SD card, Mini-SD card, Xd card, or memory stick, or a storage device such as an HDD.

The memory 720 may be included in the control unit 700 or may be provided as a separate configuration.

The battery B is configured to supply power to other components constituting the robot 1.

The battery B may be disposed on the robot body 100. More specifically, the battery B may be accommodated inside the body housing 110. Although not shown, the battery B may be disposed rearward of a suspension motor MS.

The battery B may be charged by an external power source, and for this, a robot terminal 170 for charging the battery B may be provided on one side of the robot body 100. As in the embodiment of the present invention, the robot terminal 170 may be disposed on a lower portion of the robot body 100. As a result, the robot 1 approaches the functional module 800 and descends, thereby being easily coupled with the functional module in a manner that the robot terminal 170 is seated on a robot-corresponding terminal 840 of the functional module 800 from above.

Meanwhile, a station control unit 702, 1702, 2702, and 3702 may control a drive unit 923, 1980, 2980, and 3980, a station terminal 930, 1930, 2930, and 3930, a dust collection motor 960, 1960, 2960, and 3960, and an IR transmitter 970, 1970, 2970, and 3970.

The station control unit 702, 1702, 2702, and 3702 may be composed of a printed circuit board and elements mounted on the printed circuit board.

When a station-corresponding terminal of a functional module 800 and the station terminal 930, 1930, 2930, and 3930 of a station 900, 1900, 2900, and 3900 contact each other to be electrically connected, the station control unit 702, 1702, 2702, and 3702 may determine that the functional module 800 is coupled to the station 900, 1900, 2900, and 3900.

In addition, the station control unit 702, 1702, 2702, and 3702 may transmit a signal regarding a call to a robot control unit 701 when there is a user's call regarding a robot 1. When the signal regarding the call is received by the robot control unit 701, the robot control unit 701 may drive a wheel motor MW so that the robot 1 travels to approach the station 900, 1900, 2900, and 3900.

The station control unit 702, 1702, 2702, and 3702 may inform a location of the station 900, 1900, 2900, and 3900 through light emission of the IR transmitter 970, 1970, 2970, and 3970. An optical signal emitted from the IR transmitter 970, 1970, 2970, and 3970 may be irradiated to an IR sensor 620 of a robot body 100.

With this configuration, the IR sensor 620 disposed on the robot body 100 can detect the location of the station 900, 1900, 2900, and 3900, and when there is a user's call, the robot body 100 can travel toward the station 900, 1900, 2900, and 3900.

### Control Method of Robot System:

FIG. 21 is a flowchart showing a control method of a robot system according to an embodiment of the present invention.

Referring to FIG. 21, the control method of the robot system according to the embodiment of the present invention will be described as follows.

The control method of the robot system according to the embodiment of the present invention may include an approach step S10 and a docking step S20.

The approach step S10 may be performed by a call from a station 900, 1900, 2900, and 3900 while a robot 1 waits on the ground. That is, when a signal regarding charging of the robot 1 and/or emptying of a dust bin of a functional module 800 transmitted from the station 900, 1900, 2900, and 3900 is received by the robot 1, the robot 1 disposed on the ground may move toward the station 900, 1900, 2900, and 3900. The robot 1 approaching the station 900, 1900, 2900, and 3900 may move to a preset specific location. Here, the preset location may be an entrance of the station 900, 1900, 2900, and 3900 for the robot 1 to enter the station 900, 1900, 2900, and 3900. In addition, the robot 1 approaching the station 900, 1900, 2900, and 3900 may be disposed at the entrance of the station 900, 1900, 2900, and 3900 such that a front surface thereof faces the station 900, 1900, 2900, and 3900, or alternatively, may be disposed at the entrance of the station 900, 1900, 2900, and 3900 such that a rear surface thereof faces the station 900, 1900, 2900, and 3900.

In the docking step S20, after a drive unit 923, 1980, 2980, and 3980 of the station 900, 1900, 2900, and 3900 is driven, the robot 1 may be docked with the station 900, 1900, 2900, and 3900. As an example, docking may mean that the robot 1 is coupled to the functional module 800 electrically and/or fluidly connected to the station 900, 1900, 2900, and 3900. As another example, docking may mean being electrically and/or fluidly connected to the station 900, 1900, 2900, and 3900 in a state where the functional module 800 is coupled to the robot 1.

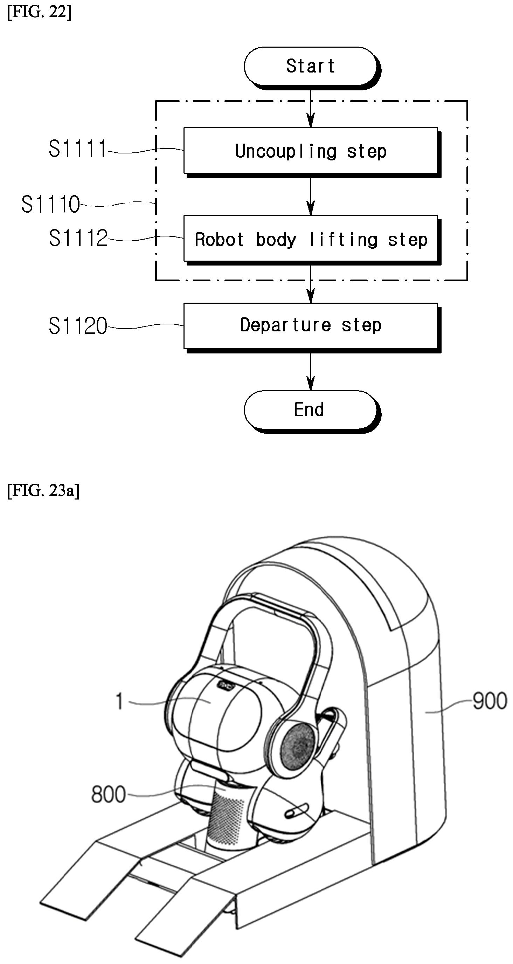

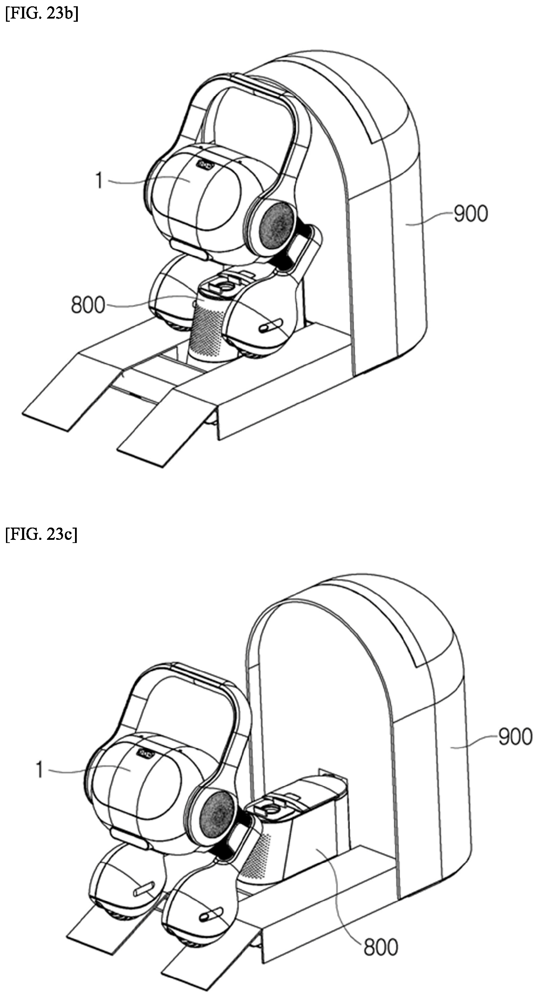

FIG. 22 is a flowchart showing a control method of a robot system according to an embodiment 1-1 of the present invention, FIG. 23A is a view showing an operation corresponding to step S1111 of FIG. 22, FIG. 23B is a view showing an operation corresponding to step S1112 of FIG. 22, and FIG. 23C is a view showing an operation corresponding to step S1120 of FIG. 22.

Referring to FIGS. 22 to 23C, the control method of the robot system according to the embodiment 1-1 of the present invention will be described as follows.

The control method of the robot system according to the embodiment 1-1 of the present invention may implement a process in which a robot 1 moves to leave from a station 900 according to the first embodiment of the present invention. Specifically, in the control method of the robot system according to the embodiment 1-1 of the present invention, the robot 1 seated on a functional module 800 according to the first embodiment of the present invention is separated from the functional module 800 by a user's call, and then may slide down riding an inclined portion 922.

The control method of the robot system according to the embodiment 1-1 of the present invention may include a separation step S1110 and a departure step S1120. In the control method of the robot system according to the embodiment 1-1 of the present invention, the functional module 800 may maintain a state of being docked with the station 900.

In the separation step S1110, the robot 1 may be separated from the functional module 800.

The separation step S1110 may be performed immediately after charging of the robot 1 and/or emptying of a dust bin of the functional module 800 by driving of a dust collection motor 960 is completed. Alternatively, after charging of the robot 1 and/or emptying of the dust bin of the functional module 800 is completed, the robot 1 waits at the station 900, and then may leave the station 900 by a user's call. Alternatively, after charging of the robot 1 and/or emptying of the dust bin of the functional module 800 is completed, the robot 1 waits at the station 900, and then may leave the station 900 when a specific event occurs. At this time, a call by the user, detection of a return of the user who went out, and the like may correspond to such a specific event.

In addition, when a robot body 100 is seated on a module body 810, a module coupling portion 150 of the robot 1 and a coupling portion 830 of the functional module 800 may maintain a state of being latch-coupled to each other. That is, the separation step S1110 may be a step of releasing a separably coupled state between the robot 1 and the functional module 800, and lifting the robot body 100 from the functional module 800.

Specifically, the separation step S1110 may include an uncoupling step S1111 and a robot body lifting step S1112.

In the uncoupling step S1111, the latch-coupling between a coupling hook 154 disposed on a lower side of the robot body 100 and the coupling portion 830 disposed on an upper side of the functional module 800 may be released. Specifically, when a drive motor 152 of the module coupling portion 150 is driven in a state where the robot body 100 is seated on the module body 810, a rotating gear 153 rotates around a rotation shaft 153a, so that the coupling hook 154 may come out of a coupling hole 830a.

In the robot body lifting step S1112, the leg portion 200 may move the robot body 100 upward through driving of a suspension motor MS. In addition, in the robot body lifting step S1112, electrical coupling between a robot terminal 170 of the robot 1 and a robot-corresponding terminal 840 of the functional module 800, which were in contact, may be released. That is, when the robot body 100 is moved in a direction away from the ground, the electrical coupling may be released.

The movement of the robot body 100 in the direction away from the ground means that a height of the robot body 100 increases, that is, a relative height of an upper surface or a lower surface of the robot body 100 with respect to the ground increases. This, from another point of view, may be referred to as an operation in which the robot body 100 gets up from the functional module 800. (See FIG. 23B)

When the height of the robot body 100 increases, the robot terminal 170 disposed on the lower surface of the robot body 100 and the robot-corresponding terminal 840 disposed on an upper surface of the functional module 800 move away from each other, so that electrical contact between them may be released.

The operation in which the robot body 100 gets up from the functional module 800 may be performed by the suspension motor MS. More specifically, the suspension motor MS may be rotationally driven to increase an included angle formed by an upper leg 210 and a lower leg 230. From another point of view, the suspension motor MS may be rotationally driven to move a wheel 310 and the robot body 100 away from each other.

Alternatively, the operation in which the robot body 100 gets up from the functional module 800 may be performed by a restoring force of a gravity compensation portion.

In the departure step S1120, the robot 1 may move to leave the station 900. Specifically, when the robot body 100 gets up from the functional module 800, the robot 1 disposed on a seating portion 921 may move forward and descend to the ground along the inclined portion 922.

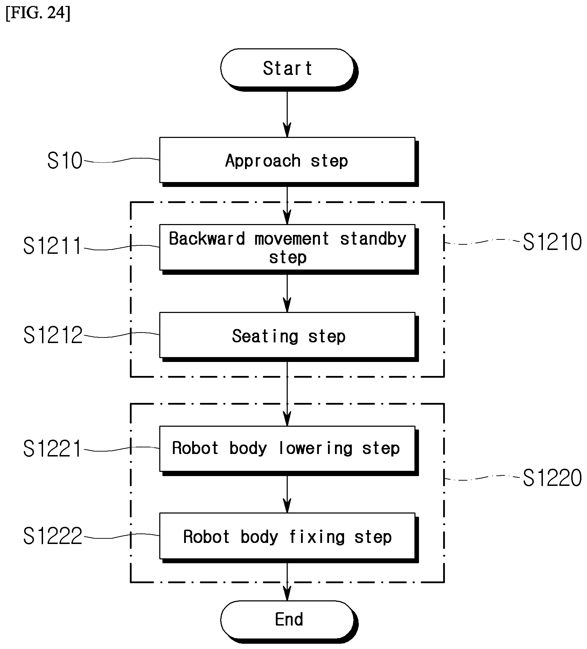

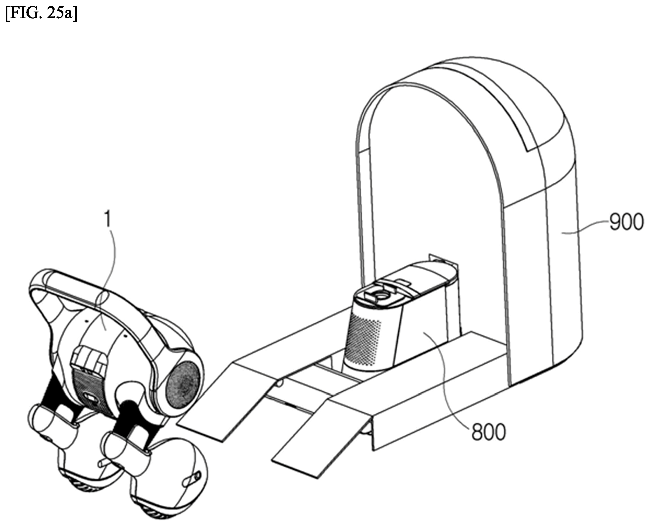

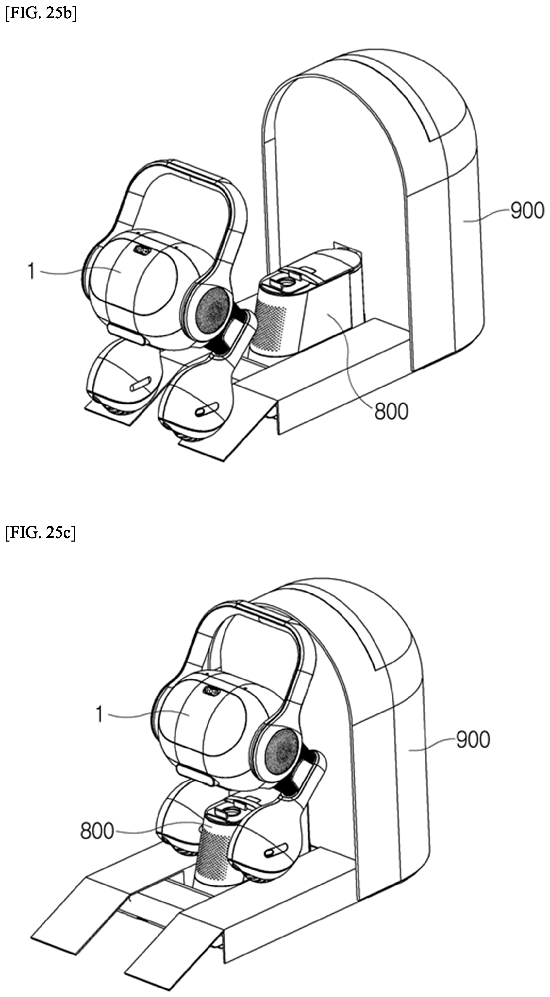

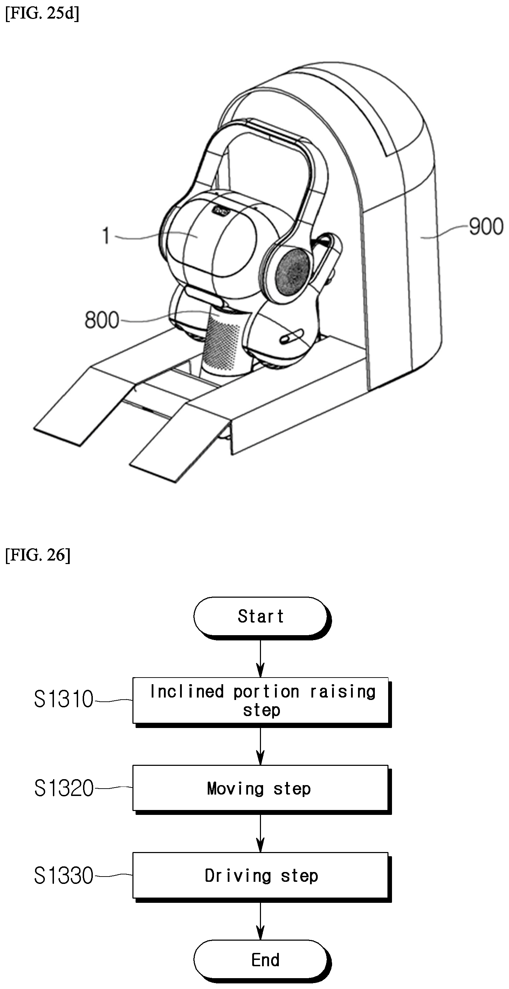

FIG. 24 is a flowchart showing a control method of a robot system according to an embodiment 1-2 of the present invention, FIG. 25A is a view showing an operation corresponding to step S10 of FIG. 24, FIG. 25B is a view showing an operation in which a robot moves backward after step S1211 of FIG. 24, FIG. 25C is a view showing an operation corresponding to step S1212 of FIG. 24, and FIG. 25D is a view showing an operation corresponding to step S1220 of FIG. 24.

Referring to FIGS. 24 to 25D, the control method of the robot system according to the embodiment 1-2 of the present invention will be described as follows.

The control method of the robot system according to the embodiment 1-2 of the present invention may implement a process in which a robot 1 having approached a station 900 according to the first embodiment of the present invention climbs backward and is then seated on and coupled to a functional module 800.

The control method of the robot system according to the embodiment 1-2 of the present invention may include an approach step S10, a climbing step S1210, and a coupling step S1220. In the control method of the robot system according to the embodiment 1-2 of the present invention, the functional module 800 may maintain a state of being docked with the station 900.

The approach step S10 may be performed by a call from the station 900 while the robot 1 waits on the ground. That is, when a signal regarding charging of the robot 1 transmitted from the station 900 is received by the robot 1, the robot 1 disposed on the ground may move toward the station 900. The robot 1 approaching the station 900 may move to a preset specific location. Here, the preset location may be an entrance of an inclined portion 922 as shown in FIG. 25A.

In addition, the robot 1 approaching the station 900 may be disposed at the entrance of the inclined portion 922 (see FIG. 25A) such that a front surface thereof faces the station 900, or alternatively, may be disposed at the entrance of the inclined portion 922 such that a rear surface thereof faces the station 900.

In the climbing step S1210, the robot 1 may climb onto a seating portion 921, and the climbing step S1210 may include a backward movement standby step S1211 and a seating step S1212.

In the backward movement standby step S1211, the robot 1 may be disposed at the entrance of the inclined portion 922 so as to be able to climb the inclined portion 922 while moving backward. Specifically, in this step S1211, the robot 1 may be disposed such that the rear surface of the robot 1 faces a front portion 910a of a station body. That is, in this step S1211, a backward climbing path of the robot 1 and an upward incline of the inclined portion 922 may be arranged to coincide with each other so that a wheel 310 does not depart from the inclined portion 922 when the robot 1 climbs the inclined portion 922.

As an example, the robot 1 in this step S1211 may rotate 180 degrees in a state (see FIG. 25A) in which the front surface is arranged to face a front surface of the station 900 so as to be able to climb the inclined portion 922 while moving backward. As another example, the robot 1 in this step S1211 may be disposed such that the rear surface faces the front surface of the station 900 so as to be able to climb the inclined portion 922 while moving backward.

In the seating step S1212, the robot 1 may move backward, pass through the inclined portion 922, and be seated on the seating portion 921. In this step S1212, the robot 1 may move backward to a location where a robot terminal 170 is disposed vertically above a robot-corresponding terminal 840. That is, in this step S1212, the robot 1 may move backward to a location where the robot terminal 170 and the robot-corresponding terminal 840 are in contact with each other when a robot body 100 is seated on the functional module 800 by driving a suspension motor MS. At this time, in a state where the robot 1 is seated on the seating portion 921, a robot mask 500 may be disposed to face a front upper side.

In the coupling step S1220, the robot terminal 170 of the robot 1 and the robot-corresponding terminal 840 of the functional module 800 may contact each other and be electrically coupled so that power is supplied to the robot 1.

The coupling step S1220 may include a robot body lowering step S1221 and a robot body fixing step S1222.

In the robot body lowering step S1221, the robot body 100 is lowered through driving of the suspension motor MS to seat the robot body 100 on a module body 810, and the robot terminal of the robot body 100 and the robot-corresponding terminal 840 of the functional module 800 may be brought into contact and coupled with each other.

Specifically, the robot body lowering step S1221 is a step in which after the robot 1 climbs onto the seating portion 921, the robot body 100 moves downward so that the robot terminal 170 of the robot body 100 and the robot-corresponding terminal 840 of the functional module 800 are brought into contact and coupled with each other, and lowering of the robot body 100 is performed through driving of the suspension motor MS.

At this time, the suspension motor MS is rotationally driven so that an included angle formed by an upper leg 210 and a lower leg 230 decreases. That the included angle formed by the upper leg 210 and the lower leg 230 decreases means that a distance between the wheel 310 and the robot body 100 becomes closer, that is, the robot body 100 descends.

The rotational driving of the suspension motor MS continues until the robot terminal 170 of the robot body 100 and the robot-corresponding terminal 840 of the functional module 800 are brought into contact and coupled with each other. As a result, the robot 1 and the functional module 800 can be electrically connected to each other, and a battery B of the robot 1 can be charged.

Meanwhile, in this step S1221, a module coupling portion 150 of the robot 1 comes into contact with an upper surface and a coupling portion 830 of the module body 810, and the robot 1 is placed on the functional module 800 in a form of leaning and resting on the module body 810.

In the robot body fixing step S1222, a coupling hook 154 disposed on a lower side of the robot body 100 and the coupling portion disposed on an upper side of the functional module 800 may be latch-coupled to each other. Specifically, in this step S1222, when the robot body 100 is seated on the module body 810, the coupling hook 154 disposed on the lower side of the robot body 100 and the coupling portion 830 disposed on the upper side of the functional module 800 may be latch-coupled to each other. That is, when a drive motor 152 of the module coupling portion 150 is driven in a state where the robot body 100 is seated on the module body 810, a rotating gear 153 rotates around a rotation shaft 153a, so that the coupling hook 154 may be inserted into a coupling hole 830a.

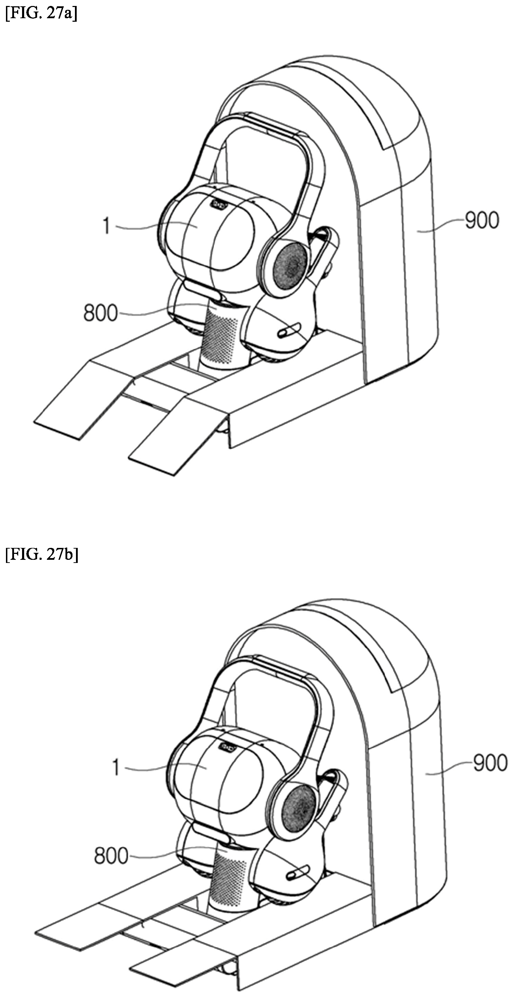

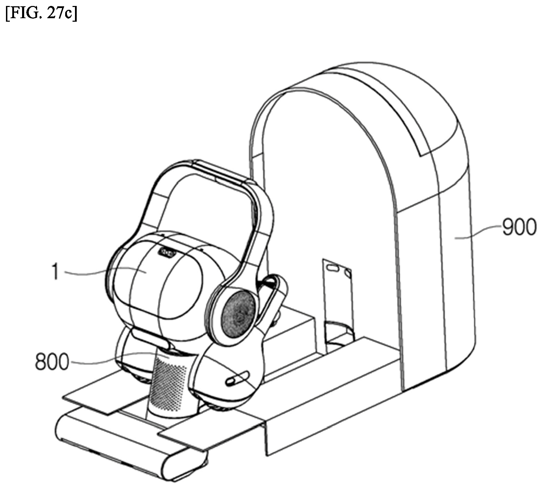

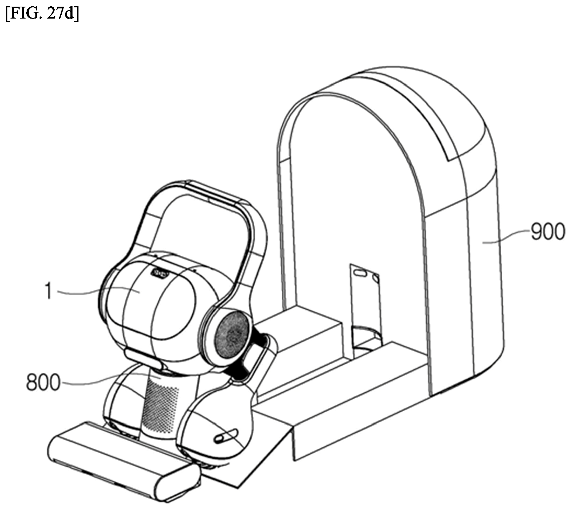

FIG. 26 is a flowchart showing a control method of a robot system according to an embodiment 1-3 of the present invention, FIGS. 27A and 27B are views showing an operation corresponding to step S1310 of FIG. 26, FIG. 27C is a view showing an operation corresponding to step S1320 of FIG. 26, and FIG. 27D is a view showing an operation corresponding to step S1330 of FIG. 26.

Referring to FIGS. 26 to 27D, the control method of the robot system according to the embodiment 1-3 of the present invention will be described as follows.

The control method of the robot system according to the embodiment 1-3 of the present invention may implement a process in which a robot 1 disposed on a seating portion 921 according to the first embodiment of the present invention moves forward to an inclined portion 922 in a state of being coupled with a functional module 800, and then moves to the ground by riding down the inclined portion 922 rotating downward.

The control method of the robot system according to the embodiment 1-3 of the present invention may include an inclined portion raising step S1310, a moving step S1320, and a driving step S1330.

In the inclined portion raising step S1310, the inclined portion 922 of a station 900 may be rotated upward.

Meanwhile, in the present specification, the upward rotation of the inclined portion 922 may mean that the inclined portion 922 in a state where one end is rotatably coupled to the seating portion 921 and the other end contacts the ground rotates to be parallel to the ground. In addition, the downward rotation of the inclined portion 922 may mean that the inclined portion 922 in a state where one end is rotatably coupled to the seating portion 921 and is arranged in parallel with the ground rotates so that the other end contacts the ground. That is, a rotation direction of the inclined portion 922 when the inclined portion 922 rotates upward and a rotation direction of the inclined portion 922 when the inclined portion 922 rotates downward may be opposite to each other.

Accordingly, when a drive unit 923 is driven in the inclined portion raising step S1310, the inclined portion 922 that has been in contact with the ground may rotate to be parallel to the ground.

In the moving step S1320, the robot 1 in a state of being disposed on the seating portion 921 of the station 900 may move forward to the inclined portion 922. In this step S1320, since a module coupling portion 150 of the robot 1 and a coupling portion 830 of the functional module 800 are in a latch-coupled state, when the robot 1 moves forward, the functional module 800 may move forward together with the robot 1.

In the driving step S1330, a suspension motor MS of the robot 1 may be driven so that a distance between a wheel 310 of the robot 1 and a robot body 100 increases while rotating the inclined portion 922 downward.

During the downward rotation of the inclined portion 922 in the driving step S1330, a height of the robot body 100 may be maintained constant. That is, in this step S1330, even if a distance between the wheel 310 and the ground decreases as the inclined portion 922 rotates downward, the suspension motor MS is driven to increase an included angle formed by an upper leg 210 and a lower leg 230, so that a distance between the robot body 100 and the ground can be maintained constant.

At this time, the height of the robot body 100 may mean a distance between the robot body 100 and the ground in a state where the station 900 is disposed on the ground.

While the driving step S1330 proceeds, the robot 1 may move to the ground by descending along the inclined portion 922 in a state of being coupled with the functional module 800. Alternatively, after the driving step S1330 is completed, the robot 1 may move to the ground by descending along the inclined portion 922 in a state of being coupled with the functional module 800. That is, since the robot 1 rolls and moves on the inclined portion 922 to come down to the ground while the inclined portion 922 rotates downward, a descending operation of the robot 1 can be performed more naturally.

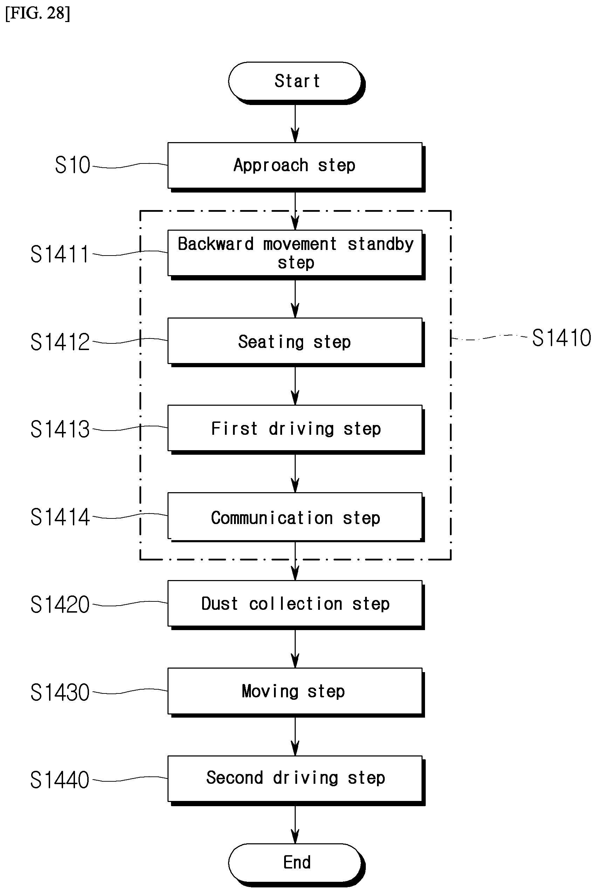

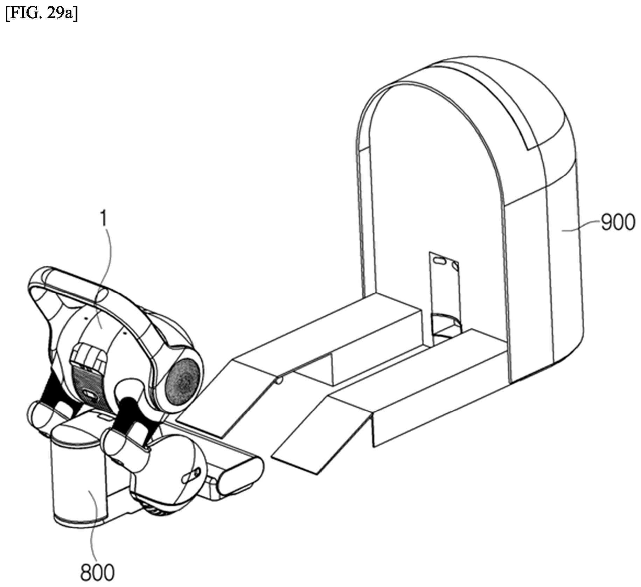

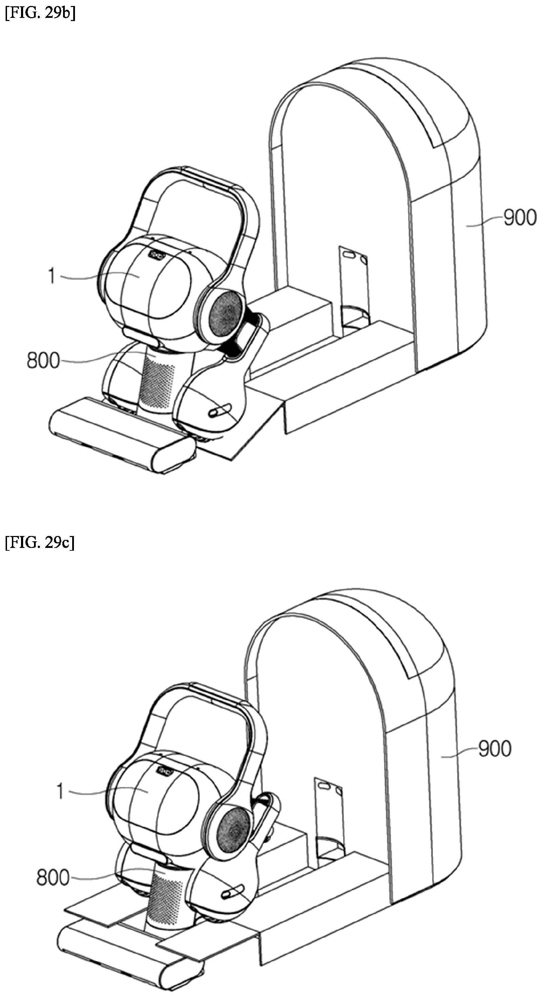

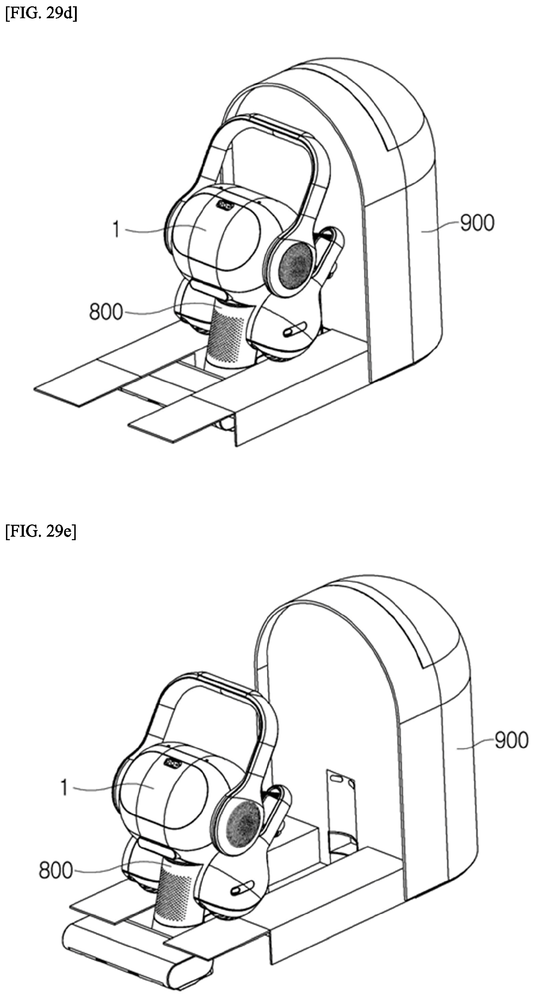

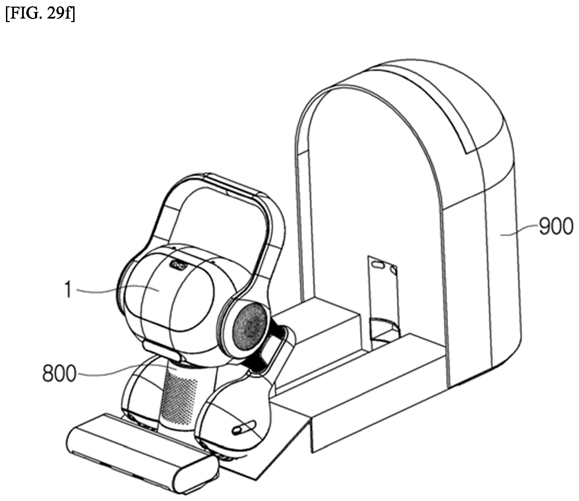

FIG. 28 is a flowchart showing a control method of a robot system according to an embodiment 1-4 of the present invention, FIG. 29A is a view showing an operation corresponding to step S10 of FIG. 28, FIG. 29B is a view showing an operation corresponding to steps S1411 and S1412 of FIG. 28, FIG. 29C is a view showing an operation corresponding to step S1413 of FIG. 28, FIG. 29D is a view showing an operation corresponding to steps S1414 and S1420 of FIG. 28, FIG. 29E is a view showing an operation corresponding to step S1430 of FIG. 28, and FIG. 29F is a view showing an operation corresponding to step S1440 of FIG. 28.

Referring to FIGS. 28 to 29F, the control method of the robot system according to the embodiment 1-4 of the present invention will be described as follows.

The control method of the robot system according to the embodiment 1-4 of the present invention may implement a process in which a robot 1, having approached a station 900 according to the first embodiment of the present invention in a state of being coupled with a functional module 800, climbs backward to dock the functional module 800 with the station 900, and then a dust bin of the functional module 800 is emptied by driving of a dust collection motor 960.

The control method of the robot system according to the embodiment 1-4 of the present invention may include an approach step S10, a docking step S1410, a dust collection step S1420, a moving step S1430, and a second driving step S1440.

In the docking step S1410, the robot 1 climbs the station 900 so that the functional module 800 can be docked with the station 900, and the docking step S1410 may include a backward movement standby step S1411, a seating step S1412, a first driving step S1413, and a communication step S1414.

Meanwhile, in order to avoid duplicate description, except for matters specifically described, the approach step S10 and the backward movement standby step S1411 of the control method of the robot system according to the embodiment 1-4 of the present invention may refer to the contents of the approach step S10 and the backward movement standby step S1211 of the control method of the robot system according to the embodiment 1-2 of the present invention, respectively.

The approach step S10 and the backward movement standby step S1411 of the control method of the robot system according to the embodiment 1-4 of the present invention are respectively the same as the contents of the approach step S10 and the backward movement standby step S1211 of the control method of the robot system according to the embodiment 1-2 of the present invention, except that they are performed in a state where the functional module 800 is coupled to the robot 1 rather than being docked with the station 900.

That is, in the approach step S10 and the backward movement standby step S1411 of the control method of the robot system according to the embodiment 1-4 of the present invention, the robot 1 may travel with the same movement as the robot 1 in the approach step S10 and the backward movement standby step S1211 of the control method of the robot system according to the embodiment 1-2 of the present invention, except that it travels in a state where a module coupling portion 150 and a coupling portion 830 of the functional module 800 are latch-coupled to each other.

In the seating step S1412, the robot 1 may move backward and be seated on an inclined portion 922. That is, the robot 1 waiting to move backward at an entrance of the inclined portion 922 does not move backward to a seating portion 921 but may stop on the inclined portion 922. At this time, in a state where the robot 1 is seated on the inclined portion 922, a robot mask 500 may be disposed to face a front upper side.

In the first driving step S1413, a suspension motor MS may be driven so that a distance between a wheel 310 and a robot body 100 decreases while rotating the inclined portion 922 on which the robot 1 is seated upward at the same time. That is, when a drive unit 923 is driven, the inclined portion 922 that has been in contact with the ground may rotate to be parallel to the ground, and an included angle formed by an upper leg 210 and a lower leg 230 may decrease by driving of the suspension motor MS.

Further, in the first driving step S1413, a height of the robot body 100 may be maintained constant while the inclined portion 922 rotates upward. That is, in this step S1413, even if a distance between the wheel 310 and the ground increases as the inclined portion 922 rotates upward, the suspension motor MS is driven to decrease the included angle formed by the upper leg 210 and the lower leg 230, so that a distance between the robot body 100 and the ground can be maintained constant.

In the communication step S1414, after the robot 1 moves backward, the dust bin of the robot 1 and a suction portion 940 of the station 900 may communicate with each other. Since at least a portion of a lower side surface of the dust bin facing the suction portion 940 is in an opened state, when the robot 1 moves backward, an inside of the dust bin and the suction portion 940 may communicate with each other. In a state where the dust bin and the suction portion 940 communicate with each other, the suction portion 940, the suction flow path, and a dust collection unit 950 of the station 900 may form a single flow path. Accordingly, in a state where the dust bin and the suction portion 940 communicate with each other, dust inside the dust bin sucked through the suction portion 940 may be discharged to the outside through the suction flow path of the station 900, the dust collection unit 950, the dust collection motor 960, and an exhaust port.

In the dust collection step S1420, the station 900 may suck dust inside the dust bin of the functional module 800. In this step S1420, the dust in the dust bin of the functional module 800 may be collected into the dust collection unit 950 of the station 900 by a suction force of the dust collection motor 960. Through this, since dust inside the dust bin of the functional module 800 can be removed without a user's separate manipulation, user convenience can be provided. In addition, an inconvenience of the user having to empty the dust bin every time can be eliminated. Furthermore, when emptying the dust bin, scattering of dust can be prevented.

Meanwhile, in order to avoid duplicate description, a moving step S1430 and the second driving step S1440 of the control method of the robot system according to the embodiment 1-4 of the present invention may refer to the contents of the moving step S1320 and the driving step S1330 of the control method of the robot system according to the embodiment 1-3 of the present invention, respectively.

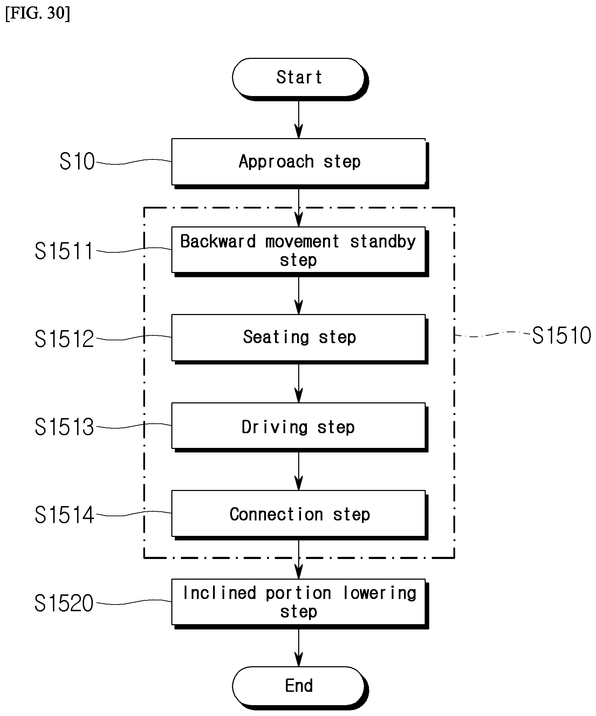

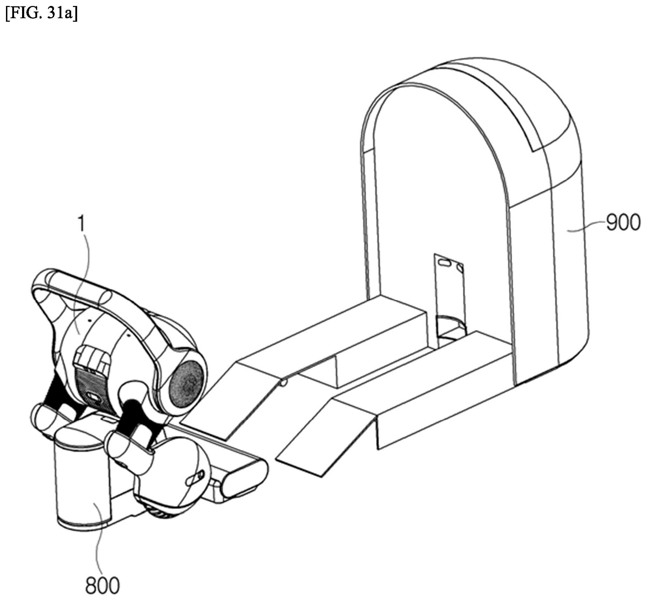

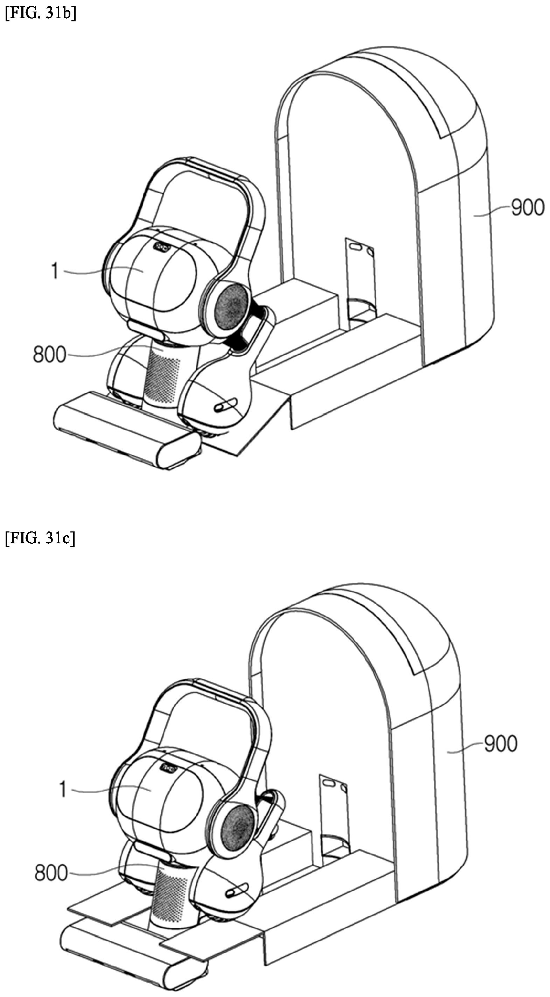

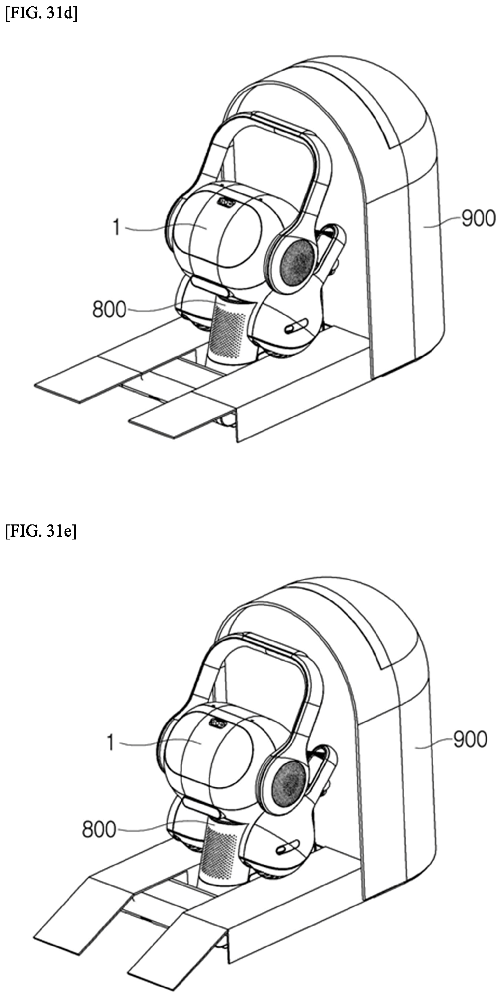

FIG. 30 is a flowchart showing a control method of a robot system according to an embodiment 1-5 of the present invention, FIG. 31A is a view showing an operation corresponding to step S10 of FIG. 30, FIG. 31B is a view showing an operation corresponding to steps S1511 and S1512 of FIG. 30, FIG. 31C is a view showing an operation corresponding to step S1513 of FIG. 30, FIG. 31D is a view showing an operation corresponding to step S1514 of FIG. 30, and FIG. 31E is a view showing an operation corresponding to step S1520 of FIG. 30.

Referring to FIGS. 30 to 31E, the control method of the robot system according to the embodiment 1-5 of the present invention will be described as follows.

The control method of the robot system according to the embodiment 1-5 of the present invention may implement a process in which a robot 1, having approached a station 900 according to the first embodiment of the present invention in a state of being coupled with a functional module 800, climbs backward to dock the functional module 800 with the station 900, and then an inclined portion 922 is rotated downward so as to contact the ground again.

The control method of the robot system according to the embodiment 1-5 of the present invention may include an approach step S10, a docking step S1510, and an inclined portion lowering step S1520.

In the docking step S1510, the robot 1 climbs the station 900 according to the first embodiment of the present invention so that the functional module 800 can be docked with the station 900, and the docking step S1510 may include a backward movement standby step S1511, a seating step S1512, a driving step S1513, and a connection step S1514.

Meanwhile, in order to avoid duplicate description, except for matters specifically described, the approach step S10 and the backward movement standby step S1511 of the control method of the robot system according to the embodiment 1-5 of the present invention may refer to the contents of the approach step S10 and the backward movement standby step S1211 of the control method of the robot system according to the embodiment 1-2 of the present invention, respectively.

The approach step S10 and the backward movement standby step S1511 of the control method of the robot system according to the embodiment 1-5 of the present invention are respectively the same as the contents of the approach step S10 and the backward movement standby step S1211 of the control method of the robot system according to the embodiment 1-2 of the present invention, except that they are performed in a state where the functional module 800 is coupled to the robot 1 rather than being docked with the station 900.

That is, in the approach step S10 and the backward movement standby step S1511 of the control method of the robot system according to the embodiment 1-5 of the present invention, the robot 1 may travel with the same movement as the robot 1 in the approach step S10 and the backward movement standby step S1211 of the control method of the robot system according to the embodiment 1-2 of the present invention, except that it travels in a state where a module coupling portion 150 and a coupling portion 830 of the functional module 800 are latch-coupled to each other.

The seating step S1512 and the driving step S1513 of the control method of the robot system according to the embodiment 1-5 of the present invention may refer to the contents of the seating step S1412 and the first driving step S1413 of the control method of the robot system according to the embodiment 1-4 of the present invention, respectively.

In the connection step S1514, the robot 1 moves backward, so that a station-corresponding terminal of the functional module 800 and a station terminal 930 of the station 900 may be electrically connected. When the station-corresponding terminal of the functional module 800 and the station terminal 930 of the station 900 contact each other and are electrically connected, a station control unit 702 can detect the coupling of the functional module 800. At this time, in this step S1514, the robot 1 may move backward to a location where a dust bin of the functional module 800 and a suction portion 940 of the station 900 communicate with each other.

In the inclined portion lowering step S1520, the inclined portion 922 of the station 900 may be rotated downward. That is, when electrical coupling between the functional module 800 and the station 900 is detected, a drive unit 923 is driven, so that the inclined portion 922 can rotate to contact the ground.

Meanwhile, simultaneously with the inclined portion lowering step S1520 or after the inclined portion lowering step S1520 is completed, the station 900 may suck dust inside the dust bin of the functional module 800. That is, in the inclined portion lowering step S1520, the dust inside the dust bin of the functional module 800 may be collected into a dust collection unit 950 of the station 900 by a suction force of a dust collection motor 960.

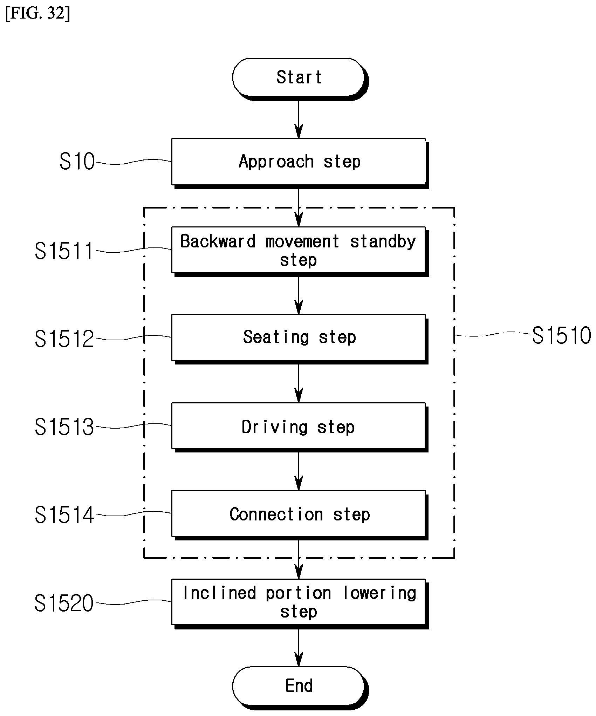

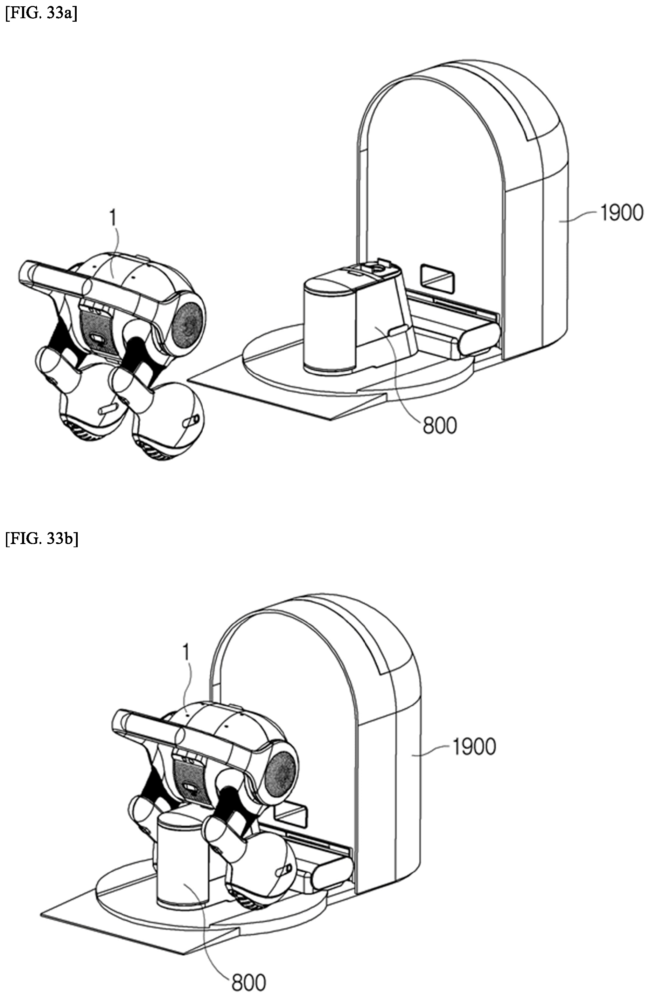

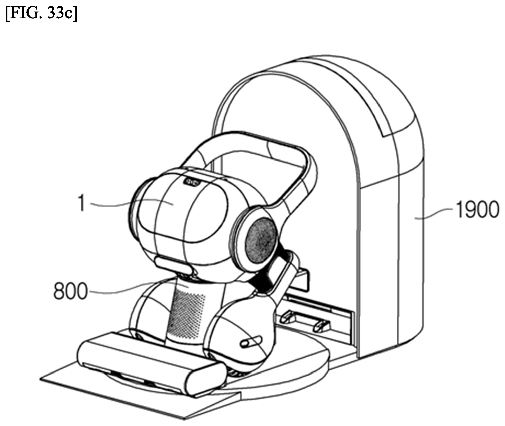

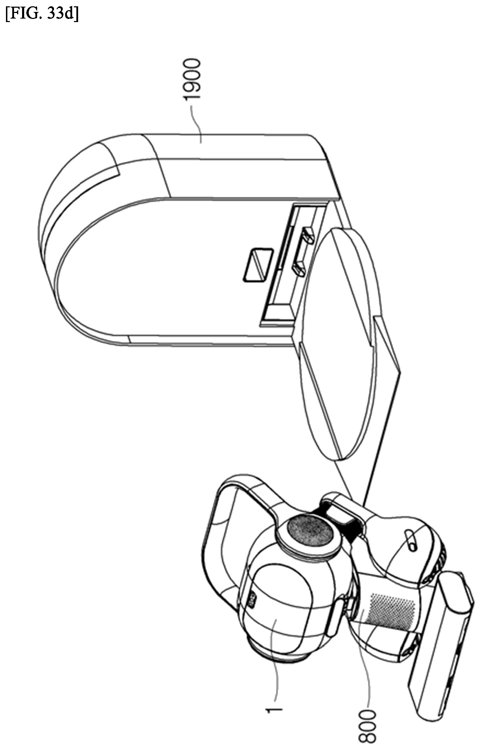

FIG. 32 is a flowchart showing a control method of a robot system according to an embodiment 2-1 of the present invention, FIG. 33A is a view showing an operation corresponding to step S10 of FIG. 32, FIG. 33B is a view showing an operation corresponding to steps S2110 and S2120 of FIG. 32, FIG. 33C is a view showing an operation corresponding to step S2130 of FIG. 32, and FIG. 33D is a view showing an operation corresponding to step S2140 of FIG. 32.

Referring to FIGS. 32 to 33D, the control method of the robot system according to the embodiment 2-1 of the present invention will be described as follows.

The control method of the robot system according to the embodiment 2-1 of the present invention may include an approach step S10 and a docking step S20.

The control method of the robot system according to the embodiment 2-1 of the present invention may implement a process in which a robot 1 is coupled with a functional module 800 in a state of being docked with a station 1900 according to the second embodiment of the present invention, and then leaves the station 1900 in a state of being coupled with the functional module 800.

The docking step S20 of the control method of the robot system according to the embodiment 2-1 of the present invention may include a forward moving step S2110, a coupling step S2120, and a rotating step S2130.

In the forward moving step S2110, the robot 1 may move to a rotating portion 1920 of the station 1900. In the forward moving step S2110, the robot 1 may move to the rotating portion 1920 by riding an inclined member 1913 of the station 1900 and be seated on a seating plate 1921.

In the coupling step S2120, the robot 1 may be coupled with the functional module 800 seated on the rotating portion 1920.

The coupling step S2120 may include a robot body lowering step S2121 and a robot body fixing step S2122. Meanwhile, in order to avoid duplicate description, the robot body lowering step S2121 and the robot body fixing step S2122 according to the embodiment 2-1 of the present invention may refer to the contents of the robot body lowering step S1221 and the robot body fixing step S1222 according to the embodiment 1-2 of the present invention, respectively.

In the rotating step S2130, the rotating portion 1920 may rotate through driving of a drive unit 1980. In the rotating step S2130, the rotating portion 1920 may rotate 180 degrees through driving of the drive unit 1980. Accordingly, a front surface of the robot 1 seated on the seating plate 1921 may face a front of the station 1900.

The control method of the robot system according to the embodiment 2-1 of the present invention may further include a departure step S2140.

In the departure step S2140, the robot 1 may move forward in a state of being coupled with the functional module 800 to leave from the station 1900. When charging of the robot 1 and/or the functional module 800 is completed, or emptying of a dust bin of the functional module 800 is completed, the robot 1 may leave the station 1900 in a state of being coupled with the functional module 800.

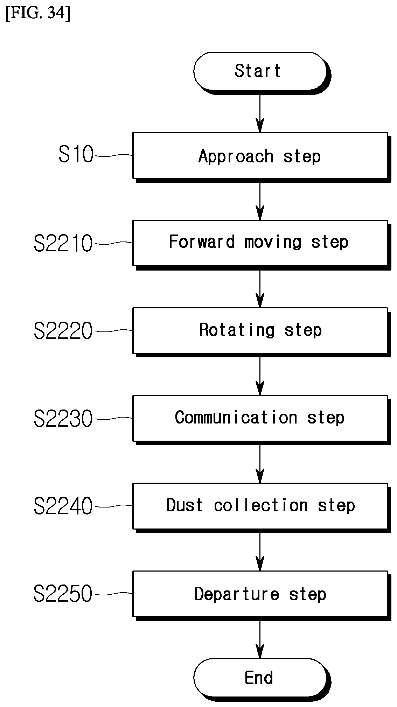

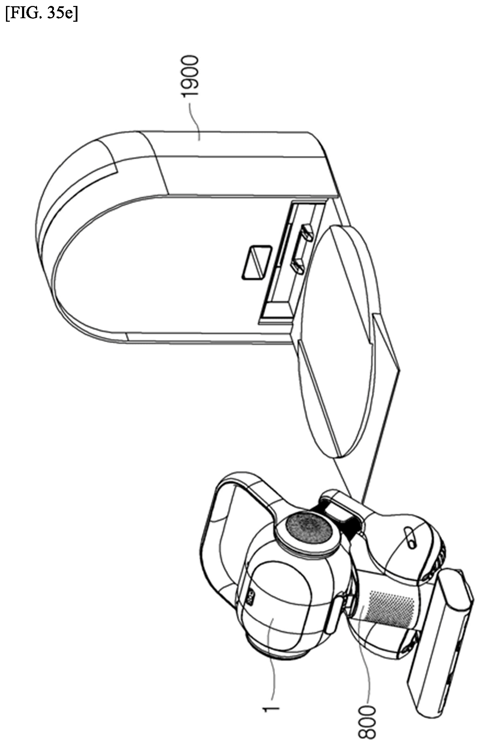

FIG. 34 is a flowchart showing a control method of a robot system according to an embodiment 2-2 of the present invention, FIG. 35A is a view showing an operation corresponding to step S10 of FIG. 34, FIG. 35B is a view showing an operation corresponding to step S2210 of FIG. 34, FIG. 35C is a view showing an operation corresponding to step S2220 of FIG. 34, FIG. 35D is a view showing an operation corresponding to steps S2230 and S2240 of FIG. 34, and FIG. 35E is a view showing an operation corresponding to step S2250 of FIG. 34.

Referring to FIGS. 34 to 35E, the control method of the robot system according to the embodiment 2-2 of the present invention will be described as follows.

The control method of the robot system according to the embodiment 2-2 of the present invention may include an approach step S10 and a docking step S20.

The control method of the robot system according to the embodiment 2-2 of the present invention may implement a process in which after a robot 1 moves to a station 1900 according to the second embodiment of the present invention in a state of being coupled with a functional module 800, the functional module 800 is docked with the station 1900 to empty dust inside a dust bin of the functional module 800.

The docking step S20 of the control method of the robot system according to the embodiment 2-2 of the present invention may include a forward moving step S2210, a rotating step S2220, a communication step S2230, and a dust collection step S2240.

In the forward moving step S2210, the robot 1 may move to a rotating portion 1920 of the station 1900 in a state of being coupled with the functional module 800. In the forward moving step S2210, the robot 1 may move to the rotating portion 1920 by riding an inclined member 1913 of the station 1900 in a state of being coupled with the functional module 800 and be seated on a seating plate 1921.

In the rotating step S2220, the rotating portion 1920 may rotate 180 degrees through driving of a drive unit 1980. Accordingly, a front surface of the robot 1 seated on the seating plate 1921 may face a front of the station 1900.

In the communication step S2230, after the robot 1 moves backward, the dust bin of the functional module 800 and a suction portion 1940 of the station 1900 may communicate with each other. An opened lower surface of the dust bin may be formed on a rear surface of the functional module 800, and the suction portion 1940 of the station 1900 may be disposed on a front portion 1911a of a housing 1911. Therefore, when the robot 1 moves backward in a state of being coupled with the functional module 800, the dust bin of the functional module 800 and the suction portion 1940 may communicate with each other.

In the dust collection step S2240, a dust collection motor 1960 of the station 1900 is driven, so that dust inside the dust bin may be sucked into a dust collection unit 1950.

The control method of the robot system according to the embodiment 2-2 of the present invention may further include a departure step S2250.

In the departure step S2250, the robot 1 may move forward in a state of being coupled with the functional module 800 to leave from the station 1900. When charging of the robot 1 and/or the functional module 800 is completed, or emptying of the dust bin of the functional module 800 is completed, the robot 1 may leave the station 1900 in a state of being coupled with the functional module 800.

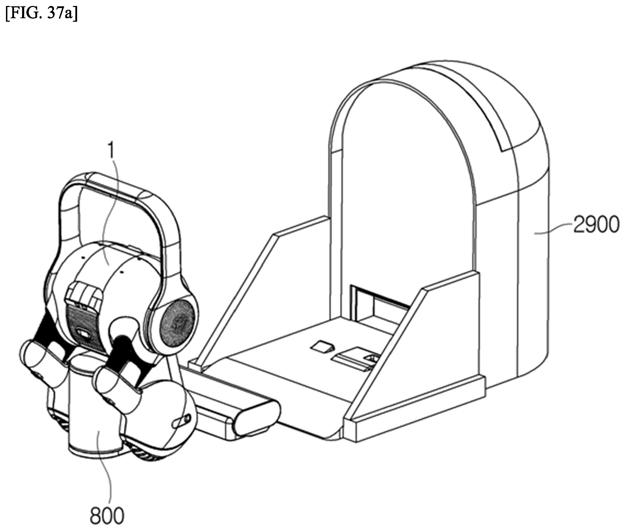

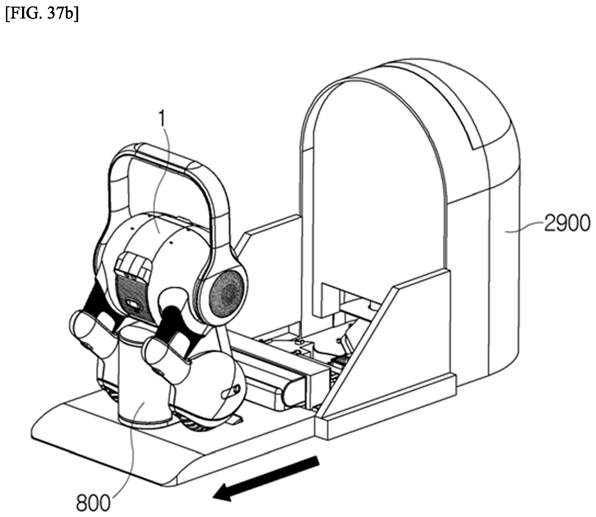

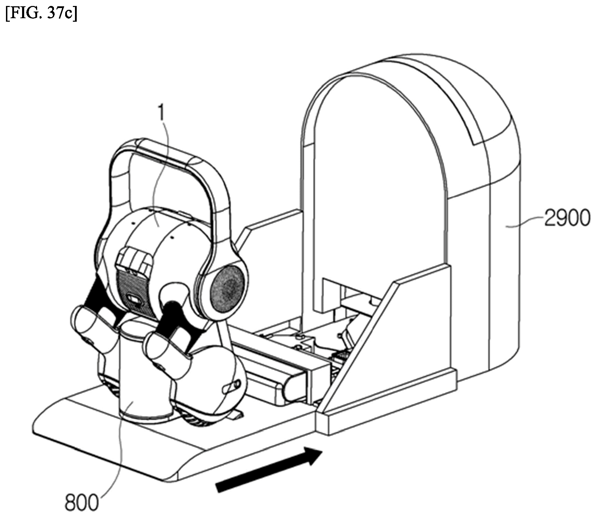

FIG. 36 is a flowchart showing a control method of a robot system according to an embodiment 3-1 of the present invention, FIG. 37A is a view showing an operation corresponding to step S10 of FIG. 36, FIG. 37B is a view showing an operation corresponding to step S3110 of FIG. 36, and FIG. 37C is a view showing an operation corresponding to step S3130 of FIG. 36.

Referring to FIGS. 36 to 37C, the control method of the robot system according to the embodiment 3-1 of the present invention will be described as follows.

The control method of the robot system according to the embodiment 3-1 of the present invention may include an approach step S10 and a docking step S20.

The control method of the robot system according to the embodiment 3-1 of the present invention may implement a process in which after a robot 1 is seated on a sliding portion 2920 moving forward in a state of being coupled with a functional module 800, the sliding portion 2920 moves backward so that the functional module 800 and a station 2900 according to the third embodiment of the present invention can be fluidly connected.

The docking step S20 of the control method of the robot system according to the embodiment 3-1 of the present invention may include a seating step S3110, a communication step S3120, and a dust collection step S3130.

In the seating step S3110, after the sliding portion 2920 of the station 2900 is slidably moved in a direction moving away from a station body 2910 through driving of a drive unit 2980, the robot 1 may be seated on the sliding portion 2920.

In this step S3110, the sliding portion 2920 may be slidably moved in a direction moving away from a housing 2911. When the sliding portion 2920 is slidably moved forward, the robot 1 may ride an inclined member 2922 in a state of being coupled with the functional module 800 and be seated on a seating member 2921. At this time, the inclined member 2922 is arranged to be inclined downward in a direction moving away from the housing 2911, that is, forward. Therefore, when the sliding portion 2920 is slidably moved toward the front, a wheel 310 of the robot 1 can naturally move upward to the seating member 2921 along the inclined member 2922.

In the communication step S3120, after the sliding portion 2920 is slidably moved in a direction approaching the station body 2910 through driving of the drive unit 2980, the dust bin of the functional module 800 may communicate with a suction portion 2940 of the station 2900.

In the dust collection step S3130, a dust collection motor 2960 of the station 2900 is driven, so that dust inside the dust bin may be sucked into a dust collection unit 2950.

FIG. 38 is a flowchart showing a control method of a robot system according to an embodiment 3-2 of the present invention, FIG. 39A is a view showing an operation corresponding to step S10 of FIG. 38, FIG. 39B is a view showing an operation corresponding to step S3210 of FIG. 38, FIG. 39C is a view showing an operation corresponding to step S3220 of FIG. 38, FIG. 39D is a view showing an operation corresponding to step S3230 of FIG. 38, FIG. 39E is a view showing an operation corresponding to step S3240 of FIG. 38, and FIG. 39F is a view showing an operation corresponding to steps S3250 and S3260 of FIG. 38.

Referring to FIGS. 38 to 39F, the control method of the robot system according to the embodiment 3-2 of the present invention will be described as follows.

The control method of the robot system according to the embodiment 3-2 of the present invention may include an approach step S10 and a docking step S20.

The control method of the robot system according to the embodiment 3-2 of the present invention may implement a process in which after a robot 1 is seated on a sliding portion 2920 moving forward in a state of being coupled with a functional module 800, the robot 1 and the functional module 800 are separated from each other, and when the sliding portion 2920 moves backward, only the functional module 800 is returned and moved to a station 2900 according to the third embodiment of the present invention.

The docking step S20 of the control method of the robot system according to the embodiment 3-2 of the present invention may include a seating step S3210, a separation step S3220, a functional module returning step S3230, a robot rotating step S3240, a sliding portion forward moving step S3250, and a coupling step S3260.

In the seating step S3210, after the sliding portion 2920 of the station 2900 is slidably moved in a direction moving away from a station body 2910 through driving of a drive unit 2980, the robot 1 may be seated on the sliding portion 2920 in a state of being coupled with the functional module 800. Meanwhile, in order to avoid duplicate description, the seating step S3210 according to the embodiment 3-2 of the present invention may refer to the contents of the seating step S3110 according to the embodiment 3-1 of the present invention.

In the separation step S3220, the robot 1 may be separated from the functional module 800.

The separation step S3220 may include an uncoupling step S3221 and a robot body lifting step S3222. Meanwhile, in order to avoid duplicate description, the uncoupling step S3221 and the robot body lifting step S3222 according to the embodiment 3-2 of the present invention may refer to the contents of the uncoupling step S1111 and the robot body lifting step S1112 according to the embodiment 1-1 of the present invention, respectively.

In the functional module returning step S3230, the sliding portion 2920 on which the functional module 800 is seated may be slidably moved in a direction approaching the station body 2910 through driving of the drive unit 2980.

In this step S3230, the sliding portion 2920 may be slidably moved in a direction approaching a housing 2911. When the sliding portion 2920 is slidably moved backward, the functional module 800 is returned and moved toward the housing 2911 in a state of being seated on the sliding portion 2920, and the robot 1 may be moved downward to the ground along an inclined member 2922. The inclined member 2922 is arranged to be inclined downward in a direction moving away from the housing 2911, that is, forward. Therefore, when the sliding portion 2920 is slidably moved toward the rear, a wheel 310 of the robot 1 can naturally move downward to the ground along the inclined member 2922.

As shown in FIG. 39E, in the robot rotating step S3240, the robot 1 disposed at an entrance of the station 2900 such that a rear surface of the robot 1 faces the station 2900 may rotate 180 degrees. Meanwhile, in order to avoid duplicate description, the robot 1 in the robot rotating step S3240 according to the embodiment 3-2 of the present invention may travel with the same movement as the robot 1 in the backward movement standby step S1211 according to the embodiment 1-2 of the present invention.

In the sliding portion forward moving step S3250, after the sliding portion 2920 of the station 2900 is slidably moved in a direction moving away from the station body 2910 through driving of the drive unit 2980, the robot 1 may be seated on the sliding portion 2920.

In the coupling step S3260, the robot 1 may be coupled with the functional module 800 seated on the sliding portion 2920.

The coupling step S3260 may include a robot body lowering step S3261 and a robot body fixing step S3262. Meanwhile, in order to avoid duplicate description, the robot body lowering step S3261 and the robot body fixing step S3262 according to the embodiment 3-2 of the present invention may refer to the contents of the robot body lowering step S1221 and the robot body fixing step S1222 according to the embodiment 1-2 of the present invention, respectively.

FIG. 40 is a flowchart showing a control method of a robot system according to a fourth embodiment of the present invention, FIG. 41A is a view showing an operation corresponding to step S10 of FIG. 40, FIG. 41B is a view showing an operation corresponding to step S4110 of FIG. 40, FIG. 41C is a view showing an operation corresponding to steps S4120 and S4131 of FIG. 40, FIG. 41D is a view showing an operation corresponding to steps S4132 and S4140 of FIG. 40, FIG. 41E is a view showing an operation corresponding to step S4151 of FIG. 40, FIG. 41F is a view showing an operation corresponding to steps S4152, S4160, and S4170 of FIG. 40, and FIG. 41G is a view showing an operation corresponding to step S4180 of FIG. 40.

Referring to FIGS. 40 to 41G, the control method of the robot system according to the fourth embodiment of the present invention will be described as follows.

The control method of the robot system according to the fourth embodiment of the present invention may include an approach step S10 and a docking step S20.

The control method of the robot system according to the fourth embodiment of the present invention may implement a process in which the robot 1 disposed outside is returned and moved to a station 3900 according to the fourth embodiment of the present invention through a transfer portion 3920 without rotating a wheel 310 of the robot 1.

The docking step S20 of the control method of the robot system according to the fourth embodiment of the present invention may include a robot rotating step S4110, a forward moving step S4120, a mounting step S4130, a backward moving step S4140, an unmounting step S4150, a transfer portion returning step S4160, and a coupling step S4170.

As shown in FIG. 41B, in the robot rotating step S4110, the robot 1 disposed at an entrance of the station 3900 such that a rear surface of the robot 1 faces the station 3900 may rotate 180 degrees. Meanwhile, in order to avoid duplicate description, the robot 1 in the robot rotating step S4110 according to the fourth embodiment of the present invention may travel with the same movement as the robot 1 in a backward movement standby step S1211 according to the embodiment 1-2 of the present invention.

In the forward moving step S4120, the transfer portion 3920 of a station 1900 may be slidably moved in a direction moving away from a station body 1910 through driving of a drive unit 1980.

Since both ends of an arm 400 of the robot 1 are respectively connected to both side surfaces of a robot body 100, it may be formed in a ring shape. Therefore, the transfer portion 3920 may be slidably moved to a location passing through an opened center of the arm 400 through driving of a drive unit 3980.

In the mounting step S4130, a suspension motor MS is driven so that the arm 400 of the robot 1 is mounted on the transfer portion 3920, thereby moving the robot body 100 downward. At this time, the arm 400 may be seated on a seating member 3921b of the transfer portion 3920.

In the backward moving step S4140, after the wheel 310 is moved upward by driving the suspension motor MS so that the wheel 310 of the robot 1 is spaced apart from the ground, the transfer portion 3920 may be slidably moved in a direction approaching a station body 3910 through driving of the drive unit 3980. At this time, a moving direction of the transfer portion 3920 in this step S4140 may be opposite to the moving direction of the transfer portion 3920 in the forward moving step S4120. In addition, in this step S4140, the transfer portion 3920 may be moved to a location where a robot terminal 170 of the robot 1 and a robot-corresponding terminal 840 of the station 3900 contact each other when the robot body 100 descends.

In the unmounting step S4150, after the wheel 310 of the robot 1 is moved downward by driving the suspension motor MS so that the wheel 310 of the robot 1 contacts the ground, the robot body 100 is moved upward, so that the mounting between the arm 400 of the robot 1 and the transfer portion 3920 can be released.

In the transfer portion returning step S4160, the transfer portion 3920 may be slidably moved in a direction approaching the station body 3910 through driving of the drive unit 3980. When the robot body 100 descends due to this step S4160, the arm 400 can be seated on a functional module 800 without being caught by the transfer portion 3920.

In the coupling step S4170, the robot 1 may be coupled with the functional module 800. At this time, the functional module 800 may be in a state of being electrically and/or fluidly coupled to the station 1900.

The coupling step S4170 may include a robot body lowering step S4171 and a robot body fixing step S4172. Meanwhile, in order to avoid duplicate description, the robot body lowering step S4171 and the robot body fixing step S4172 according to the fourth embodiment of the present invention may refer to the contents of the robot body lowering step S1221 and the robot body fixing step S1222 according to the embodiment 1-2 of the present invention, respectively.

The control method of the robot system according to the fourth embodiment of the present invention may further include a departure step S4180.

In the departure step S4180, the robot 1 may move forward in a state of being coupled with the functional module 800 to leave from the station 3900. When charging of the robot 1 and/or the functional module 800 is completed, or emptying of a dust bin of the functional module 800 is completed, the robot 1 may leave the station 3900 in a state of being coupled with the functional module 800.

Although the present invention has been described in detail above through specific embodiments, this is for describing the present invention in detail, the present invention is not limited thereto, and it is apparent that modifications and improvements thereof can be made by a person having ordinary skill in the art within the technical scope and concept of the present invention.

All simple modifications to changes of the present invention fall within the scope of the present invention, and the specific protection scope of the present invention will become clear by the appended claims.

## Claims

1. A robot system comprising:
a robot;
a functional module detachably coupled to the robot, and electrically connected to the robot when coupled to the robot; and
a station with which the functional module is docked,
wherein the station comprises:
a station body; and
a station terminal disposed on the station body and electrically connected to a station-corresponding terminal of the functional module.

2. The robot system of claim 1, wherein the robot is provided with a battery, and
when the functional module is electrically connected to the station in a state of being coupled with the robot, the battery receives power from the station through the functional module.

3. The robot system of claim 1, wherein the robot is provided with a battery, and
when the robot is coupled to the functional module in a state where the functional module and the station are electrically connected, the battery receives power from the station through the functional module.

4. The robot system of claim 1, wherein the station comprises:
a suction portion disposed on the station body and sucking dust from a dust bin of the functional module;
a dust collection unit collecting the dust sucked through the suction portion; and
a dust collection motor providing a suction force to the suction portion.

5. The robot system of claim 1, wherein the station comprises:
a seating portion connected to the station body, on which the robot is seated; and
an inclined portion rotatably coupled to the seating portion so that an inclination angle with respect to the seating portion is adjusted.

6. The robot system of claim 5, wherein a pair of the seating portions are arranged to be spaced apart on the station body, and
in a state where the functional module is docked with the station, at least a portion of the functional module is disposed between the pair of seating portions.

7. The robot system of claim 1, wherein the station further comprises:
a rotating portion on which at least any one of the robot and the functional module is seated, and relatively rotatably coupled to the station body.

8. The robot system of claim 7, wherein the station body comprises:
an inclined member disposed to be inclined with respect to the rotating portion.

9. The robot system of claim 1, wherein the station further comprises:
a sliding portion on which at least any one of the robot and the functional module is seated, and slidably coupled to the station body.

10. The robot system of claim 9, wherein the station body comprises:
a sidewall, at least a portion of which is disposed on both sides of the sliding portion; and
a guide rail disposed on the sidewall and guiding sliding movement of the sliding portion.

11. The robot system of claim 9, wherein the sliding portion comprises:
a seating member on which at least any one of the robot and the functional module is seated; and
an inclined member disposed to be inclined with respect to the seating member.

12. The robot system of claim 1, wherein the robot comprises:
a robot body detachably coupled with the functional module; and
an arm having both ends respectively connected to both side surfaces of the robot body, and
the station further comprises:
a transfer portion moving the arm in a direction moving away from the station body or a direction approaching the station body.

13. The robot system of claim 12, wherein the transfer portion comprises:
a support member slidably coupled to the station body and supporting at least a portion of the arm; and
a protruding member protruding from the support member and preventing departure of the arm.

14. The robot system of claim 1, wherein the robot comprises:
a robot body provided with a motor and a battery; and
a module coupling portion disposed on a lower portion of the robot body and latch-coupled with a coupling portion of the functional module.

15. The robot system of claim 14, wherein the module coupling portion comprises:
a drive motor disposed inside the robot body and generating rotational power;
a coupling hook linearly moving and latch-coupled to a coupling hole of the coupling portion;
a rotating gear transferring the rotational power generated by the drive motor to the coupling hook; and
a guide member guiding the linear movement of the coupling hook.

16. A robot system comprising:
a robot;
a functional module detachably coupled to the robot; and
a station with which the functional module is docked,
wherein the station comprises:
a seating module on which the robot is seated in a process in which the robot is docked with the station or leaves from the station; and
a drive unit selectively driving the seating module depending on whether the robot is seated on the seating module.

17. A control method of a robot system for controlling the robot system of claim 4, the control method comprising:
an approach step in which the robot moves toward the station when a signal is received from the station; and
a docking step in which the robot is docked with the station after a drive unit of the station is driven.

18. The control method of the robot system of claim 17, wherein the robot comprises:
a robot body provided with a motor and a battery;
leg portions respectively disposed on left and right surfaces of the robot body;
a wheel rotatably coupled to the leg portion; and
a suspension motor accommodated in the robot body and respectively connected to the left and right leg portions to provide driving force to the leg portions, and
the docking step comprises:
a backward movement standby step in which the robot is disposed at an entrance of an inclined portion of the station so as to be able to climb the inclined portion while moving backward;
a seating step in which the robot moves backward and is seated on the inclined portion;
a first driving step in which the suspension motor is driven so that a distance between the wheel and the robot body decreases while the inclined portion is rotated upward through driving of the drive unit; and
a communication step in which a dust bin of the functional module and the suction portion of the station communicate with each other after the robot moves backward.

19. The control method of the robot system of claim 18, further comprising:
a dust collection step in which dust inside the dust bin is sucked through driving of the dust collection motor;
a moving step in which the robot moves to the inclined portion in a state of being coupled with the functional module; and
a second driving step in which the suspension motor is driven so that the distance between the wheel and the robot body increases while the inclined portion is rotated downward through driving of the drive unit.

20. The control method of the robot system of claim 17, wherein the docking step comprises:
a forward moving step in which the robot moves to a rotating portion of the station;
a coupling step in which the robot is coupled with the functional module seated on the rotating portion;
a rotating step in which the rotating portion rotates through driving of the drive unit; and
a departure step in which the robot moves forward in a state of being coupled with the functional module to leave from the station.

21. The control method of the robot system of claim 17, wherein the docking step comprises:
a forward moving step in which the robot moves to a rotating portion of the station in a state of being coupled with the functional module;
a rotating step in which the rotating portion rotates through driving of the drive unit;
a communication step in which a dust bin of the functional module and the suction portion of the station communicate with each other after the robot moves backward; and
a dust collection step in which the dust collection motor is driven to suck dust inside the dust bin.

22. The control method of the robot system of claim 17, wherein the docking step comprises:
a seating step in which after a sliding portion of the station is slidably moved in a direction moving away from the station body through driving of the drive unit, the robot is seated on the sliding portion in a state of being coupled with the functional module;
a communication step in which after the sliding portion is slidably moved in a direction approaching the station body through driving of the drive unit, a dust bin of the functional module communicates with the suction portion of the station; and
a dust collection step in which dust inside the dust bin is sucked through driving of the dust collection motor.

23. The control method of the robot system of claim 17, wherein the docking step comprises:
a seating step in which after a sliding portion of the station is slidably moved in a direction moving away from the station body through driving of the drive unit, the robot is seated on the sliding portion in a state of being coupled with a functional module;
a separation step in which the robot is separated from the functional module; and
a functional module returning step in which the sliding portion on which the functional module is seated is slidably moved in a direction approaching the station body through driving of the drive unit.

24. The control method of the robot system of claim 17, wherein the docking step comprises:
a forward moving step in which a transfer portion of the station is slidably moved in a direction moving away from the station body through driving of the drive unit; and
a mounting step in which a robot body of the robot is moved downward to mount an arm of the robot on the transfer portion;
a backward moving step in which after a wheel of the robot is moved upward, the transfer portion of the station is slidably moved in a direction approaching the station body through driving of the drive unit;
an unmounting step in which after the wheel is moved downward, the robot body is moved upward to release the mounting between the arm of the robot and the transfer portion; and
a coupling step in which the robot is coupled with the functional module.
